(19) **Europäisches Patentamt / European Patent Office / Office européen des brevets**

(11) **EP 4 772 273 A1**

(12) **EUROPEAN PATENT APPLICATION**
published in accordance with Art. 153(4) EPC

(43) Date of publication:
08.07.2026 Bulletin 2026/28

(21) Application number: 24920015.5

(22) Date of filing: 31.12.2024

(51) International Patent Classification (IPC):
$B01J\ 21/06$ [(2006.01)]   $B01J\ 27/24$ [(2006.01)]
$B01J\ 23/60$ [(2006.01)]

(52) Cooperative Patent Classification (CPC):
B01D 53/44; B01D 53/86; B01J 21/06; B01J 23/06;
B01J 23/14; B01J 23/22; B01J 23/30; B01J 23/60;
B01J 27/132; B01J 27/135; B01J 27/138;
B01J 27/24; B01J 35/39; B01J 35/45; B01J 37/34

(86) International application number:
PCT/CN2024/144119

(87) International publication number:
WO 2025/156937 (31.07.2025 Gazette 2025/31)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.01.2024 CN 202410108708

(71) Applicants:
• China Petroleum & Chemical Corporation
Beijing 100728 (CN)
• Sinopec Dalian Research Institute of
Petroleum and Petrochemicals Co., Ltd.
Lushunkou District
Dalian, Liaoning 116045 (CN)

(72) Inventors:
• LI, Jiantao
Dalian, Liaoning 116045 (CN)
• LI, Baozhong
Dalian, Liaoning 116045 (CN)
• ZHANG, Yingguang
Kowloon Hong Kong (HK)
• LEUNG, Dennis Y.C.
Hong Kong (HK)
• LEUNG, Michael K.H.
Kowloon Hong Kong (HK)

(74) Representative: karo IP
Patentanwälte PartG mbB
Steinstraße 16-18
40212 Düsseldorf (DE)

(54) **PHOTOCATALYTIC MATERIAL, AND PREPARATION METHOD THEREFOR AND USE THEREOF**

(57) Disclosed are a photocatalytic material, its preparation and application thereof. The method for preparing the photocatalytic material comprises the following steps: 1) providing a photocatalytic material precursor covered by a liquid film, and 2) irradiating the photocatalytic material precursor with a ray having a wavelength of 200 nm or below to obtain the photocatalytic material. According to the present application, the photocatalytic material has the advantages of simple preparation, remarkably improved photoresponse value for lights having a long wavelength, and the like.

FIG.1

EP 4 772 273 A1

## Description

## Technical Field

The present application relates to the technical field of photocatalysis, particularly to a photocatalytic material, its preparation and application thereof.

## Background Art

Among all semiconductor metal oxide catalysts, $TiO_2$ has high catalytic activity, and has the advantages of low cost, no toxicity and high stability, and is the photocatalyst with the best application prospect. $TiO_2$ is n-type semiconductor, and has three crystal forms of anatase, rutile and brookite. Among the three, the crystal form with the highest thermodynamic stability is rutile, and the titanium dioxide in the forms of anatase and brookite can be converted into rutile after being calcined at an elevated temperature of 600-800 °C. The band gaps of the rutile, anatase and brookite forms of titanium dioxide are respectively 3.02eV, 3.20eV and 3.14eV, and titanium dioxide of anatase form has the highest photocatalytic activity.

However, the large band gap (3.0-3.2 eV) makes titanium dioxide respond to ultraviolet light only, of which the energy is 5% of sunlight, and thus its practical application is greatly limited. In addition, the high photogenerated electron-hole recombination rate of $TiO_2$ also limits its application in photocatalysis. Therefore, the development of $TiO_2$ catalyst having high photocatalytic activity under visible light is urgently required.

Among the methods, the halogen doping can effectively improve the photocatalytic performance of $TiO_2$, and has the advantages of low cost and simple preparation. Halogen doping can improve the visible light absorption capability of $TiO_2$ and promote the separation of photogenerated charges. The halogen doping of $TiO_2$ includes F-doping, Cl-doping, Br-doping, and I-doping. Among them, F-doped and I-doped $TiO_2$ have high photocatalytic performance under visible light and are easy to prepare, and are popular research targets. In comparison, there are less methods for preparing Cl-doped and Br-doped $TiO_2$, their photocatalytic activity under visible light is low, and the Cl-doped and Br-doped $TiO_2$ catalysts with high photocatalytic activity under visible light are difficult to prepare using a simple method.

The F-doping of $TiO_2$ enhances its surface acidity and absorption of visible light, although it does not significantly change its bad gap. In the F-doped $TiO_2$, $F^-$ may be substituted for O atoms. The formation of $Ti^{3+}$ is promoted by charge compensation between $F^-$ and $Ti^{4+}$. The presence of $Ti^{3+}$ can inhibit the recombination of photogenerated electron-holes in $TiO_2$. In addition, the F-doping can also increase the annealing temperature for the transformation of anatase phase $TiO_2$ to rutile phase. I-doping has a different mechanism of action than F-doping. $I^{5+}$ and $Ti^{4+}$ have almost the same radius, and

$Ti^{4+}$ can be easily replaced with $I^{5+}$ in terms of atomic radius matching. The I-doping can change the bad gap of the titanium dioxide and also can inhibit the recombination of photogenerated electron-holes. By first-principle calculation, it is supposed that in the I-doped $TiO_2$, the light absorption range extends from ultraviolet to visible region, which is caused by the hybridization of $I^{5p}$ and $I^{5s}$ orbitals with $O^{2P}$ and $Ti^{3d}$ orbitals in titanium dioxide.

In "Preparation of nitrogen-halogen codoped nanometer $TiO_2$ and research on photocatalysis performance thereof", Zhengyafang etc., it is provided a method for preparing halogen and nitrogen codoped $TiO_2$, which adopts a sol-gel method for preparation. Firstly, 17mL of butyl titanate and 59.5mL of absolute ethyl alcohol were measured using a measuring cylinder to obtain a mixed solution A, and after the mixed solution A was stirred for 10min at a medium speed on a magnetic stirrer, the solution A was poured into a separating funnel for further use. 59.5mL of absolute ethyl alcohol, 6.8mL of deionized water and 6.8mL of glacial acetic acid were measured using a measuring cylinder, and were sequentially poured into a three-necked bottle to obtain a mixed solution B, and a certain amount of doping reagents, namely ammonium fluoride, ammonium chloride, ammonium bromide and ammonium iodide, were added into the solution B. The solution B was mechanically stirred in a constant-temperature water bath kettle setting at a water temperature of 25 °C until the solution B was uniformly mixed, and then the pH value of the solution B was adjusted to less than or equal to 3 by using concentrated nitric acid. Still under the condition of mechanical stirring in the water bath at 25 °C, the solution A in the separating funnel was dripped into the solution B at the speed of 1 drop/second, and stirring was continued for 1 hour after the dripping was finished. The sol was filled into a conical flask, the mouth of the conical flask was sealed using a preservative film, the flask was placed at room temperature until the sol was gelled, the gelled product was dried in an electrothermal blowing drying oven at 80 °C for 20 hours, the resulted sample was ground into powder, and then calcined in a box-type resistance furnace at a certain temperature for 2 hours to obtain the co-doped titanium dioxide photocatalyst powder. The ultraviolet-visible diffuse reflection spectrum analysis result shows that the nitrogen-fluorine doped photocatalyst has the strongest response to visible light; the performance test shows that the performance is best when the doping amount is 0.15, the dark adsorption removal rate of methylene blue by the nitrogen-fluorine doped photocatalyst is 48.3%, the total removal rate is 79.4%; in contrast, the photocatalytic activity under visible light of other doped photocatalysts is poor, by which the total removal rate of methylene blue is always less than 20%, and the activity under visible light of the nitrogen-chlorine, nitrogen-bromine and nitrogen-iodine doped photocatalyst varies little with the doping amount.

CN1259129C discloses a bromine-doped photocatalytic polycrystalline material with photocatalytic activity under visible light, which belongs to inorganic nano photocatalytic materials. The material consists of the following 3 elements: titanium, oxygen and bromine at the following percentage by weight: 54.55% to 59.90% of titanium; 35.45% to 40.00% of oxygen; and 0.10% to 10.00% of bromine, wherein bromine exists in the photocatalytic polycrystalline material in both non-bonding and bonding modes. Particularly, when the bromine exists in the bonding mode, said bromine and titanium elements exist in crystal lattices of the photocatalytic crystalline material in the form of Ti-Br chemical bond; and when the bromine exists in the non-bonding mode, said bromine is included in the crystal interstitials of the photocatalytic crystalline material. The original band gap of the material is reduced to the extent of being capable of utilizing visible light (400-800nm) by bromine doping, and since the material disclosed has the band gap which can be excited by visible light irradiation, it achieves a full-frequency absorption of visible light, and shows a relatively high catalytic activity under visible light.

**Summary of the Invention**

The photocatalysis technology has potential application in the fields of pollutant (VOCs and wastewater) degradation, hydrogen production by photolysis of water, preparation of chemicals by reduction of carbon dioxide, preparation of synthesis gas by reforming, nitrogen fixation, alkane conversion and the like. In the field of VOCs treatment, the applicability of treatment to the large-air-volume and low-concentration VOCs pollutant degradation is still difficult at present.

In practical application, light sources commonly adopted by photocatalytic degradation of VOCs include mercury lamps, UV-LEDs, sunlight and the like. For common mercury lamps, 254 nm ultraviolet light accounts for 70% of total energy, and long-wave band light, including long-wave band ultraviolet light and visible light, accounts for 30%. The sunlight contains about 43% infrared light besides ultraviolet light and visible light. Therefore, visible-light/infrared-light-responsive photocatalysts that are compatible with various light sources are highly practical.

The inventors of the present application have found that after the photocatalyst precursor and the salt containing the doping element are mixed in the solution, under the irradiation of vacuum ultraviolet light, the doping element could be doped into the crystal lattice of the photocatalyst precursor, so that the defects and doping (oxygen vacancy, hydroxyl, $Ti^{3+}$, metal/nonmetal doping, etc.) beneficial to expanding the light absorption range could be formed. The resultant is compatible with various light sources (low/medium pressure mercury lamp UV light sources, UV-LED light sources, sunlight and the like) and has excellent industrial application prospect.

For oxygen-containing photocatalysts, the formation of oxygen vacancies may generate one or two localized electrons at the position, and the localized electrons may directly influence the electronic structure to generate an intermediate state energy level below the conduction band, for example, for $TiO_2$, the energy level is at 0.75-1.18eV below the conduction band, so that only a small amount of photon energy is needed to excite the electron in the valence band from the top of the valence band to the intermediate state, and the electron in the intermediate state can continuously transit into the conduction band under the excitation of a small amount of energy, and the lower energy required by two transitions can be satisfied by visible light or infrared light. Therefore, the expanding and enhancement of the absorption of the visible light and infrared light by the photocatalyst can be achieved. Similarly, -OH and $Ti^{3+}$ can form similar intermediate energy levels, thereby expanding the visible/infrared light absorption range.

When the doping element is a non-metallic element, such as B, C, N, S and F, its 2p orbital is close to the energy of O in the original photocatalyst, and after the 2p orbitals of the two are hybridized, the valence band is shifted upwards, and the band gap is reduced, so that the light absorption range can be expanded. The doping of the non-metallic elements can also avoid the problem of photogenerated electron and hole recombination.

The noble metal (Au, Pt, Ag, Pd, etc.) has the plasma resonance absorption characteristic, and after being doped into the nano photocatalytic material, the absorption of the photocatalyst on visible light can be expanded. The noble metal material can also form a Schottky barrier at an interface with a photocatalyst, such as $TiO_2$, which can effectively promote the separation of photogenerated electrons and photogenerated holes, thereby improving the photocatalytic efficiency.

When a metal element (Se, Mn, Fe, Co, Ni, Cu, Zn, etc.) is doped, a donor level can be generated above the valence band of the photocatalyst, or an acceptor level can be generated below the valence band, and when it is irradiated with light, electrons are transited from the donor level to the conduction band or from the valence band to the acceptor level generated by doping, in addition to the excitation of electrons from the valence band to the conduction band, so that the semiconductor can absorb visible light. For example, $TiO_2$, when doped with a transition metal containing a 3d electron orbit, will generate an occupied state of t2g orbit in the middle of the band gap, and electrons can transit between the t2g energy level and the valence band (conduction band). In addition, metal doping can form a trapping center, metal ions with valence higher than $Ti^{4+}$ trap electrons, and metal ions with valence lower than $Ti^{4+}$ trap holes, so that electron-hole recombination is inhibited.

Current research indicates that when two or more elements are co-doped, a synergistic effect may be produced, resulting in a photocatalyst performance significantly higher than that of a single doping.

Specifically, regarding the various defects and dopings described above, the present application provides solutions of the following aspects.

1. A photocatalytic material comprising titanium dioxide, which has a ratio of surface $Ti^{3+}$ content to surface $Ti^{4+}$ content measured by XPS method of 1 : 19 to 19 : 1 (preferably 1 : 4 to 4 : 1) and has an absorbance in the range of 0.20 to 2.0 (preferably 0.30 to 1.8) for light having a wavelength of 760 nm, an absorbance in the range of 0.25 to 1.8 (preferably 0.35 to 1.6) for light having a wavelength of 800 nm and an absorbance in the range of 0.25 to 1.7 (preferably 0.35 to 1.5) for light having a wavelength of 850 nm, in the ultraviolet-visible diffuse reflection spectrum.

2. The photocatalytic material according to any of the preceding or subsequent aspects, which has a particle size distribution range of 5 to 150 nm (preferably 10 to 110 nm) or an average particle size of 20 to 85 nm (preferably 30 to 70 nm) as measured by the SEM method.

3. The photocatalytic material according to any of the preceding or subsequent aspects, which has a surface $Ti^{3+}$ content of 5% to 95% (preferably 20% to 80%) as measured by XPS, a surface $Ti^{4+}$ content of 5% to 95% (preferably 20% to 80%) as measured by XPS, and/or which has an oxygen vacancy Ov peak content of 10% to 80% (preferably 15% to 60%) after fitting of the O 1s peak as measured by XPS, and/or which has a mass loss percentage of 0.2 wt% to 7 wt% (preferably 0.5 wt% to 5 wt%) as measured by thermogravimetric analysis at 300 °C, and/or which has a surface hydroxyl content of 0.03 to 3 mmol/g (preferably 0.05 to 1.5 mmol/g) as measured by infrared spectroscopy, and/or, the loss rate of the surface $Ti^{3+}$ content after 10 times of cyclic washing with deionized water at 100 °C is lower than 2% (preferably lower than 1%).

4. The photocatalytic material according to any of the preceding or subsequent aspects, which further comprises at least one doping element selected from the group consisting of elements of Group IIIA of the periodic table of elements (preferably at least one of B and Ga), elements of Group IVA of the periodic table of elements (preferably at least one of C and Ge), elements of Group VA of the periodic table of elements (preferably at least one of N and P), non-oxygen elements of Group VIA of the periodic table of elements (preferably at least one of S and Se), elements of Group VIIA of the periodic table of elements (preferably F), non-noble transition metal elements other than Ti of the periodic table of elements (preferably at least one selected from the group consisting of Mn, Fe, Co, Ni, Cu, Zn), noble metal elements of the periodic table of elements (preferably at least one selected from Ag, Au, Pd and Pt), and rare earth metal elements of the periodic table of elements (preferably at least one selected from the group consisting of Ce, La, Nd, Gd), preferably at least one doping element selected from N, Mn and F, particularly preferably comprising N, Mn and F as doping elements, and/or which has a content of doping element(s) (calculated on an elemental basis), individually or in total, in the range of 0.01 wt% to 15 wt% (preferably 0.01 wt% to 10 wt% or 0.1 wt% to 5 wt%), based on the total weight of the photocatalytic material.

5. The photocatalytic material according to any of the preceding or subsequent aspects, wherein the doping is surface doping, and/or the F-doping is oxygen-substitutional doping or a mixture of interstitial doping and oxygen-substitutional doping (preferably oxygen-substitutional doping), and/or the N-doping includes lattice doping and interstitial doping, wherein the lattice doping accounts for 80% to 20% (preferably 70% to 30%) of the total doping, the interstitial doping accounts for 20% to 80% (preferably 30% to 70%) of the total doping, the sum of the lattice doping and the interstitial doping is 100%, and/or the doping element(s) is distributed in the form of single atom as observed by a spherical difference electron microscope method.

6. A method for preparing a photocatalytic material, comprising the steps of:

1) providing a photocatalytic material precursor covered by a liquid film,
2) irradiating the photocatalytic material precursor with rays (preferably vacuum ultraviolet light) having a wavelength of 200 nm or below (preferably 100-200 nm or 120-200 nm) to obtain the photocatalytic material.

7. The method according to any of the preceding or subsequent aspects, wherein the operating conditions of the irradiation include: an operating temperature of from -50 °C to 95 °C (preferably from 10 to 70 °C), an operating pressure of from 0 to 1 MPaG (preferably from 0 to 0.1 MPaG), a lower limit of the duration of 0.1 h (preferably 1h, 2h or 3 h) and an upper limit of the duration of 120h (preferably 60h, 36h, 20h, 15h or 10 h).

8. The method according to any of the preceding or subsequent aspects, wherein the photocatalytic material precursor is at least one selected from the group consisting of sulfide-type photocatalytic materials and precursors thereof, metal oxide-type photocatalytic materials and precursors thereof, carbon nitride-based photocatalytic materials and precursors thereof, oxometallates and precursors thereof, and composite materials of these photocatalytic materials and precursors thereof, particularly preferably at least one selected from $TiO_2$, $ZrO_2$, ZnO, $BiVO_4$, $WO_3$, $SnO_2$, and composites of these photocatalytic materials and precursors thereof, more preferably at least one selected from titanium dioxide and precursors thereof, and/or, the photocatalytic material precursor contains 80 wt% or more (preferably 80 wt% to 99.9 wt% or 85 wt% to 99.5 wt%) of titanium dioxide, based on the total weight of the photocatalytic material precursor.

9. The method according to any of the preceding or subsequent aspects, wherein the photocatalytic material precursor is in the form of solid particles, and the solid particles have a particle size distribution as measured by the SEM method in a range of 5 to 150 nm (preferably 10 to 110 nm) or an average particle size of 20 to 85 nm (preferably 30 to 70 nm).

10. The method according to any of the preceding or subsequent aspects, wherein the liquid film has an average thickness of 0.5 to 200 mm (preferably 1 to 120 mm or 5 to 80 mm).

11. The method according to any of the preceding or subsequent aspects, wherein the irradiation is performed under an inert gas atmosphere, preferably under aeration with an inert gas flow or a nitrogen gas flow.

12. The method according to any of the preceding or subsequent aspects, wherein the irradiation dose of the irradiation is 0.01 to 50W/g (preferably 0.1 to 20W/g), and the irradiation power of the rays is 0.1 to 200W (preferably 1 to 50W).

13. The method according to any of the preceding or subsequent aspects, wherein a mass ratio of the liquid to the photocatalytic material precursor is 0.1 : 1 to 10000 : 1 (preferably 2 : 1 to 5000 : 1, and more preferably 5 : 1 to 1000 : 1).

14. The method according to any of the preceding or subsequent aspects, wherein the liquid further comprises at least one doping element selected from the group consisting of elements of Group IIIA of the periodic table of elements (preferably at least one of B and Ga), elements of Group IVA of the periodic table of elements (preferably at least one of C and Ge), elements of Group VA of the periodic table of elements (preferably at least one of N and P), non-oxygen elements of Group VIA of the periodic table of elements (preferably at least one of S and Se), elements of Group VIIA of the periodic table of elements (preferably F), non-noble transition metal elements other than Ti of the periodic table of elements (preferably at least one selected from the group consisting of Mn, Fe, Co, Ni, Cu, Zn), noble metal elements of the periodic table of elements (preferably at least one selected from Ag, Au, Pd and Pt) and rare earth metal elements of the periodic table of elements (preferably at least one selected from the group consisting of Ce, La, Nd, Gd), preferably at least one doping element selected from N, Mn and F, particularly preferably comprises N, Mn and F as doping elements, and the doping element(s) is used in an amount (calculated on an elemental basis) of 0.01 to 1000 wt% (preferably 0.1 to 200 wt%), individually or in total, based on the total weight of the photocatalytic material precursor.

15. The method according to any of the preceding or subsequent aspects, further comprising a step of irradiating the photocatalytic material precursor with an ultraviolet light having a wavelength of 200-400nm.

16. The method according to any of the preceding or subsequent aspects, wherein a ratio of the ultraviolet light to the rays is 1 : 1 to 30 : 1 (preferably 3 : 1 to 20 : 1).

17. The method according to any of the preceding or subsequent aspects, wherein the photocatalytic material is not subjected to a heat treatment at 300 °C or higher (preferably 200 °C or higher).

18. A photocatalytic article (such as photocatalytic particles, photocatalytic sheet, or photocatalytic film) comprising the photocatalytic material according to any of the preceding or subsequent aspects or the photocatalytic material obtained by the method according to any of the preceding or subsequent aspects.

19. A photocatalytic conversion method comprising a step of irradiating a feedstock to be converted (such as a VOCs-containing gas or hydrocarbons) with light in the presence of the photocatalytic material according to any of the preceding or subsequent aspects, the photocatalytic material obtained by the method according to any of the preceding or subsequent aspects, or the photocatalytic article according to any of the preceding or subsequent aspects.

## Brief Description of the Drawings

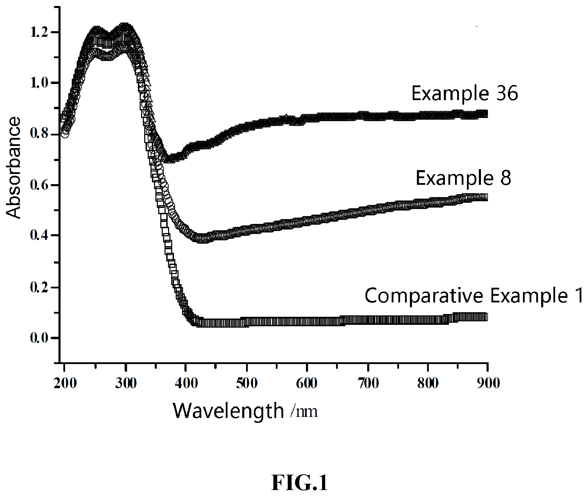

Fig. 1 is a UV-VIS diffuse reflection spectrum of the products of Comparative Example 1, Example 8 and Example 36.

## Technical effects

Compared with the prior art, the present application has the following advantages:
According to the present application, other nonmetal, metal or noble metal elements can be successfully doped in the photocatalytic precursor, a certain amount of metal cations with other valence states, oxygen vacancies and hydroxyl groups can be generated, and a plurality of defects/doping which are beneficial to expanding the photoresponse range and promoting the electron-hole separation can be formed simultaneously, so that the material has visible light and infrared light response and has higher practical value.

For example, in F-, N-doped titanium dioxide of the present application, F is doped into the lattice structure of titanium dioxide in place of oxygen, N is doped by interstitial doping and lattice doping, and $Ti^{3+}$, oxygen vacancies and -OH are generated; the formation of oxygen vacancies can produce an intermediate energy level below the conduction band; after N is doped, its 2p orbital is close to the O energy in the original photocatalyst, and after the 2p orbits of the N and the photocatalyst are hybridized, the valence band moves upwards, and the band gap is shortened; oxygen vacancies and nitrogen doping can both play a role in expanding the light absorption range. F-doping can not only promote the separation of photogenerated electron-holes, but also promote the formation of $Ti^{3+}$ and oxygen vacancies. Similar intermediate energy levels can be formed by -OH and $Ti^{3+}$, so that the visible/infrared light absorption range can be expanded.

## Detailed Description of the Invention

The present application will be illustrated in detail hereinbelow with reference to embodiments thereof, but it should be noted that the scope of the present application is not limited by those embodiments, but is defined by the appended claims.

All publications, patent applications, patents, and other references cited herein are incorporated by reference in their entirety. Unless defined otherwise, all technical and scientific terms used herein have the same meaning as commonly understood by those skilled in the art. In case of conflict, the contents described herein, including definitions, should prevail.

Where a material, substance, method, step, device, component, or the like is described herein as "commonly known to those skilled in the art", "prior art" or the like, it is to be understood that said material, substance, method, step, device and component cover not only those conventionally used in the art at the time of filing the present application, but also those not commonly used at present but will become commonly known in the art to be suitable for a similar purpose.

In the context of the present application, all numerical values of a parameter (e.g., quantity or condition) are to be understood as being modified in all instances by the term "about", whether or not "about" actually appears before the numerical value.

In the context of the present application, unless otherwise specified, each apparatus may adopt a structure conventionally selected in the art without particular limitation.

In the context of the present application, the term "substantially" means there may be a deviation acceptable or considered reasonable by a person skilled in the art, such as a deviation within ± 2%, within ± 1.5%, within ± 1%, within ± 0.5% or within ± 0.1%.

In the context of the present application, statistical analysis of the particle size distribution or average particle size is carried out using scanning electron microscopy. The instrument model of Scanning Electron Microscope (SEM) is Hitachi S-4800, the resolution of secondary electrons of the instrument is 1.4 nm (1 kV) and 1.0nm (15 kV), the cold field emission electron source is an electron gun, and the magnification is 20-800,000. The catalyst powder to be tested is adhered on the conductive adhesive, compacted, and subjected to metal spraying to obtain a sample, and then tested to observe the surface structure of the catalyst, and measure the particle size. The particle size is measured and statistically analyzed using NanoMeasurer software.

In the context of the present application, the method for determining the surface $Ti^{3+}$ and $Ti^{4+}$ content, loss rate, oxygen vacancies, and doping type is X-ray Photoelectron Spectroscopy (XPS).

XPS is an elemental analysis technique in which X-rays of a certain energy are irradiated onto the surface of a sample to interact with the substance to be measured, so that the sample to be measured can emit electrons with a characteristic energy, and the process can be represented by the following formula:

$$h\gamma = E_k + E_b + E_r$$

$h\gamma$: the energy of the X photon; $E_k$: the energy of the photoelectrons; $E_b$: binding energy of electrons; $E_r$: recoil energy of atoms, wherein $E_r$ is small and negligible. The sample's chemical composition can be analyzed. The incident beam of the X-ray photoelectron spectroscopy is X-ray which interacts with atoms on the surface of the sample to excite the electrons in the inner shell of the atoms in the sample to generate ionization, so that the composition and structure information of all elements except H and He in the sample can be obtained.

According to the measuring method of the present application, the X-ray photoelectron spectrometer is Thermo Fisher Multilab 2000, with a Mg/Al double anode as the X-ray source, the vacuum degree in the analysis chamber is $5 \times 10^{-10}$ mbar, and the vacuum degree is obtained by two turbo molecular pumps; the device detector is a single-channel electron multiplier; the electron energy analyzer is a hemispherical sector analyzer. The sample is gently ground, pressed into a flat, uniform, and compacted tablet, and then introduced into the analysis chamber for testing. XPS is adopted to analyze the element composition, valence state, doping mode and the like of the product. Based on the peak position and line shape, combined with literature information, the element type, valence state and the like can be determined. For example, a peak near 530eV generally corresponds to an O 1s electron level, and an asymmetric Gaussian line shape indicates the superposition of multiple oxygen bonding states. At this point, the content information of O corresponding to different existence states can be obtained through fitting. For example, where O 1s of certain titanium dioxide is fitted to obtain peaks of 532.2, 531.2, and 530.2 eV, the three peaks correspond to adsorbed oxygen ($O_a$), oxygen vacancy (Ov) and lattice oxygen ($O_L$), respectively, in accordance with literature information. Peaks for $Ti^{3+}$ and $Ti^{4+}$ can also be obtained using the same procedure. The ratio of active sites such as $Ti^{3+}$ and oxygen vacancies (Ov) can be calculated from the peak area. Peaks near 399eV and 699eV correspond to F 1s and N 1s respectively, and after peak fitting of the two, the signal peaks for interstitial doping and oxygen-substitutional doping can be respectively obtained. For the F element, the peaks for the interstitial doping and the oxygen-substitutional doping are located near 685.3eV and 687.8eV, respectively, while the peaks for the interstitial doping and the oxygen-substitutional doping of N are located near 399.3eV and 396.0eV, respectively.

In the context of the present application, the percentage of mass loss is measured by thermogravimetric analysis, which is performed on the sample using a PE 2400II thermogravimetric analyzer from Perkin Eliner, U.S.A. The experimental conditions include: N atmosphere, a test temperature of 50-400 °C, a heating rate of 10 °C/min, and weight of the test sample of $10 \pm 1mg$.

In the context of the present application, surface hydroxyl content is measured by infrared spectroscopy. Irradiation of infrared light onto an object causes covalent bonds in the molecules of the substance to vibrate or rotate, and the infrared light absorbed during vibration has a specific wavelength, so that the infrared spectroscopy can obtain information such as framework vibration, surface groups and the like. The sample is tested using a Cary630 infrared spectrometer of Agilent with a wavelength range of 400-4000 $cm^{-1}$, and before the test, the powder sample and KBr are mixed and ground uniformly at a ratio of 1 : 200, and the mixture is directly pressed into a uniform transparent sheet by a tablet press machine, and the test is performed with a step length set at 2 $cm^{-1}$, and the background is subtracted by KBr.

In the context of the present application, the absorbance of a photocatalyst to light of different wavelengths is measured using solid UV-Vis diffuse reflection spectroscopy. UV-Vis diffuse reflection absorption spectroscopy is an important technology for analyzing the electronic structure of a semiconductor photocatalyst, and the electronic structure of the semiconductor photocatalyst is closely related to the photocatalytic activity thereof. The sample is placed in an integrating sphere of a spectrophotometer (UV-2600, Shimadzu, Japan), with $BaSO_4$ as a reference, an excitation wavelength set at 200-900nm, and a scanning speed at 1000 nm/min.

In the context of the present application, the structure of the prepared monoatomic dispersion photocatalyst sample is characterized using an in situ Spherical Aberration Corrected Transmission Electron Microscope (ACTEM) (JEOL JEM-ARM 200F, Japan). A small amount of sample is taken in advance and dispersed in ethanol before testing, and dispersed till uniform using ultrosound; and a small amount of the resulting suspension is taken using a rubber-tipped pipette and dropped onto a copper mesh, dried in vacuum, and then placed in a vacuum chamber for testing, wherein the acceleration voltage is 200kV during testing.

In the context of the present application, unless specifically stated otherwise, all percentages, parts, ratios, etc. are expressed by weight and all pressures given are gauge pressures.

In the context of the present application, any two or more embodiments of the present application may be arbitrarily combined, and the resulting technical solution forms a part of the initial disclosure of the present application and falls within the scope of the present application.

According to an embodiment, the present application relates to a photocatalytic material. According to the present application, the photocatalytic material can exhibit chemical reaction catalytic performance under irradiation of light.

According to an embodiment of the present application, the photocatalytic material comprises titanium dioxide. Preferably, the photocatalytic material comprises greater than or equal to 80 wt% (preferably 80-99.9 wt% or 85-99.5 wt%) of titanium dioxide, based on the total weight of the photocatalytic material. Herein, the titanium dioxide is anatase, rutile or a mixture of both.

According to an embodiment of the present application, the ratio of the surface $Ti^{3+}$ content to the surface $Ti^{4+}$ content measured by the XPS method of the photocatalytic material is 1 : 19 to 19 : 1 (preferably 1 : 4 to 4 : 1). Particularly, the photocatalytic material generally has a surface $Ti^{3+}$ content of 5% to 95% (preferably 20% to 80%) measured by the XPS method, and a surface $Ti^{4+}$ content of 5% to 95% (preferably 20% to 80%) measured by the XPS method.

According to an embodiment of the present application, the photocatalytic material has an Ov peak content of surface oxygen vacancies of 10% to 80% (preferably 15% to 60%) measured by the XPS method.

According to an embodiment of the present application, the photocatalytic material shows an ultraviolet-visible diffuse reflection spectrum in which the absorbance for light having a wavelength of 760 nm is 0.20 to 2.0 (preferably 0.30 to 1.8), the absorbance for light having a wavelength of 800 nm is 0.25 to 1.8 (preferably 0.35 to 1.6), and the absorbance for light having a wavelength of 850nm is 0.25 to 1.7 (preferably 0.35 to 1.5). The photocatalytic material of the present application shows high utilization rate of visible light and even infrared light, and greatly improves the response to light compared with the conventional titanium dioxide.

According to an embodiment of the present application, the photocatalytic material is present in any form (preferably, a granular form) selected from the group consisting of granules, powder, sheets, strips, and shaped bodies. Optionally, the photocatalytic material may be a solid or hollow solid.

According to an embodiment of the present application, the photocatalytic material has a mass loss percentage, measured by thermogravimetric analysis at 300 °C, ranging from 0.2% to 7% by weight (preferably from 0.5% to 5% by weight). This measurement shows that the photocatalytic material of the present application contains a certain degree of thermally volatile components; without being bound by any theory, the inventors believe that these thermally volatile components may originate from hydroxyl groups or bound water, etc. on the photocatalytic material. As a guide, the photocatalytic material according to the present application generally has a surface hydroxyl content, as measured by infrared spectroscopy, of 0.03 to 3 mmol/g (preferably 0.05 to 1.5 mmol/g).

According to an embodiment of the present application, the photocatalytic material shows a size distribution in a range of 5 to 150nm (preferably 10 to 110 nm) or an average particle size of 20 to 85 nm (preferably 30 to 70 nm), as measured by the SEM method.

According to an embodiment of the present application, the photocatalytic material has a loss rate of the surface content of $Ti^{3+}$ of less than 2% (preferably less than 1%) after 10 cycles of 100 °C deionized water washing. This measurement shows that, on the surface of the photocatalytic material of the present application, $Ti^{3+}$ is bound via a chemical bond, thereby exhibiting strong resistance to cyclic washing.

According to an embodiment of the present application, the photocatalytic material may further comprise various doping elements or any combination thereof conventionally used in the art for producing photocatalytic materials, such as at least one doping element selected from the group consisting of elements of Group IIIA of the periodic table of elements, elements of Group IVA of the periodic table of elements, elements of Group VA of the periodic table of elements, non-oxygen elements of Group VIA of the periodic table of elements, elements of Group VIIA of the periodic table of elements, non-noble transition metal elements of the periodic table of elements other than Ti, noble metal elements of the periodic table of elements, and rare earth metal elements of the periodic table of elements.

According to an embodiment of the present application, the element of Group IIIA of the periodic table of elements is preferably at least one of B and Ga. The element of Group IVA of the periodic table of elements is preferably at least one of C and Ge. The element of Group VA of the periodic table of elements is preferably at least one of N and P. The non-oxygen element of Group VIA of the periodic table of elements is preferably at least one of S and Se. The element of Group VIIA of the periodic table of elements is preferably F. The non-noble transition metal element of the periodic table of elements other than Ti is preferably at least one selected from the group consisting of Mn, Fe, Co, Ni, Cu, Zn, and more preferably Mn. The noble metal element of the periodic table of elements is preferably at least one selected from Ag, Au, Pd and Pt. The rare earth metal element of the periodic table of elements is preferably at least one selected from the group consisting of Ce, La, Nd and Gd. As the doping element, at least one selected from the group consisting of N, Mn and F is preferable, and a combination of N and F or a combination of N, Mn and F is particularly preferable. According to the present application, other elements are successfully doped in the photocatalytic precursor, and a certain amount of metal cations at other valence states, oxygen vacancies, heterojunction and hydroxyl groups are generated at the same time, so that the material has visible light response and even infrared light response.

According to an embodiment of the present application, the doping element is used, for example, in an amount (calculated on an elemental basis) of 0.01 wt% to 15 wt% (preferably 0.01 wt% to 10 wt% or 0.1 wt% to 5 wt%) individually or in total, based on the total weight of the photocatalytic material.

According to a preferred embodiment of the present application, in F-, N-doped titanium dioxide, F is doped into the titanium oxide lattice structure in the form of replacing oxygen, while N undergoes both interstitial doping and lattice doping, and $Ti^{3+}$ and oxygen vacancies are generated; F-doping can promote the separation of photogenerated electron and holes; the introduction of $Ti^{3+}$ can form the redox cycle of $Ti^{3+}/Ti^{4+}$ ion pairs, so that the redox performance of the catalyst is improved.

According to an embodiment of the present application, in the photocatalytic material, the doping is surface doping. By surface doping is meant herein that the doping element is distributed substantially at the surface of the photocatalytic material or within a depth of about 3 nm from the surface. In addition, it is preferable that the doping element (particularly, metal element) exhibits a substantially monoatomic distribution on the surface of the photocatalytic material when observed by the spherical aberration corrected electron microscope method.

According to a preferred embodiment of the present application, in the photocatalytic material, where F-doping is comprised, the F-doping is oxygen-substitutional doping, or a mixture of interstitial doping and oxygen-substitutional doping, preferably oxygen-substitutional doping. Alternatively, where N-doping is comprised, the N-doping generally includes lattice doping and interstitial doping. Preferably, the lattice doping accounts for 80-20% (preferably 70-30%) of the total doping, and the interstitial doping accounts for 20-80% (preferably 30-70%) of the total doping, with the sum of the two being 100%.

According to an embodiment, the present application relates to a method for producing a photocatalytic material. According to the present application, the method can be used for producing the photocatalytic material of the present application as described above, but the present application is not limited to these photocatalytic materials.

According to an embodiment of the present application, the method for producing the photocatalytic material comprises step 1): providing a photocatalytic material precursor covered by a liquid film. It is preferred according to the present application that the photocatalytic material precursor is in a solid form, not in a liquid form, nor in a dissolved state.

According to an embodiment of the present application, the photocatalytic material precursor may be in any form selected from particles, powder, sheets, strips, and shaped bodies, preferably in the form of particles. By way of example, the particles may have a size distribution, measured by the SEM method, in a range from 5 to 150 nm (preferably from 10 to 110 nm) or an average size of from 20 to 85 nm (preferably from 30 to 70 nm). The inventors of the present application have found that if the particle size is too large, the specific surface area would be small, and the load of the dopant per unit weight would be low, resulting in a decrease in the activity; if the particle size is too small, the volume fraction of atoms on the particle surface would become high, the surface energy would be increased, and the stability of the generated active sites would be deteriorated, thereby affecting the reactivity; in addition, too small a particle size makes the catalyst difficult to settle, resulting in a difficulty in separation.

According to an embodiment of the present application, the photocatalytic material precursor is a material or a precursor thereof capable of undergoing a photochemical reaction under the action of light, and is preferably at least one selected from the group consisting of sulfide-type photocatalytic materials and precursors thereof, metal oxide-type photocatalytic materials and precursors thereof, carbon nitride-based photocatalytic materials and precursors thereof, oxometallates and precursors thereof, and composite materials of these photocatalytic materials and precursors thereof, and is particularly preferably at least one selected from the group consisting of $TiO_2$, $ZrO_2$, ZnO, $BiVO_4$, $WO_3$, $SnO_2$, and composite materials of these photocatalytic materials and precursors thereof, and is more preferably at least one selected from the group consisting of titanium dioxide and precursors thereof. It is preferable that the photocatalytic material precursor comprises 80 wt% or more (preferably 80 wt% to 99.9 wt% or 85 wt% to 99.5 wt%) of titanium dioxide, based on the total weight of the photocatalytic material precursor. The titanium dioxide may be anatase, rutile or a mixture of both.

According to an embodiment of the present application, the liquid forming the liquid film does not dissolve the photocatalytic material precursor, and is preferably at least one selected from water, esters, and alcohols, and particularly water. The phenomenon of water-solid interface is very important in natural systems, and the surface wetting process depends on the type and magnitude of intermolecular forces on the water-solid interface. When a particulate matter is completely immersed in water, the surface of the particulate matter is covered with a bound water layer, and water molecules in the bound water layer are orderly arranged. In addition to adsorbed water in the water layer, two other types of water with distinct properties exist among fully saturated, piled solid particles, namely free water and capillary water. The water retained among particles under the action of capillary force is capillary water, and the water within the interstices of piled particles that possesses the properties of ordinary water is free water. In the context of the present application, the thickness of the liquid film is determined according to the equation $d=5*(V_L/S)$, wherein d refers to liquid film thickness (m m); $V_L$ refers to the volume of liquid added per gram of photocatalytic material (mL); S refers to the area of the solid-liquid mixture containing each gram of catalyst particles in the direction of light irradiation ($cm^2$).

According to the present application, the photocatalytic material precursor is covered by the liquid film. To achieve the technical effects of the present application, the liquid forms the liquid film at least on the surface of the photocatalytic material precursor, and preferably forms a continuous liquid surface. The inventor of present application found that if the thickness of the liquid is too small, it may result in unsuccessful doping, so that no visible or infrared light absorption can be achieved. This may be due to the insufficient amount of wetting liquid, which fails to form a continuous adsorbed water layer and the liquid is prone to volatilization and drying. As a result, it may be hard for dopants such as fluorine to come into contact with the catalytic material or to present in an ionic state, thereby unable to generate active components involved in doping. For this purpose, it is preferable that the liquid film generally has an average thickness of from 0.5 to 200 mm (preferably from 1 to 120 mm or from 5 to 80 mm).

According to an embodiment of the present application, the method for producing the photocatalytic material comprises step 2): irradiating the photocatalytic material precursor with a ray having a wavelength of 200 nm or below to obtain the photocatalytic material. Preferably, the ray has a wavelength of 100-200 nm or 120-200 nm, and is more preferably a vacuum ultraviolet light (VUV) covering 150-190 nm. The inventors of the present application have found that if the wavelength is too short, the cost of the ultraviolet light would be greatly increased, and the ultraviolet light would not be easily amplified, but if the wavelength is too long, the energy of the ultraviolet light would be reduced, and the reactant could not be effectively excited to generate free radicals. According to an embodiment of the present application, the operating conditions of the irradiation include: an operating temperature of -50 °C to 95 °C (preferably 10-70 °C), and an operating pressure of 0-1 MPaG (preferably 0-0.1 MPaG).

According to an embodiment of the present application, the lower limit of the duration of the irradiation is generally 0.1 h (preferably 1 h, 2 h or 3 h) and the upper limit of the duration of the irradiation is generally 120 h (preferably 60 h, 36 h, 20 h, 15 h or 10 h). The inventors of the present application have found that if the time is too short, the reaction would be incomplete, and the doping effect would be poor, but if the time is too long, the intermediate products or byproducts would be increased continuously along with the reaction so that the reaction would reach equilibrium, and no more beneficial effects would be generated on the products, resulting a waste.

According to an embodiment of the present application, the irradiation is performed under a condition of stirring the photocatalytic material precursor covered with the liquid film in order to make the irradiation more uniform. According to the present application, the stirring may be carried out in any manner conventionally known in the art, without particular limitation, for example, at a stirring rate of generally 10 to 1000 rpm.

According to an embodiment of the present application, the irradiation is carried out under an inert gas atmosphere, preferably under aeration with an inert gas stream or nitrogen stream (e.g. with an aeration rate of 0.01-10L/min/g). The inventors of the present application have found that aeration is advantageous for the formation of the active component $Ti^{3+}$.

According to an embodiment of the present application, the irradiation dose of the irradiation is generally 0.01 to 50W/g (preferably 0.1 to 20W/g). Further, the irradiation power of the ray is generally 0.1 to 200W (preferably 1 to 50W).

According to an embodiment of the present application, the liquid may further comprise various doping elements or any combination thereof conventionally used in the art for producing photocatalytic materials, such as at least one doping element selected from the group consisting of elements of Group IIIA of the periodic table of elements, elements of Group IVA of the periodic table of elements, elements of Group VA of the periodic table of elements, non-oxygen elements of Group VIA of the periodic table of elements, elements of Group VIIA of the periodic table of elements, non-noble transition metal elements of the periodic table of elements other than Ti, noble metal elements of the periodic table of elements, and rare earth metal elements of the periodic table of elements.

According to an embodiment of the present application, the element of Group IIIA of the periodic table of elements is preferably at least one of B and Ga. The element of Group IVA of the periodic table of elements is preferably at least one of C and Ge. The element of Group VA of the periodic table of elements is preferably at least one of N and P. The non-oxygen element of Group VIA of the periodic table of elements is preferably at least one of S and Se. The element of Group VIIA of the periodic table of elements is preferably F. The non-noble transition metal element of the periodic table of elements other than Ti is preferably at least one selected from the group consisting of Mn, Fe, Co, Ni, Cu, Zn, and more preferably Mn. The noble metal element of the periodic table of elements is preferably at least one selected from the group consisting of Ag, Au, Pd and Pt. The rare earth metal element of the periodic table of elements is preferably at least one selected from the group consisting of Ce, La, Nd and Gd. As the doping element, at least one selected from the group consisting of N, Mn and F is preferable, and a combination of N and F or a combination of N, Mn and F is particularly preferable.

According to an embodiment of the present application, as described above, the doping element (calculated on an elemental basis) is present in an amount of 0.01 wt% to 15 wt% (preferably 0.01 wt% to 10 wt% or 0.1 wt% to 5 wt%) individually or in total, based on the total weight of the photocatalytic material. For this reason, to produce the photocatalytic material of the present application, the amount of the doping element is not particularly limited, as long as the content of the doping element (calculated on an elemental basis) alone or in total is within the numerical range specified in the present application, but for example, the amount of the doping element (calculated on an elemental basis) alone or in total is generally 0.01 to 1000 wt% (preferably 0.1 to 200 wt%) based on the total weight of the photocatalytic material precursor.

According to a preferred embodiment of the present application, the inventors of the present application have found that where F is doped, it is highly favorable for the generation of $Ti^{3+}$ and other species, which facilitates the photocatalytic reaction. For this reason, as the amount, for example, F is used in an amount (calculated on an elemental basis) of generally 0.01 to 1000 wt% (preferably 0.1 to 200 wt%) based on the total weight of the photocatalytic material precursor.

According to an embodiment of the present application, the mass ratio of the liquid to the photocatalytic material precursor should meet the minimum requirement for covering the photocatalytic material precursor with the liquid film, and is generally 0.1 : 1 to 10000 : 1 (preferably 2 : 1 to 5000 : 1, and more preferably 5 : 1 to 1000 : 1). The inventors of the present application have found that, to achieve the technical effects of the present application, the liquid should at least maintain the catalyst in a wet state, preferably forms a continuous liquid surface or has liquid fluidity. The inventors of the present application have found that if the amount of liquid is too low, it may result in unsuccessful doping, so that no visible or infrared light absorption can be achieved. This may be due to the insufficient amount of wetting liquid, which fails to form an adsorbed liquid layer on the catalyst surface and the liquid is prone to volatilization and drying under light irradiation. As a result, it may be hard for dopants such as fluorine to present in an ionic state, thereby unable to generate active components involved in doping.

According to an embodiment of the present application, the doping element (calculated on an elemental basis) is generally used in an amount of 0.01 to 1000 wt% (preferably 0.1 to 200 wt%) based on the total weight of the photocatalytic material precursor. Certainly, for different doping elements, the amount may also be adjusted appropriately, which is within the knowledge of a skilled person.

According to an embodiment of the present application, one or more of the doping elements are introduced into the liquid in a single step or in multiple steps. For example, one or more of the doping elements may be introduced into the liquid before, simultaneously with, or after the irradiation of the photocatalytic material precursor with the ray. Particularly, the step 2) may be repeated a plurality of times (for example 2-4 times), and preferably one or more of the doping elements are introduced into the liquid between two adjacent steps 2).

According to an embodiment of the present application, the doping element as described above is generally used in the form of its precursor. Preferably, the precursor of the doping element is soluble in the liquid, preferably soluble or readily soluble in water. As the precursor, any compound used in the art as a precursor of the doping element can be used, and specific examples thereof include at least one selected from the group consisting of lithium fluoride, sodium fluoride, potassium bifluoride, sodium bifluoride, lithium bifluoride, ammonium fluoride, ammonium phosphate, potassium permanganate, $NaBH_4$, boron oxide, $NaBO_2$, $Ga(NO_3)_3$, polyacrylamide, ethanol, glucose, pyrrole, $GeCl_4$, $Na_2GeO_3$, phosphoric acid, ammonium phosphate, sodium phosphate, $CS_2$, sodium thiosulfate, thiourea, selenium tetrachloride, $H_2SeO_3$, $Na_2SeO_3$, $MnCl_2$, $Mn(NO_3)_2$, $MnSO_4$, manganese acetate, potassium permanganate, $Fe(NO_3)_3 \cdot 9H_2O$, $Fe_2(SO_4)_3$, $FeSO_4$, $[Co(NH_3)_6]Cl_3$, cobalt nitrate hexahydrate, $Ni(OH)_3$, oxalic acid, $NiCl_2$, nickel sulfate hexahydrate, $Cu(NO_3)_2$, $CuCl_2$, copper acetate, $ZnCl_2$, $Zn(Ac)_2 \cdot 2H_2O$, $AgNO_3$, $HAuCl_4 \cdot 4H_2O$, $PdCl_2$, $[PdCl_4]^{2-}$, $[Pd(H_2O)_4]^{2+}$, $PtCl_6^{2-}$, $H_2Pt(OH)_6$, $[Pt(NH_3)_4]^{2+}$, $(NH_4)_2Ce(NO_3)_6$, cerium nitrate hexahydrate, acid amide, dicyandiamide $(C_2N_4H_4)$, aqueous ammonia, ammonium oxalate, urea, 2,2'-bipyridine, hexamethylenetetramine, ammonium carbonate, guanidine $(CN_3H_5)$, ammonium chloride, and methylethylamine.

According to an embodiment of the present application, the method further comprises a step of irradiating the photocatalytic material precursor with an ultraviolet light having a wavelength of 200-400 nm. By way of example, the ratio of the ultraviolet light to the ray is from 1 : 1 to 30 : 1 (preferably from 3 : 1 to 20 : 1).

According to an embodiment of the present application, the irradiation dose of the ultraviolet light is generally 0.01 to 200 w/g (preferably 0.1 to 50 w/g). Further, the irradiation power of the ultraviolet light is generally 0.1 to 1000W (preferably 1 to 200W). Moreover, the conversion efficiency of the ultraviolet light is generally 0.1 to 80% (preferably 1 to 60%).

According to an embodiment of the present application, the lower limit of the duration of the ultraviolet light irradiation is 0.1 h (preferably 1h, 2h or 3 h), and the upper limit of the duration of the ultraviolet light irradiation is 120 h (preferably 60 h, 36 h, 20 h, 15 h or 10 h). The irradiation of the ultraviolet light and the irradiation of the ray may be performed simultaneously, sequentially or alternately, and there is no particular limitation.

According to an embodiment of the present application, the method further comprises the steps of solid-liquid separation, washing (optional) and drying of the photocatalytic material.

According to an embodiment of the present application, the solid-liquid separation may be performed in any manner conventionally known in the art, such as centrifugation, filtration, or the like, with no particular limitation.

According to an embodiment of the present application, the washing is an optional step, and the washing may be performed in any manner conventionally known in the art, such as washing with water one or more times, etc., with no particular limitation.

According to an embodiment of the present application, the operating conditions of the drying include: a drying temperature of 30-150 °C (preferably 35-120 °C, and more preferably 40-90 °C), and a drying time of 0.1-80 hr (preferably 1-15 hr).

According to an embodiment of the present application, the photocatalytic material is not subjected to a heat treatment at 300 °C or higher (preferably 200 °C or higher). The inventors of the present application have found that baking at high temperature may remove dopants such as fluorine, or oxidize $Ti^{3+}$, resulting in a photocatalytic material with reduced visible light and infrared photocatalytic activity.

According to an embodiment of the present application, the method comprises the steps of:

mixing a liquid (preferably water) with a photocatalytic material precursor (preferably titanium dioxide) under aeration of a stream of inactive gas and agitation to obtain a photocatalytic material precursor covered by a liquid film,

adding a precursor of a first doping element to the photocatalytic material precursor covered by the liquid film under aeration of a stream of inactive gas and agitation to obtain a first feedstock mixture,

irradiating the first feedstock mixture with a vacuum ultraviolet light (first irradiation) under aeration of a stream of inactive gas and agitation to obtain a first product mixture,

subjecting the first product mixture to solid-liquid separation, washing (optional) and drying to obtain the photocatalytic material.

According to an embodiment of the present application, the mass ratio of the photocatalytic material precursor to the liquid is generally 1 : 1 to 1 : 10000 (preferably 1 : 2 to 1 : 5000, and more preferably 1 : 5 to 1 : 1000), and a mass ratio of the photocatalytic material precursor to the precursor of the first doping element is generally 1 : 0.01 to 1 : 10 (preferably 1 : 0.05 to 1 : 5, and more preferably 1 : 0.1 to 1 : 2). In addition, the duration of the first irradiation is generally 0.1 to 120 h (preferably 0.5 to 60 h, and more preferably 1 to 36 h).

According to an embodiment of the present application, the method further comprises the steps of:

adding a precursor of a second doping element to the first product mixture to obtain a second feedstock mixture,

irradiating the second feedstock mixture with a vacuum ultraviolet light (second irradiation) under aeration of a stream of inactive gas and agitation to obtain a second product mixture,

subjecting the second product mixture to solid-liquid separation, washing (optional) and drying to obtain the photocatalytic material.

According to the present application, the second doping element may be the same as or different from the first doping element, preferably different from the first doping element, and may be freely selected from the doping elements described hereinabove, with no particular limitation. Preferably, a plurality of doping elements, particularly N and F, are used in combination, whereby the liquid may contain a plurality of (for example two or three) doping elements.

According to an embodiment of the present application, the mass ratio of the first product mixture (calculated on the basis of the photocatalytic material precursor) to the precursor of the second doping element is generally 1 : 0.0001 to 1 : 0.3 (preferably 1 : 0.0003 to 1 : 0.15). In addition, the duration of the second irradiation is generally 0.3 to 20 h (preferably 0.5 to 15 h, and further preferably 1 to 10 h).

According to an embodiment of the present application, there is also provided a photocatalytic article (such as photocatalytic particles, photocatalytic sheet or photocatalytic film) comprising a photocatalytic material according to any of the preceding or subsequent aspects of the present application.

According to an embodiment, the present application also relates to a conversion method, such as pollutant (VOCs and waste water) degradation, hydrogen production by photolysis, chemical preparation by carbon dioxide reduction, syngas preparation by reforming, nitrogen fixation, alkane conversion and the like.

According to an embodiment of the present application, the VOCs containing gas may comprise formaldehyde. Preferably, the content of formaldehyde in the VOCs containing gas is 1 to 10000 ppm (preferably 2 to 1000 ppm, further preferably 5 to 500 ppm).

According to the present application, the conversion method comprises a step of irradiating a feedstock to be converted (such as a VOCs containing gas) with light in the presence of the photocatalytic material according to any of the preceding or subsequent aspects of the present application or the photocatalytic article according to any of the preceding or subsequent aspects of the present application.

According to an embodiment of the present application, the wavelength of the light is 100-3000 nm (preferably 150-2000 nm). In addition, the irradiation dose of the light is 0.0001-10000 $kW/m^3$ (preferably 0.005-1000 $kW/m^3$).

According to an embodiment of the present application, the operating conditions of the irradiation include: an operating temperature of from -50 to 90 °C (preferably from 10 to 70 °C), an operating pressure of from 0 to 1 MPaG (preferably from 0 to 0.5 MPaG), a duration of from 0.1 to 2000 h (preferably from 0.2 to 200 h), and a volumetric space velocity of from 0.01 to 1,000,000 $h^{-1}$ (preferably from 0.1 to 200,000 $h^{-1}$).

**Examples**

The present application will be further illustrated in detail with reference to the following examples and comparative examples, but the present application is not limited to those examples.

**Example 1**

At room temperature, a cylindrical quartz glass reaction vessel with a square bottom (side length 80 mm), a height of 90 mm, and a total volume of approximately 0.6L was taken and placed on a magnetic stirrer, a stir bar was added, 0.4L of pure water was poured into the vessel (with a liquid level of approximately 62 mm in height), stirried continuously at 200 rpm, and at the same time nitrogen gas was introduced into the bottom of the vessel at a flow rate of 50 ml/min; then 1.0 g of anatase titanium dioxide with a particle size of 20-70 nm and an average particle size of 40.2 nm was added into the vessel, stirring and aeration were continued until the titanium dioxide and the water were uniformly mixed, to obtain a first feedstock mixture; the first feedstock mixture was irradiated from top to bottom using an MLI-1000ArF laser of MLase GmbH, Germany, the laser can output a vacuum ultraviolet light of 193nm (with a maximum power of 6W and adjustable power), the size and the shape of a light spot were adjusted by a beam expander to be matched with the inner surface of a reaction container, a light beam analyzer (PM10X laser power meter of the Coherent Company, USA) was used for testing and adjusting the power of the output light spot, and the power of the light spot applied to the surface of the solution was adjusted to be 2W. At this time, the titanium dioxide was uniformly mixed with water, the particles were randomly dispersed in the water, the average thickness of the liquid film was 31 mm, and the irradiation dose was 2W/g. The reaction was carried out under irradiation for 24 hours to obtain a first product mixture. Then, the light source was turned off, and the stirring and aeration were stopped. The mixture was allowed to settle naturally for a period of time, the supernatant liquid was removed, the resultant was filtered, and the sample was washed several times with distilled water, and dried at 60 °C for 6 hours to obtain a product.

The test result of the ultraviolet visible diffuse reflection absorption spectroscopy showed that the absorbance at the wavelength of 760 nm was 0.64, the absorbance at the wavelength of 800 nm was 0.66 and the absorbance at the wavelength of 850 nm was 0.69.

XPS peaks of oxygen and titanium elements in the product were analyzed, and peak fitting was carried out for O 1s and Ti2p based on the peak shapes in conjunction with literatures. After fitting the O 1s peak, the peaks corresponding to the lattice oxygen ($O_L$), oxygen vacancies (Ov), and adsorbed oxygen ($O_a$), respectively, were obtained, $O_{total} = O_a + Ov + O_L$, a calculation showed $O_V/O_{total}$ = 35.3%, and, before the reaction, $O_V/O_{total}$ = 2.1%. After fitting the Ti2p peak, the peaks of $Ti^{4+}$ and $Ti^{3+}$ were obtained, wherein the content of ($Ti^{3+}/Ti_{total}$) was 38.2%, the content of $Ti^{4+}$ ($Ti^{4+}/Ti_{total}$) was 61.8%, the ratio of the surface content of $Ti^{3+}$ to the surface content of $Ti^{4+}$ was 0.618, and the $Ti^{3+}$ content before reaction was 0. The mass loss percentage measured by thermogravimetric analysis at 300 °C was 0.95%, the surface hydroxyl content measured by infrared spectroscopy was 0.43 mmol/g, the particle size distribution range and the average particle size measured by the SEM method were 20-70 nm and 39.8 nm respectively, and the loss rate of the surface content of $Ti^{3+}$ after 10 times of cyclic washing with deionized water at 100 °C was 0.4%.

Four kinds of embedding agents 812 Resin (1.5 g), DDSA (0.72 g), MNA (1.32 g) and DP-30 (0.10 g) were weighed and mixed thoroughly in sequence, and then the above-mentioned catalyst was embedded in an embedding tube, cured at 60 °C for 48 hours, and the sample block was trimed and then subjected to ultrathin sectioning (using UC-6 ultramicrotome, Leica, Germany) with a section thickness set to be 10 nm, and the obtained sections were subjected to TEM-EELS (JEM-ARM 200F, JEOL, Japan) test. The test results showed that $Ti^{3+}$ was mainly distributed within about 3 nm from the surface of the titanium dioxide particles, and the presence of $Ti^{3+}$ was not found inside the particles.

The material is suitable for VOCs treatment, and the method for using the material is illustrated by taking formaldehyde degradation as an example.

0.4 g of the catalyst of Example 1 was added to 16ml of ethanol, and the mixture was stirred to disperse the sample in ethanol, thereby obtaining a catalyst suspension. 4 glass slides (10 cm × 4 cm) were taken, the suspension was uniformly dripped on the glass slides, the glass slides were placed into an oven to be dried at 60 °C, and a layer of uniform catalyst film was formed on the glass slides. For the activity evaluation test, the glass slides were placed in an organic glass reactor of about 0.8L (20 cm × 10 cm × 4 cm), and a gas containing 100 ppm of formaldehyde was introduced. After an adsorption-desorption balance of the formaldehyde gas on the catalyst was reached, a light source was turned on. The light source used was a PL-X300DF high-performance simulated daylight xenon lamp (150W) of the Perfect-Light company, with a wavelength covering 300-2500, a CUT600nm filter of the same company was used for filtering light below 600nm, so that only visible light and infrared light above 600 nm were remained. The change of formaldehyde concentration in the reactor was continuously monitored by an infrared photoacoustic spectrometer. The formaldehyde concentration at adsorption-desorption balance before turning on the lamp was recorded as $C_0$, the real-time formaldehyde concentration in the reactor after turning on the lamp was recorded as C, and thus $C/C_0$ represented the change rate of the formaldehyde concentration along with time, and the removal rate was 85.2% after 90 min.

**Example 2**

The same conditions as in Example 1 were used, except that the power of the light spot applied to the solution was adjusted to 3W, and the irradiation dose was 3W/g. The methods for sample analysis and formaldehyde degradation test were also the same as in Example 1.

The test results of the ultraviolet-visible diffuse reflection absorption spectroscopy showed that the absorbance at the wavelength of 760 nm was 0.67, the absorbance at the wavelength of 800 nm was 0.69 and the absorbance at the wavelength of 850 nm was 0.72.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 41.3%. After fitting, the peaks corresponding to $Ti^{4+}$ and $Ti^{3+}$ were obtained, wherein the content of ($Ti^{3+}/Ti_{total}$) was 42.6%, the content of $Ti^{4+}$ ($Ti^{4+}/Ti_{total}$) was 57.4%, the ratio of the surface content of $Ti^{3+}$ to the surface content of $Ti^{4+}$ was 0.742, the mass loss percentage measured by thermogravimetric analysis at 300 °C was 1.13%, the surface content of hydroxyl measured by infrared spectroscopy was 0.47 mmol/g, the particle size distribution range and the average particle size measured by the SEM method were 20-70 nm and 40.3 nm respectively, and the loss rate of the surface content of $Ti^{3+}$ after 10 times of cyclic washing with deionized water at 100 °C was 0.53%.

The TEM-EELS test results showed that $Ti^{3+}$ was mainly distributed within about 3 nm from the surface of the titanium dioxide particles, and the presence of $Ti^{3+}$ was not found inside the particles.

The formaldehyde concentration test showed that the removal rate after 90 min was 87.4%.

**Example 3**

The same conditions were used, except that 0.3g of sodium fluoride was added to the first feedstock mixture of Example 1, and the resultant was used as the first feedstock mixture of this example. The methods for sample analysis and formaldehyde degradation test were also the same as in Example 1.

The test results of the ultraviolet-visible diffuse reflection absorption spectroscopy showed that the absorbance at the wavelength of 760 nm was 0.68, the absorbance at the wavelength of 800 nm was 0.69 and the absorbance at the wavelength of 850 nm was 0.71.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 44.2\%$. After fitting, the peaks corresponding to $Ti^{4+}$ and $Ti^{3+}$ were obtained, wherein the content of ($Ti^{3+}/Ti_{total}$) was 46.1%, the content of $Ti^{4+}$ ($Ti^{4+}/Ti_{total}$) was 53.9%, and the ratio of the surface content of $Ti^{3+}$ to the surface content of $Ti^{4+}$ was 0.855; fluorine element was 1.20%, and was doped in place of oxygen. The mass loss percentage measured by thermogravimetric analysis at 300 °C was 1.52%, the surface content of hydroxyl measured by infrared spectroscopy was 0.33 mmol/g, the particle size distribution range and the average particle size measured by the SEM method were 20-70 nm and 39.4 nm respectively, and the loss rate of the surface content of $Ti^{3+}$ after 10 times of cyclic washing with deionized water at 100 °C was 0.46%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate after 90 min was 92.2%.

## Example 4

The same conditions were used, except that, after the addition of titanium dioxide in Example 1, 0.7g of sodium fluoride were added, and the resultant was used as the first feedstock mixture of this example. The methods for sample analysis and formaldehyde degradation test were also the same as in Example 1.

The test results of the ultraviolet-visible diffuse reflection absorption spectroscopy showed that the absorbance at the wavelength of 760 nm was 0.76, the absorbance at the wavelength of 800 nm was 0.77, and the absorbance at the wavelength of 850 nm was 0.79.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 49.6\%$. After fitting, the peaks corresponding to $Ti^{4+}$ and $Ti^{3+}$ were obtained, wherein the content of ($Ti^{3+}/Ti_{total}$) was 57.1%, the content of $Ti^{4+}$ ($Ti^{4+}/Ti_{total}$) was 42.9%, and the ratio of the surface content of $Ti^{3+}$ to the surface content of $Ti^{4+}$ was 1.331; fluorine element was 1.39%, and was doped in place of oxygen. The mass loss percentage measured by thermogravimetric analysis at 300 °C was 1.71%, the surface content of hydroxyl measured by infrared spectroscopy was 0.41 mmol/g, the particle size distribution range and the average particle size measured by the SEM method were 20-70 nm and 39.1 nm respectively, and the loss rate of the surface content of $Ti^{3+}$ after 10 times of cyclic washing with deionized water at 100 °C was 0.57%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate after 90 min was 95.3%.

## Example 5

The same conditions were used, except that sodium fluoride used in Example 4 was replaced with ammonium fluoride, and the resultant was used as the first feedstock mixture in this example. The methods for sample analysis and formaldehyde degradation test were also the same as in Example 1.

The test results of the ultraviolet-visible diffuse reflection absorption spectroscopy showed that the absorbance at the wavelength of 760 nm was 0.77, the absorbance at the wavelength of 800 nm was 0.80 and the absorbance at the wavelength of 850 nm was 0.82.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 47.5\%$. After fitting, the peaks corresponding to $Ti^{4+}$ and $Ti^{3+}$ were obtained, wherein the content of ($Ti^{3+}/Ti_{total}$) was 48.2%, the content of $Ti^{4+}$ ($Ti^{4+}/Ti_{total}$) was 51.8%, and the ratio of the surface content of $Ti^{3+}$ to the surface content of $Ti^{4+}$ was 0.93; fluorine element was 0.53% and was doped in place of oxygen; the content of nitrogen element was 0.62%, the N-doping included lattice doping and interstitial doping, and the proportion of the lattice doping and the interstitial doping in the total doping was 49.6% and 50.4% respectively. The mass loss percentage measured by thermogravimetric analysis at 300 °C was 1.48%, the surface content of hydroxyl measured by infrared spectroscopy was 0.34 mmol/g, the particle size distribution range and the average particle size measured by the SEM method were 20-70 nm and 39.7 nm respectively, and the loss rate of the surface content of $Ti^{3+}$ after 10 times of cyclic washing with deionized water at 100 °C was 0.02%.

The TEM-EELS test results showed that fluorine, nitrogen and $Ti^{3+}$ were mainly distributed within about 3 nm from the surface of the titanium dioxide particles, and the presence of fluorine, nitrogen and $Ti^{3+}$ was not found inside the particles.

The formaldehyde concentration test showed that the removal rate was 98.4% after 90 min.

## Example 6

The same conditions were used, except that, after the addition of titanium dioxide in Example 2, 0.7g of ammonium fluoride were added, and the resultant was used as the first feedstock mixture of this example. The methods for sample analysis and formaldehyde degradation test were also the same as in Example 1.

The test results of the ultraviolet-visible diffuse reflection absorption spectroscopy showed that the absorbance at the wavelength of 760 nm was 0.83, the absorbance at the wavelength of 800 nm was 0.85 and the absorbance at the wavelength of 850 nm was 0.86.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 51.8\%$. After fitting, the peaks corresponding to $Ti^{4+}$ and $Ti^{3+}$ were obtained, wherein the content of ($Ti^{3+}/Ti_{total}$) was 52.1%, the content of $Ti^{4+}$ ($Ti^{4+}/Ti_{total}$) was 47.9%, and the ratio of the surface content of $Ti^{3+}$ to the surface content of $Ti^{4+}$ was 1.09; fluorine element was 0.64% and was doped in place of oxygen; the content of nitrogen element was 0.81%, the N-doping included lattice doping and interstitial doping, and the proportion of the lattice doping and the interstitial doping in the total doping was 54.2% and 45.8% respectively. The mass loss percentage measured by thermogravimetric analysis at 300 °C was 1.69%, the surface content of hydroxyl measured by infrared spectroscopy was 0.41 mmol/g, the particle size distribution range and the average particle size measured by the SEM method were 20-70 nm and 40.5 nm respectively, and the loss rate of the surface content of $Ti^{3+}$ after 10 times of cyclic washing with deionized water at 100 °C was 0.09%.

The TEM-EELS test results showed that fluorine, nitrogen and $Ti^{3+}$ were mainly distributed within about 3 nm from the surface of the titanium dioxide particles, and the presence of fluorine, nitrogen and $Ti^{3+}$ was not found inside the particles.

The formaldehyde concentration test showed that the removal rate after 90 min was 99.1%.

## Example 7

The same conditions were used, except that the duration of irradiation of the first feedstock mixture in Example 3 was changed to 0.5 hour. The methods for sample analysis and formaldehyde degradation test were also the same as in Example 1.

The test results of the ultraviolet-visible diffuse reflection absorption spectroscopy showed that the absorbance at the wavelength of 760 nm was 0.54, the absorbance at the wavelength of 800 nm was 0.56 and the absorbance at the wavelength of 850 nm was 0.59.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 24.1\%$. After fitting, the peaks corresponding to $Ti^{4+}$ and $Ti^{3+}$ were obtained, wherein the content of $Ti^{3+}$ ($Ti^{3+}/Ti_{total}$) was 30.8%, the content of $Ti^{4+}$ ($Ti^{4+}/Ti_{total}$) was 69.2%, and the ratio of the surface content of $Ti^{3+}$ to the surface content of $Ti^{4+}$ was 0.445; fluorine content was 0.22%, and was doped in place of oxygen. The mass loss percentage measured by thermogravimetric analysis at 300 °C was 0.48%, the surface content of hydroxyl measured by infrared spectroscopy was 0.31 mmol/g, the particle size distribution range and the average particle size measured by the SEM method were 20-70 nm and 39.1 nm respectively, and the loss rate of the surface content of $Ti^{3+}$ after 10 times of cyclic washing with deionized water at 100 °C was 0.32%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate after 90 min was 76.3%.

## Example 8

The same conditions were used, except that the duration of irradiation of the first feedstock mixture in Example 3 was changed to 120 hour. The methods for sample analysis and formaldehyde degradation test were also the same as in Example 1.

The test results of the ultraviolet-visible diffuse reflection absorption spectroscopy showed that the absorbance at the wavelength of 760 nm was 0.52, the absorbance at the wavelength of 800 nm was 0.53 and the absorbance at the wavelength of 850 nm was 0.55.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 22.9\%$. After fitting, the peaks corresponding to $Ti^{4+}$ and $Ti^{3+}$ were obtained, wherein the content of ($Ti^{3+}/Ti_{total}$) was 33.4%, the content of $Ti^{4+}$ ($Ti^{4+}/Ti_{total}$) was 66.6%, and the ratio of the surface content of $Ti^{3+}$ to the surface content of $Ti^{4+}$ was 0.502; fluorine element was 0.33%, and was doped in place of oxygen. The mass loss percentage measured by thermogravimetric analysis at 300 °C was 0.71%, the surface content of hydroxyl measured by infrared spectroscopy was 0.36 mmol/g, the particle size distribution range and the average particle size measured by the SEM method were 20-70 nm and 38.7 nm respectively, and the loss rate of the surface content of $Ti^{3+}$ after 10 times of cyclic washing with deionized water at 100 °C was 0.56%.

The TEM-EELS test results showed that fluor-

ine and Ti$^{3+}$ were mainly distributed within about 3 nm from the surface of the titanium dioxide particles, and the presence of fluorine and Ti$^{3+}$ was not found inside the particles.

The formaldehyde concentration test showed that the removal rate was 80.6% after 90 min.

**Example 9**

The same conditions were used, except that the nano titanium dioxide in Example 3 was replaced with particles having a particle size of 10 to 40 nm and an average particle size of 20.2 nm. The methods for sample analysis and formaldehyde degradation test were also the same as in Example 1.

The test results of the ultraviolet-visible diffuse reflection absorption spectroscopy showed that the absorbance at the wavelength of 760 nm was 0.58, the absorbance at the wavelength of 800 nm was 0.61 and the absorbance at the wavelength of 850 nm was 0.63.

XPS peaks of oxygen and titanium elements in the product were analyzed. Fitting was performed based on the peak shapes, the peaks corresponding to the lattice oxygen (O$_L$), oxygen vacancies (Ov), and adsorbed oxygen (O$_a$), respectively, were obtained, a calculation showed O$_V$/O$_{total}$ = 26.4%, and, before the reaction, O$_V$/O$_{total}$ = 2.4%. After fitting, the peaks corresponding to Ti$^{4+}$ and Ti$^{3+}$ are obtained, wherein the content of (Ti$^{3+}$/Ti$_{total}$) was 47.8%, the content of Ti$^{4+}$ (Ti$^{4+}$/Ti$_{total}$) was 52.2%, the ratio of the surface content of Ti$^{3+}$ to the surface content of Ti$^{4+}$ was 0.916, and the content of Ti$^{3+}$ before the reaction was 0; fluorine element was 1.17%, and was doped in place of oxygen. The mass loss percentage measured by thermogravimetric analysis at 300 °C was 1.36%, the surface content of hydroxyl measured by infrared spectroscopy was 0.34 mmol/g, the particle size distribution range and the average particle size measured by the SEM method were 10-40 nm and 20.4 nm respectively, and the loss rate of the surface content of Ti$^{3+}$ after 10 times of cyclic washing with deionized water at 100 °C was 0.91%.

The TEM-EELS test results showed that fluorine and Ti$^{3+}$ were mainly distributed within about 3 nm from the surface of the titanium dioxide particles, and the presence of fluorine and Ti$^{3+}$ was not found inside the particles.

The formaldehyde concentration test showed that the removal rate was 77.6% after 90 min.

**Example 10**

The same conditions were used, except that the nano titanium dioxide in Example 3 was replaced with particles having a particle size of 60 to 100 nm and an average particle size of 81.4 nm. The methods for sample analysis and formaldehyde degradation test were also the same as in Example 1.

The test results of the ultraviolet-visible diffuse reflection absorption spectroscopy showed that the absorbance at the wavelength of 760 nm was 0.56, the absorbance at the wavelength of 800 nm was 0.58 and the absorbance at the wavelength of 850 nm was 0.59.

XPS peaks of oxygen and titanium elements in the product were analyzed. Fitting was performed based on the peak shapes, the peaks corresponding to the lattice oxygen (O$_L$), oxygen vacancies (Ov), and adsorbed oxygen (O$_a$), respectively, were obtained, a calculation showed O$_V$/O$_{total}$ = 30.2%, and, before the reaction, O$_V$/O$_{total}$ = 2.3%. After fitting, the peaks corresponding to Ti$^{4+}$ and Ti$^{3+}$ were obtained, wherein the content of Ti$^{3+}$ (Ti$^{3+}$/Ti$_{total}$) was 46.9%, the content of Ti$^{4+}$ (Ti$^{4+}$/Ti$_{total}$) was 53.1%, and the ratio of the surface content of Ti$^{3+}$ to the surface content of Ti$^{4+}$ was 0.883; fluorine element was 1.22%, and was doped in place of oxygen. The mass loss percentage measured by thermogravimetric analysis at 300 °C was 1.29%, the surface content of hydroxyl measured by infrared spectroscopy was 0.31 mmol/g, the particle size distribution range and the average particle size measured by the SEM method were 60-100 nm and 81.1 nm respectively, and the loss rate of the surface content of Ti$^{3+}$ after 10 times of cyclic washing with deionized water at 100 °C was 0.88%.

The TEM-EELS test results showed that fluorine and Ti$^{3+}$ were mainly distributed within about 3 nm from the surface of the titanium dioxide particles, and the presence of fluorine and Ti$^{3+}$ was not found inside the particles.

The formaldehyde concentration test showed that the removal rate was 79.8% after 90 min.

**Example 11**

The same conditions were used, except that the nano titanium dioxide in Example 3 was replaced with tetragonal ZrO$_2$ having a particle size of 20 to 45 nm and an average particle size of 34.6 nm. The methods for sample analysis and formaldehyde degradation test were also the same as in Example 1.

The test results of the ultraviolet-visible diffuse reflection absorption spectroscopy showed that the absorbance at the wavelength of 760 nm was 0.43, the absorbance at the wavelength of 800 nm was 0.44 and the absorbance at the wavelength of 850 nm was 0.45.

Based on literature information, XPS analysis was employed to determine the elemental composition and valence states of the product, which consisted of Zr, O, and F elements. Analysis of the position and line-shape symmetry of the Zr 3d peak indicated that zirconium was existing in two valence states: Zr$^{3+}$ and Zr$^{4+}$. After fitting, peaks corresponding to Zr$^{3+}$ and Zr$^{4+}$ were obtained, the Zr$^{3+}$/Zr$_{total}$ was 48.9%, and, before the reaction, the Zr$^{3+}$/Zr$_{total}$ was 6.8%. The XPS spectrum of the O 1s electron energy level exhibited an asymmetric Gaussian line shape, indicating a superposition of multiple oxygen bonding states. After fitting, peaks corresponding to the adsorbed oxygen (O$_a$), oxygen vacan-

cies (Ov), and lattice oxygen ($O_L$) were obtained, the $O_V/O_{total}$ value was 40.2%, and, before the reaction of $ZrO_2$, the $O_V/O_{total}$ value was 8.2%. The content of fluorine element was 0.72%. The mass loss percentage measured by thermogravimetric analysis at 300 °C was 0.88%, and the particle size distribution range and the average particle size measured by the SEM method were 20-45 nm and 33.8 nm respectively.

The TEM-EELS test results showed that $Zr^{3+}$ and fluorine were mainly distributed within about 3 nm from the surface of $ZrO_2$ particles, and no fluorine was found inside the particles.

The formaldehyde concentration test showed that the removal rate was 82.4% after 90 min.

**Example 12**

The same conditions were used, except that the nano titanium dioxide in Example 3 was replaced with hexagonal wurtzite-type ZnO having a particle size of 25 to 65 nm and an average particle size of 32.5 nm. The methods for sample analysis and formaldehyde degradation test were also the same as in Example 1.

The test results of the ultraviolet-visible diffuse reflection absorption spectroscopy showed that the absorbance at the wavelength of 760 nm was 0.52, the absorbance at the wavelength of 800 nm was 0.54 and the absorbance at the wavelength of 850 nm was 0.56.

Based on literature information, XPS analysis was employed to determine the elemental composition and valence states of the product, which consisted of Zn, O, and F elements. Analysis of the position and line-shape symmetry of the Zn 2p peak indicated that the zinc element was existing simply as $Zn^{2+}$. The XPS spectrum of the O 1s electron energy level exhibited an asymmetric Gaussian line shape, indicating a superposition of multiple oxygen bonding states. After fitting, peaks corresponding to the adsorbed oxygen ($O_a$), oxygen vacancies (Ov), and lattice oxygen ($O_L$) were obtained, the $O_V/O_{total}$ value was 18.2%, and, before the reaction of ZnO, the $O_V/O_{total}$ value was 4.2%. The content of fluorine element was 0.68%. The mass loss percentage measured by thermogravimetric analysis at 300 °C was 0.79%, and the particle size distribution range and the average particle size measured by the SEM method were 25-65 nm and 32.8 nm respectively.

The TEM-EELS test results showed that fluorine was mainly distributed within about 3 nm from the surface of ZnO particles, and no fluorine was found inside the particles.

The formaldehyde concentration test showed that the removal rate was 79.6% after 90 min.

**Example 13**

The same conditions were used, except that the nano titanium dioxide in Example 3 was replaced with monoclinic $BiVO_4$ having a particle size of 20 to 70 nm and an average particle size of 31.2 nm. The methods for sample analysis and formaldehyde degradation test were also the same as in Example 1.

The test results of the ultraviolet-visible diffuse reflection absorption spectroscopy showed that the absorbance at the wavelength of 760 nm was 0.51, the absorbance at the wavelength of 800 nm was 0.52 and the absorbance at the wavelength of 850 nm was 0.54.

Based on literature information, XPS analysis was employed to determine the elemental composition and valence states of the product, which consisted of Bi, V, O and F elements. The positions of the two peaks of Bi 4f indicated that bismuth was existing in the chemical state of $Bi^{3+}$. Peak fitting was carried out for O 1s, V 2p and F 1s based on the peak shapes in conjunction with literatures. After fitting the O 1s peak, the peaks corresponding to the adsorbed oxygen ($O_a$), oxygen vacancies (Ov), and lattice oxygen ($O_L$), respectively, were obtained, $O_{total} = O_a + Ov + O_L$, $O_V/O_{total} = 28.3\%$, and, before the reaction of $BiVO_4$, $O_V/O_{total} = 5.1\%$. After fitting, peaks corresponding to $V^{4+}$ and $V^{5+}$ were obtained, wherein the content of $V^{4+}$ was 30.3%, higher than the value before the reaction of $BiVO_4$ by 2.4%. For $BiVO_4$, the presence of oxygen vacancies and $V^{4+}$ can improve the light absorption capability to some extent. The fluorine content was 0.80%. The mass loss percentage measured by thermogravimetric analysis at 300 °C was 0.81%, and the particle size distribution range and the average particle size measured by the SEM method were 20-70 nm and 31.5 nm, respectively.

TEM-EELS results showed that fluorine and $V^{4+}$ were mainly distributed within about 3 nm from the surface of $BiVO_4$ particles, and the presence of fluorine and $V^{4+}$ was not found inside the particles.

The formaldehyde concentration test showed that the removal rate was 83.5% after 90 min.

**Example 14**

The same conditions were used, except that the nano titanium dioxide in Example 3 was replaced with monoclinic $WO_3$ having a particle size of 20-80 nm and an average particle size of 51.2 nm. The methods for sample analysis and formaldehyde degradation test were also the same as in Example 1.

The test results of the ultraviolet-visible diffuse reflection absorption spectroscopy showed that the absorbance at the wavelength of 760 nm was 0.42, the absorbance at the wavelength of 800 nm was 0.44 and the absorbance at the wavelength of 850 nm was 0.46.

XPS peaks of nitrogen and tungsten elements in the product were analyzed. After fitting based on the peak shapes, peaks corresponding to the adsorbed oxygen ($O_a$), oxygen vacancies (Ov), and lattice oxygen ($O_L$), respectively, were obtained, $O_{total} = O_a + Ov + O_L$, $O_V/O_{total} = 25.8\%$, and, before the reaction of $WO_3$, $O_V/O_{total} = 5.6\%$. After fitting, peaks corresponding to $W^{5+}$ and $W^{6+}$ were obtained, and the content of $W^{5+}$

before and after reaction was respectively 4.1 % and 49.6%; fluorine element was 0.69%. The mass loss percentage measured by thermogravimetric analysis at 300 °C was 0.79%. The particle size distribution range and the average particle size measured by the SEM method were respectively 20-80 nm and 50.5 nm.

The TEM-EELS test results showed that $W^{5+}$ and fluorine were mainly distributed within about 3 nm from the surface of tungsten oxide particles, and the presence of fluorine and $W^{5+}$ was not found inside the particles.

The formaldehyde concentration test showed that the removal rate after 90 min was 76.5%.

**Example 15**

The same conditions were used, except that the nano titanium dioxide in Example 3 was replaced with $SnO_2$ having a rutile structure with a particle size of 20 to 50 nm and an average particle size of 31.2 nm. The methods for sample analysis and formaldehyde degradation test were also the same as in Example 1.

The test results of the ultraviolet-visible diffuse reflection absorption spectroscopy showed that the absorbance at the wavelength of 760 nm was 0.47, the absorbance at the wavelength of 800 nm was 0.49 and the absorbance at the wavelength of 850 nm was 0.51.

XPS analysis was employed to determine the elemental composition and valence states of the product, which consisted of Sn, O and F elements. The positions of the two peaks of Sn 3d (487.5, 495.6 eV) indicated that tin was existing in the chemical state of $Sn^{4+}$. Peak fitting was carried out for O 1s and F 1s based on the peak shapes in conjunction with literatures. After fitting the O 1s peak, the peaks corresponding to the adsorbed oxygen ($O_a$), oxygen vacancies ($O_V$), and lattice oxygen ($O_L$), respectively, were obtained, $O_{total} = O_a + O_V + O_L$, $O_V/O_{total} = 23.6\%$, and, before the reaction of $SnO_2$, $O_V/O_{total} = 3.1\%$; fluorine element was 0.91% and was doped in place of oxygen. The mass loss percentage measured by thermogravimetric analysis at 300 °C was 0.74%, and the particle size distribution range and the average particle size measured by the SEM method were 20-50 nm and 31.5 nm respectively.

TEM-EELS results showed that fluorine was mainly distributed within about 3 nm from the surface of $SnO_2$ particles, and the presence of fluorine was not found inside the particles.

The formaldehyde concentration test showed that the removal rate was 84.3% after 90 min.

**Example 16**

The same conditions were used, except that the aeration in Example 3 was eliminated. The methods for sample analysis and formaldehyde degradation test were also the same as in Example 1.

The test results of the ultraviolet-visible diffuse reflection absorption spectroscopy showed that the absorbance at the wavelength of 760 nm was 0.30, the absorbance at the wavelength of 800 nm was 0.32 and the absorbance at the wavelength of 850 nm was 0.34.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 13.2\%$. After fitting, the peaks corresponding to $Ti^{4+}$ and $Ti^{3+}$ were obtained, wherein ($Ti^{3+}/Ti_{total}$) was 26.4%, the content of $Ti^{4+}$ ($Ti^{4+}/Ti_{total}$) was 73.6%, and the ratio of the surface content of $Ti^{3+}$ to the surface content of $Ti^{4+}$ was 0.359; fluorine element was 0.69% and was doped in place of oxygen. The mass loss percentage measured by thermogravimetric analysis at 300 °C was 0.76%, the surface content of hydroxyl measured by infrared spectroscopy was 0.25 mmol/g, the particle size distribution range and the average particle size measured by the SEM method were 20-70 nm and 38.7 nm respectively, and the loss rate of the surface content of $Ti^{3+}$ after 10 times of cyclic washing with deionized water at 100 °C was 0.75%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate was 71.8% after 90 min.

**Example 17**

The same conditions were used, except that the dried product in Example 3 was baked at 250 °C for 1 hour. The methods for sample analysis and formaldehyde degradation test were also the same as in Example 1.

The test results of the ultraviolet-visible diffuse reflection absorption spectroscopy showed that the absorbance at the wavelength of 760 nm was 0.27, the absorbance at the wavelength of 800 nm was 0.28 and the absorbance at the wavelength of 850 nm was 0.31.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 10.3\%$. After fitting, the peaks corresponding to $Ti^{4+}$ and $Ti^{3+}$ were obtained, wherein the value of ($Ti^{3+}/Ti_{total}$) was 22.4%, the content of $Ti^{4+}$ ($Ti^{4+}/Ti_{total}$) was 77.6%, and the ratio of the surface content of $Ti^{3+}$ to the surface content of $Ti^{4+}$ was 0.289; fluorine element was 0.16% and was doped in place of oxygen. The mass loss percentage measured by thermogravimetric analysis at 300 °C was 0.22%, the surface content of hydroxyl measured by infrared spectroscopy was 0.16 mmol/g, the particle size distribution range and the average particle size measured by the SEM method were 20-70 nm and 39.4 nm respectively, and the loss rate of the surface content of $Ti^{3+}$ after 10 times of cyclic washing with deionized water at 100 °C was 0.88%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate was 69.2% after 90 min.

## Example 18

The same conditions were used, except that the first feedstock mixture in Example 3 was irradiated with ordinary ultraviolet light (power: 2W) of 248 nm and vacuum ultraviolet light of 193 nm at the same time. The vacuum ultraviolet light of 193 nm was applied using the same light source and irradiation method as in Example 3. The ultraviolet light of 248 nm was applied to the first feedstock mixture from the side of the reactor through quartz glass by using a CL7750 light source of OptoSystems, the light generating medium of CL7750 was KrF, the size and the shape of the output ultraviolet light spot were adjusted by a beam expander to be matched with the side of the reaction vessel, a light beam analyzer (PM 10X laser power meter of Coherent Company, USA) was used for testing and adjusting the output light spot power, the light spot power applied to the solution was adjusted to be 2W, so that the irradiation doses of both lights of 248 nm and 193 nm were 2W/g.

The test results of the ultraviolet-visible diffuse reflection absorption spectroscopy showed that the absorbance at the wavelength of 760 nm was 0.59, the absorbance at the wavelength of 800 nm was 0.62 and the absorbance at the wavelength of 850 nm was 0.64.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 27.4\%$. After fitting, the peaks corresponding to $Ti^{4+}$ and $Ti^{3+}$ were obtained, ($Ti^{3+}/Ti_{total}$) was 45.6%, the content of $Ti^{4+}$ ($Ti^{4+}/Ti_{total}$) was 54.4%, and the ratio of the surface content of $Ti^{3+}$ to the surface content of $Ti^{4+}$ was 0.838; fluorine element was 0.75% and was doped in place of oxygen. The mass loss percentage measured by thermogravimetric analysis at 300 °C was 1.13%, the surface content of hydroxyl measured by infrared spectroscopy was 0.23 mmol/g, the particle size distribution range and the average particle size measured by the SEM method were 20-70 nm and 39.8 nm respectively, and the loss rate of the surface content of $Ti^{3+}$ after 10 times of cyclic washing with deionized water at 100 °C was 0.71%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate was 84.4% after 90 min.

## Example 19

The same conditions were used, except that the first feedstock mixture in Example 3 was irradiated with ordinary ultraviolet light of 248 nm (total power 40W) and vacuum ultraviolet light of 193 nm at the same time. The vacuum ultraviolet light of 193 nm was applied using the same light source and irradiation method as in Example 3. The ultraviolet light of 248 nm was applied to the first feedstock mixture from two sides of the reactor through quartz glass by using two CL7750 light sources of OptoSystems, the light generating medium of CL7750 was KrF, the size and the shape of the output ultraviolet light spot were adjusted by a beam expander to be matched with the side of the reaction vessel, a light beam analyzer (PM 10X laser power meter of Coherent Company, USA) was used for testing and adjusting the output light spot power, the output light spot power of each spot acted on the solution was adjusted to be 20W, the total power was 40W, so that the irradiation doses of the lights of 248 nm and 193 nm were respectively 40W/g and 2W/g.

The test results of the ultraviolet-visible diffuse reflection absorption spectroscopy showed that the absorbance at the wavelength of 760 nm was 0.51, the absorbance at the wavelength of 800 nm was 0.53 and the absorbance at the wavelength of 850 nm was 0.54.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 22.1\%$. After fitting, the peaks corresponding to $Ti^{4+}$ and $Ti^{3+}$ were obtained, ($Ti^{3+}/Ti_{total}$) was 43.2%, the content of $Ti^{4+}$ ($Ti^{4+}/Ti_{total}$) was 56.8%, and the ratio of the surface content of $Ti^{3+}$ to the surface content of $Ti^{4+}$ was 0.761; fluorine element was 0.58% and was doped in place of oxygen. The mass loss percentage measured by thermogravimetric analysis at 300 °C was 0.97%, the surface content of hydroxyl measured by infrared spectroscopy was 0.19 mmol/g, the particle size distribution range and the average particle size measured by the SEM method were 20-70 nm and 40.4 nm respectively, and the loss rate of the surface content of $Ti^{3+}$ after 10 times of cyclic washing with deionized water at 100 °C was 0.64%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate was 81.6% after 90 min.

## Example 20

The same conditions were used, except that the power of ordinary ultraviolet light of 248 nm from the two CL7750 light sources in Example 3 was adjusted to 35W, so that the total power was 70 W, and the irradiation doses of the lights of 248 nm and 193 nm were respectively 70W/g and 2W/g.

The test results of the ultraviolet-visible diffuse reflection absorption spectroscopy showed that the absorbance at the wavelength of 760 nm was 0.46, the absorbance at the wavelength of 800 nm was 0.47 and the absorbance at the wavelength of 850 nm was 0.49.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 19.4%. After fitting, the peaks corresponding to $Ti^{4+}$ and $Ti^{3+}$ were obtained, wherein ($Ti^{3+}/Ti_{total}$) was 39.7%, the content of $Ti^{4+}$ ($Ti^{4+}/Ti_{total}$) was 60.3%, and the ratio of the surface content of $Ti^{3+}$ to the surface content of $Ti^{4+}$ was 0.658; fluorine element was 0.52% and was doped in place of oxygen. The mass loss percentage measured by thermogravimetric analysis at 300 °C was 0.75%, the surface content of hydroxyl measured by infrared spectroscopy was 0.16 mmol/g, the particle size distribution range and the average particle size measured by the SEM method were 20-70 nm and 40.7 nm respectively, and the loss rate of the surface content of $Ti^{3+}$ after 10 times of cyclic washing with deionized water at 100 °C was 0.60%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate after 90 min was 77.5%.

## Example 21

The same conditions were used, except that the mass of sodium fluoride in Example 9 was changed to 2.0 g, and the duration of irradiation was extended to 64 hours. The methods for sample analysis and formaldehyde degradation test were also the same as in Example 1.

The test results of the ultraviolet-visible diffuse reflection absorption spectroscopy showed that the absorbance at the wavelength of 760 nm was 0.24, the absorbance at the wavelength of 800 nm was 0.26 and the absorbance at the wavelength of 850 nm was 0.27.

XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 12.6%. After fitting, the peaks corresponding to $Ti^{4+}$ and $Ti^{3+}$ were obtained, wherein the content of $Ti^{3+}$ ($Ti^{3+}/Ti_{total}$) was 6.5%, the content of $Ti^{4+}$ ($Ti^{4+}/Ti_{total}$) was 93.5%, and the ratio of the surface content of $Ti^{3+}$ to the surface content of $Ti^{4+}$ was 0.070; fluorine element was 19.8%, the fluorine doping included lattice doping and interstitial doping, and the proportion of the lattice doping and the interstitial doping in the total doping was 85.3% and 14.7% respectively. The mass loss percentage measured by thermogravimetric analysis at 300 °C was 0.61%, the surface content of hydroxyl measured by infrared spectroscopy was 0.24 mmol/g, the particle size distribution range and the average particle size measured by the SEM method were 10-40 nm and 19.1 nm respectively, and the loss rate of the surface content of $Ti^{3+}$ after 10 times of cyclic washing with deionized water at 100 °C was 0.62%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate was 68.9% after 90 min.

## Example 22

The same conditions were used, except that the mass of sodium fluoride in Example 3 was changed to 0.03g and the duration of irradiation was changed to 8 minutes. The methods for sample analysis and formaldehyde degradation test were also the same as in Example 1.

The test results of the ultraviolet-visible diffuse reflection absorption spectroscopy showed that the absorbance at the wavelength of 760 nm was 0.23, the absorbance at the wavelength of 800 nm was 0.25 and the absorbance at the wavelength of 850 nm was 0.26.

XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 13.2%. After fitting, the peaks corresponding to $Ti^{4+}$ and $Ti^{3+}$ were obtained, wherein the content of $Ti^{3+}$ ($Ti^{3+}/Ti_{total}$) was 5.5%, the content of $Ti^{4+}$ ($Ti^{4+}/Ti_{total}$) was 94.5%, and the ratio of the surface content of $Ti^{3+}$ to the surface content of $Ti^{4+}$ was 0.058; fluorine content was 0.005% and was doped in place of oxygen. The mass loss percentage measured by thermogravimetric analysis at 300 °C was 0.32%, the surface content of hydroxyl measured by infrared spectroscopy was 0.05 mmol/g, the particle size distribution range and the average particle size measured by the SEM method were 20-70 nm and 40.1 nm respectively, and the loss rate of the surface content of $Ti^{3+}$ after 10 times of cyclic washing with deionized water at 100 °C was 0.45%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate was 65.4% after 90 min.

## Example 23

The same conditions were used, except that the duration of irradiation in Example 22 was changed to 1 hour. The methods for sample analysis and formaldehyde degradation test were also the same as in Example 1.

The test results of the ultraviolet-visible diffuse reflection absorption spectroscopy showed that the absorbance at the wavelength of 760 nm was 0.49, the absorbance at the wavelength of 800 nm was 0.51, and the absorbance at the wavelength of 850 nm was 0.53.

XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 22.3%. After fitting, the peaks corresponding to $Ti^{4+}$ and $Ti^{3+}$ were obtained, wherein the content of $Ti^{3+}$ ($Ti^{3+}/Ti_{total}$) was 25.3%, the content of $Ti^{4+}$ ($Ti^{4+}/Ti_{total}$) was 74.7%, and the ratio of the surface content of $Ti^{3+}$ to the surface content of $Ti^{4+}$ was 0.339; fluorine element was 0.05% and was doped in place of oxygen. The mass loss percentage measured by thermogravimetric analysis at 300 °C was 1.25%, the surface content of hydroxyl measured by infrared spectroscopy was 0.22 mmol/g, the particle size distribution range and the average particle size measured by the SEM method were 20-70 nm and 39.9 nm respectively, and the loss rate of the surface content of $Ti^{3+}$ after 10 times of cyclic washing with deionized water at 100 °C was 1.25%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate after 90 min was 79.5%.

## Example 24

The same conditions were used, except that the duration of irradiation in Example 21 was changed to 42 hours. The methods for sample analysis and formaldehyde degradation test were also the same as in Example 1.

The test results of the ultraviolet-visible diffuse reflection absorption spectroscopy showed that the absorbance at the wavelength of 760 nm was 0.52, the absorbance at the wavelength of 800 nm was 0.54 and the absorbance at the wavelength of 850 nm was 0.55.

XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 20.5%. After fitting, the peaks corresponding to $Ti^{4+}$ and $Ti^{3+}$ were obtained, wherein the content of $Ti^{3+}$ ($Ti^{3+}/Ti_{total}$) was 24.5%, the content of $Ti^{4+}$ ($Ti^{4+}/Ti_{total}$) was 75.5%, and the ratio of the surface content of $Ti^{3+}$ to the surface content of $Ti^{4+}$ was 0.325; fluorine element was 11.7%, the fluorine doping included lattice doping and interstitial doping, and the proportion of the lattice doping and the interstitial doping in the total doping was 90.4% and 9.6% respectively. The mass loss percentage measured by thermogravimetric analysis at 300 °C was 1.45%, the surface content of hydroxyl measured by infrared spectroscopy was 0.38 mmol/g, the particle size distribution range and the average particle size measured by the SEM method were respectively 10-40 nm and 18.8 nm, and the loss rate of the surface content of $Ti^{3+}$ after 10 times of cyclic washing with deionized water at 100 °C was 0.21%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate was 80.2% after 90 min.

## Example 25

The same conditions were used, except that the duration of irradiation in Example 21 was changed to 36 hours. The methods for sample analysis and formaldehyde degradation test were also the same as in Example 1.

The test results of the ultraviolet-visible diffuse reflection absorption spectroscopy showed that the absorbance at the wavelength of 760 nm was 0.67, the absorbance at the wavelength of 800 nm was 0.69 and the absorbance at the wavelength of 850 nm was 0.71.

XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 24.6%. After fitting, the peaks corresponding to $Ti^{4+}$ and $Ti^{3+}$ were obtained, wherein the content of $Ti^{3+}$ ($Ti^{3+}/Ti_{total}$) was 29.6%, the content of $Ti^{4+}$ ($Ti^{4+}/Ti_{total}$) was 70.4%, and the ratio of the surface content of $Ti^{3+}$ to the surface content of $Ti^{4+}$ was 0.42; fluorine element was 8.1%, the fluorine doping included lattice doping and interstitial doping, and the proportion of the lattice doping and the interstitial doping in the total doping was 94.6% and 5.4% respectively. The mass loss percentage measured by thermogravimetric analysis at 300 °C was 1.12%, the surface content of hydroxyl measured by infrared spectroscopy was 0.34 mmol/g, the particle size distribution range and the average particle size measured by the SEM method were respectively 10-40 nm and 20.4nm, and the loss rate of the surface content of $Ti^{3+}$ after 10 times of cyclic washing with deionized water at 100 °C was 0.33%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate was 81.4% after 90 min.

## Example 26

The same conditions were used, except that the duration of irradiation in Example 22 was changed to 5 hours. The methods for sample analysis and formaldehyde degradation test were also the same as in Example 1.

The test results of the ultraviolet-visible diffuse reflection absorption spectroscopy showed that the absorbance at the wavelength of 760 nm was 0.61, the absorbance at the wavelength of 800 nm was 0.62 and the absorbance at the wavelength of 850 nm was 0.64.

XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 37.1%. After fitting, the peaks corresponding to $Ti^{4+}$ and $Ti^{3+}$ were obtained, wherein the content of $Ti^{3+}$ ($Ti^{3+}/Ti_{total}$) was 41.2%, the content of $Ti^{4+}$ ($Ti^{4+}/Ti_{total}$) was 58.8%, and the ratio of the surface content of $Ti^{3+}$ to the surface content of $Ti^{4+}$ was 0.701; fluorine content was 0.22%, and was doped in place of oxygen. The mass loss percentage measured by thermogravimetric analysis at 300 °C was 1.08%, the surface content of hydroxyl measured by infrared spectroscopy was 0.39 mmol/g, the particle size distribution range and the average particle size measured by the SEM method were 20-70 nm and 39.9 nm respectively, and the loss rate of the surface content of $Ti^{3+}$ after 10 times of cyclic washing with deionized water at 100 °C was 0.52%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate was 85.8% after 90 min.

## Example 27

The same conditions were used, except that the duration of irradiation in Example 4 was changed to 36 hours. The methods for sample analysis and formaldehyde degradation test were also the same as in Example 1.

The test results of the ultraviolet-visible diffuse reflection absorption spectroscopy showed that the absorbance at the wavelength of 760 nm was 0.78, the absorbance at the wavelength of 800 nm was 0.80 and the absorbance at the wavelength of 850 nm was 0.83.

XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 54.2%. After fitting, the peaks corresponding to $Ti^{4+}$ and $Ti^{3+}$ were obtained, wherein the content of $Ti^{3+}$ ($Ti^{3+}/Ti_{total}$) was 52.6%, the content of $Ti^{4+}$ ($Ti^{4+}/Ti_{total}$) was 47.4%, and the ratio of the surface content of $Ti^{3+}$ to the surface content of $Ti^{4+}$ was 1.11; fluorine element was 2.1% and was doped in place of oxygen. The mass loss percentage measured by thermogravimetric analysis at 300 °C was 1.39%, the surface content of hydroxyl measured by infrared spectroscopy was 0.43 mmol/g, the particle size distribution range and the average particle size measured by the SEM method were 20-70 nm and 38.8 nm respectively, and the loss rate of the surface content of $Ti^{3+}$ after 10 times of cyclic washing with deionized water at 100 °C was 0.46%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate after 90 min was 96.2%.

## Example 28

The same conditions were used, except that the duration of irradiation in Example 21 was changed to 15 hours. The methods for sample analysis and formaldehyde degradation test were also the same as in Example 1.

The test results of the ultraviolet-visible diffuse reflection absorption spectroscopy showed that the absorbance at the wavelength of 760 nm was 0.74, the absorbance at the wavelength of 800 nm was 0.75 and the absorbance at the wavelength of 850 nm was 0.77.

XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 42.9%. After

fitting, the peaks corresponding to Ti$^{4+}$ and Ti$^{3+}$ were obtained, wherein the content of Ti$^{3+}$ (Ti$^{3+}$/Ti$_{total}$) was 44.8%, the content of Ti$^{4+}$ (Ti$^{4+}$/Ti$_{total}$) was 55.2%, and the ratio of the surface content of Ti$^{3+}$ to the surface content of Ti$^{4+}$ was 0.812; fluorine element was 4.5%, the fluorine doping included lattice doping and interstitial doping, and the proportion of the lattice doping and the interstitial doping in the total doping was 97.4% and 2.6% respectively. The mass loss percentage measured by thermogravimetric analysis at 300 °C was 1.84%, the surface content of hydroxyl measured by infrared spectroscopy was 0.36 mmol/g, the particle size distribution range and the average particle size measured by the SEM method were respectively 10-40 nm and 21.1nm, and the loss rate of the surface content of Ti$^{3+}$ after 10 times of cyclic washing with deionized water at 100 °C was 0.26%.

The TEM-EELS test results showed that fluorine and Ti$^{3+}$ were mainly distributed within about 3 nm from the surface of the titanium dioxide particles, and the presence of fluorine and Ti$^{3+}$ was not found inside the particles.

The formaldehyde concentration test showed that the removal rate after 90 min was 93.2%.

## Example 29

The same conditions were used, except that 40 mg of potassium permanganate was added to the first product mixture of Example 5, and the resultant was further reacted for 3 hours under irradiation of the light source to obtain a second product mixture. The methods for sample analysis and formaldehyde degradation test were also the same as in Example 1.

The test results of the ultraviolet-visible diffuse reflection absorption spectroscopy showed that the absorbance at the wavelength of 760 nm was 0.95, the absorbance at the wavelength of 800 nm was 0.97 and the absorbance at the wavelength of 850 nm was 0.99.

The content of manganese element measured by ICP test was 1.15%; and Mn was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen (OL), oxygen vacancies (OV), and adsorbed oxygen (Oa), respectively, were obtained, a calculation showed O$_V$/O$_{total}$ = 53.4%. After fitting, the peaks corresponding to Ti$^{4+}$ and Ti$^{3+}$ were obtained, wherein the content of (Ti$^{3+}$/Ti$_{total}$) was 54.3%, the content of Ti$^{4+}$ (Ti$^{4+}$/Ti$_{total}$) was 45.7%, and the ratio of the surface content of Ti$^{3+}$ to the surface content of Ti$^{4+}$ was 1.19; fluorine element was 0.58% and was doped in place of oxygen; the content of nitrogen element was 0.69%, the N-doping included lattice doping and interstitial doping, and the proportion of the lattice doping and the interstitial doping in the total doping was 61.2% and 38.8% respectively.

The mass loss percentage measured by thermogravimetric analysis at 300 °C was 1.59%, the surface content of hydroxyl measured by infrared spectroscopy was 0.42 mmol/g, the particle size distribution range and the average particle size measured by the SEM method were 20-70 nm and 40.7 nm respectively, and the loss rate of the surface content of Ti$^{3+}$ after 10 times of cyclic washing with deionized water at 100 °C was 0.04%.

The TEM-EELS test results showed that manganese, fluorine, nitrogen and Ti$^{3+}$ were mainly distributed within about 3 nm from the surface of the titanium dioxide particles, and the presence of manganese, fluorine, nitrogen and Ti$^{3+}$ was not found inside the particles.

The formaldehyde concentration test showed that the removal rate was 99.8% after 90 min.

## Example 30

The same conditions were used, except that the addition of ammonium fluoride and the step of irradiation for 24 hours in Example 29 were eliminated. The methods for sample analysis and formaldehyde degradation test were also the same as in Example 1.

The test results of the ultraviolet-visible diffuse reflection absorption spectroscopy showed that the absorbance at the wavelength of 760 nm was 0.79, the absorbance at the wavelength of 800 nm was 0.81, and the absorbance at the wavelength of 850 nm was 0.83.

The content of manganese element measured by ICP test was 0.96%; and Mn was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen (O$_L$), oxygen vacancies (Ov), and adsorbed oxygen (O$_a$), respectively, were obtained, a calculation showed O$_V$/O$_{total}$ = 42.4%. After fitting, the peaks corresponding to Ti$^{4+}$ and Ti$^{3+}$ were obtained, wherein the content of (Ti$^{3+}$/Ti$_{total}$) was 31.2%, the content of Ti$^{4+}$ (Ti$^{4+}$/Ti$_{total}$) was 68.8%, and the ratio of the surface content of Ti$^{3+}$ to the surface content of Ti$^{4+}$ was 0.453. The mass loss percentage measured by thermogravimetric analysis at 300 °C was 0.52%, the surface content of hydroxyl measured by infrared spectroscopy was 0.22 mmol/g, the particle size distribution range and the average particle size measured by the SEM method were 20-70 nm and 40.4 nm respectively, and the loss rate of the surface content of Ti$^{3+}$ after 10 times of cyclic washing with deionized water at 100 °C was 1.1%.

The TEM-EELS test results showed that manganese and Ti$^{3+}$ were mainly distributed within about 3 nm from the surface of the titanium dioxide particles, and the presence of Mn and Ti$^{3+}$ was not found inside the particles.

The formaldehyde concentration test showed that the removal rate after 90 min was 92.6%.

## Example 31

The same conditions were used, except that the potassium permanganate in Example 29 was replaced with $NaBO_2$. The methods for sample analysis and formaldehyde degradation test were also the same as in Example 1.

The test results of the ultraviolet-visible diffuse reflection absorption spectroscopy showed that the absorbance at the wavelength of 760 nm was 0.80, the absorbance at the wavelength of 800 nm was 0.81, and the absorbance at the wavelength of 850 nm was 0.82.

The content of B element measured by ICP test was 0.47%; XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 37.4%. After fitting, the peaks corresponding to $Ti^{4+}$ and $Ti^{3+}$ were obtained, wherein the content of $Ti^{3+}$ ($Ti^{3+}/Ti_{total}$) was 35.6%, the content of $Ti^{4+}$ ($Ti^{4+}/Ti_{total}$) was 64.4%, and the ratio of the surface content of $Ti^{3+}$ to the surface content of $Ti^{4+}$ was 0.553; fluorine element was 0.66% and fluorine was doped by lattice doping. The content of nitrogen element was 0.59%, the N-doping included lattice doping and interstitial doping, and the proportion of the lattice doping and the interstitial doping in the total doping was 48.7% and 51.3% respectively. The mass loss percentage measured by thermogravimetric analysis at 300 °C was 1.44%, the surface content of hydroxyl measured by infrared spectroscopy was 0.55 mmol/g, the particle size distribution range and the average particle size measured by the SEM method were 20-70 nm and 39.4 nm respectively, and the loss rate of the surface content of $Ti^{3+}$ after 10 times of cyclic washing with deionized water at 100 °C was 2.1%.

The TEM-EELS test results showed that fluorine, nitrogen, boron and $Ti^{3+}$ were mainly distributed within about 3 nm from the surface of the titanium dioxide particles, and the presence of fluorine, nitrogen, boron and $Ti^{3+}$ was not found inside the particles.

The formaldehyde concentration test showed that the removal rate was 90.6% after 90 min.

## Example 32

The same conditions were used, except that the addition of ammonium fluoride and the step of irradiation for 24 hours in Example 31 were eliminated. The methods for sample analysis and formaldehyde degradation test were also the same as in Example 1.

The test results of the ultraviolet-visible diffuse reflection absorption spectroscopy showed that the absorbance at the wavelength of 760 nm was 0.44, the absorbance at the wavelength of 800 nm was 0.46 and the absorbance at the wavelength of 850 nm was 0.47.

The content of B element measured by ICP test was 0.53%; XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 16.8%. After fitting, the peaks corresponding to $Ti^{4+}$ and $Ti^{3+}$ were obtained, wherein the content of $Ti^{3+}$ ($Ti^{3+}/Ti_{total}$) was 24.9%, the content of $Ti^{4+}$ ($Ti^{4+}/Ti_{total}$) was 75.1%, and the ratio of the surface content of $Ti^{3+}$ to the surface content of $Ti^{4+}$ was 0.332; the content of boron element was 0.53%. The mass loss percentage measured by thermogravimetric analysis at 300 °C was 1.32%, the surface content of hydroxyl measured by infrared spectroscopy was 0.36 mmol/g, the particle size distribution range and the average particle size measured by the SEM method were 20-70 nm and 40.5 nm respectively, and the loss rate of the surface content of $Ti^{3+}$ after 10 times of cyclic washing with deionized water at 100 °C was 0.57%.

The TEM-EELS test results showed that boron and $Ti^{3+}$ were mainly distributed within about 3 nm from the surface of the titanium dioxide particles, and the presence of boron and $Ti^{3+}$ was not found inside the particles.

The formaldehyde concentration test showed that the removal rate was 81.7% after 90 min.

## Example 33

The same conditions were used, except that the potassium permanganate in Example 29 was replaced with $Ga(NO_3)_3$. The methods for sample analysis and formaldehyde degradation test were also the same as in Example 1.

The test results of the ultraviolet-visible diffuse reflection absorption spectroscopy showed that the absorbance at the wavelength of 760 nm was 0.83, the absorbance at the wavelength of 800 nm was 0.84 and the absorbance at the wavelength of 850 nm was 0.86.

The content of Ga element as measured by ICP test was 0.78%; and Ga was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 38.5%. After fitting, the peaks corresponding to $Ti^{4+}$ and $Ti^{3+}$ were obtained, wherein the content of $Ti^{3+}$ ($Ti^{3+}/Ti_{total}$) was 36.4%, the content of $Ti^{4+}$ ($Ti^{4+}/Ti_{total}$) was 63.6%, and the ratio of the surface content of $Ti^{3+}$ to the surface content of $Ti^{4+}$ was 0.572; fluorine element was 0.62%, and fluorine was doped by lattice doping. The content of nitrogen element was 0.66%, the N-doping included lattice doping and interstitial doping, and the proportion of the lattice doping and the interstitial doping in the total doping was 54.3% and 45.7% respectively. The mass loss percentage measured by thermogravimetric analysis at 300 °C was 1.22%, the surface content of hydroxyl measured by infrared spectroscopy was 0.48 mmol/g, the particle size distribution range and the average particle size measured by the SEM method were 20-70 nm and 37.7 nm respectively, and the loss rate of the surface content of $Ti^{3+}$ after 10 times of cyclic washing with deionized water at 100 °C was 1.26%.

The TEM-EELS test results showed that fluorine, nitrogen, Ga and $Ti^{3+}$ were mainly distributed within about 3 nm from the surface of the titanium dioxide particles, and the presence of fluorine, nitrogen, Ga and $Ti^{3+}$ was not found inside the particles.

The formaldehyde concentration test showed that the removal rate after 90 min was 92.4%.

## Example 34

The same conditions were used, except that the addition of ammonium fluoride and the step of irradiation for 24 hours in Example 33 were eliminated. The methods for sample analysis and formaldehyde degradation test were also the same as in Example 1.

The test results of the ultraviolet-visible diffuse reflection absorption spectroscopy showed that the absorbance at the wavelength of 760 nm was 0.42, the absorbance at the wavelength of 800 nm was 0.44 and the absorbance at the wavelength of 850 nm was 0.45.

The content of Ga element as measured by ICP test was 0.85%; and Ga was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 19.2\%$. After fitting, the peaks corresponding to $Ti^{4+}$ and $Ti^{3+}$ were obtained, wherein the content of $Ti^{3+}$ ($Ti^{3+}/Ti_{total}$) was 24.3%, the content of $Ti^{4+}$ ($Ti^{4+}/Ti_{total}$) was 75.7%, and the ratio of the surface content of $Ti^{3+}$ to the surface content of $Ti^{4+}$ was 0.321; the mass loss percentage measured by thermogravimetric analysis at 300 °C was 0.88%, the surface content of hydroxyl measured by infrared spectroscopy was 0.26 mmol/g, the particle size distribution range and the average particle size measured by the SEM method were respectively 20-70 nm and 40.7nm, and the loss rate of the surface content of $Ti^{3+}$ after 10 times of cyclic washing with deionized water at 100 °C was 0.89%.

The TEM-EELS test results showed that Ga and $Ti^{3+}$ were mainly distributed within about 3 nm from the surface of the titanium dioxide particles, and the presence of Ga and $Ti^{3+}$ was not found inside the particles.

The formaldehyde concentration test showed that the removal rate after 90 min was 82.1%.

## Example 35

The same conditions were used, except that the ammonium fluoride in Example 5 was replaced with ethanol. The methods for sample analysis and formaldehyde degradation test were also the same as in Example 1.

The test results of the ultraviolet-visible diffuse reflection absorption spectroscopy showed that the absorbance at the wavelength of 760 nm was 0.71, the absorbance at the wavelength of 800 nm was 0.72, and the absorbance at the wavelength of 850 nm was 0.74.

XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 36.9\%$. After fitting, the peaks corresponding to $Ti^{4+}$ and $Ti^{3+}$ were obtained, wherein the content of $Ti^{3+}$ ($Ti^{3+}/Ti_{total}$) was 37.6%, the content of $Ti^{4+}$ ($Ti^{4+}/Ti_{total}$) was 63.4%, and the ratio of the surface content of $Ti^{3+}$ to the surface content of $Ti^{4+}$ was 0.593; the content of carbon element was 0.86%. The mass loss percentage measured by thermogravimetric analysis at 300 °C was 1.22%, the surface content of hydroxyl measured by infrared spectroscopy was 0.29 mmol/g, the particle size distribution range and the average particle size measured by the SEM method were 20-70 nm and 39.3 nm respectively, and the loss rate of the surface content of $Ti^{3+}$ after 10 times of cyclic washing with deionized water at 100 °C was 1.1%.

The TEM-EELS test results showed that carbon and $Ti^{3+}$ were mainly distributed within about 3 nm from the surface of the titanium dioxide particles, and the presence of carbon and $Ti^{3+}$ was not found inside the particles.

The formaldehyde concentration test showed that the removal rate was 89.9% after 90 min.

## Example 36

The same conditions were used, except that the ammonium fluoride in Example 29 was replaced with ethanol. The methods for sample analysis and formaldehyde degradation test were also the same as in Example 1.

The test results of the ultraviolet-visible diffuse reflection absorption spectroscopy showed that the absorbance at the wavelength of 760 nm was 0.86, the absorbance at the wavelength of 800 nm was 0.87, and the absorbance at the wavelength of 850 nm was 0.88.

The content of Mn element as measured by ICP test was 0.98%, and Ge was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 44.1\%$. After fitting, the peaks corresponding to $Ti^{4+}$ and $Ti^{3+}$ were obtained, wherein the content of $Ti^{3+}$ ($Ti^{3+}/Ti_{total}$) was 49.6%, the content of $Ti^{4+}$ ($Ti^{4+}/Ti_{total}$) was 50.4%, and the ratio of the surface content of $Ti^{3+}$ to the surface content of $Ti^{4+}$ was 0.984; the content of carbon element was 0.89%. The mass loss percentage measured by thermogravimetric analysis at 300 °C was 1.33%, the surface content of hydroxyl measured by infrared spectroscopy was 0.47 mmol/g, the particle size distribution range and the average particle size measured by the SEM method were 20-70 nm and 39.1 nm respectively, and the loss rate of the surface content of $Ti^{3+}$ after 10 times of cyclic washing with deionized water at 100 °C was 0.78%.

The TEM-EELS test results showed that carbon, manganese and $Ti^{3+}$ were mainly distributed within about 3 nm from the surface of the titanium dioxide particles, and the presence of carbon, manganese and $Ti^{3+}$ was not found inside the particles.

The formaldehyde concentration test showed that the removal rate was 94.2% after 90 min.

**Example 37**

The same conditions were used, except that the potassium permanganate in Example 29 was replaced with $Na_2GeO_3$. The methods for sample analysis and formaldehyde degradation test were also the same as in Example 1.

The test results of the ultraviolet-visible diffuse reflection absorption spectroscopy showed that the absorbance at the wavelength of 760 nm was 0.82, the absorbance at the wavelength of 800 nm was 0.83, and the absorbance at the wavelength of 850 nm was 0.85.

The content of Ge element as measured by ICP test was 1.43%, and Ge was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 37.2\%$. After fitting, the peaks corresponding to $Ti^{4+}$ and $Ti^{3+}$ were obtained, wherein the content of $Ti^{3+}$ ($Ti^{3+}/Ti_{total}$) was 37.1%, the content of $Ti^{4+}$ ($Ti^{4+}/Ti_{total}$) was 62.9%, and the ratio of the surface content of $Ti^{3+}$ to the surface content of $Ti^{4+}$ was 0.59; fluorine element was 0.69%, and fluorine was doped by lattice doping. The content of nitrogen element was 0.49%, the N-doping included lattice doping and interstitial doping, and the proportion of the lattice doping and the interstitial doping in the total doping was 45.9% and 54.1% respectively. The mass loss percentage measured by thermogravimetric analysis at 300 °C was 1.58%, the surface content of hydroxyl measured by infrared spectroscopy was 0.44 mmol/g, the particle size distribution range and the average particle size measured by the SEM method were 20-70 nm and 38.7 nm respectively, and the loss rate of the surface content of $Ti^{3+}$ after 10 times of cyclic washing with deionized water at 100 °C was 0.69%.

The TEM-EELS test results showed that fluorine, nitrogen, germanium and $Ti^{3+}$ were mainly distributed within about 3 nm from the surface of the titanium dioxide particles, and the presence of fluorine, nitrogen, germanium and $Ti^{3+}$ was not found inside the particles.

The formaldehyde concentration test showed that the removal rate after 90 min was 93.4%.

**Example 38**

The same conditions were used, except that the addition of ammonium fluoride and the step of irradiation for 24 hours in Example 37 were eliminated. The methods for sample analysis and formaldehyde degradation test were also the same as in Example 1.

The test results of the ultraviolet-visible diffuse reflection absorption spectroscopy showed that the absorbance at the wavelength of 760 nm was 0.41, the absorbance at the wavelength of 800 nm was 0.42 and the absorbance at the wavelength of 850 nm was 0.44.

The content of Ge element as measured by ICP test was 1.32%, and Ge was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 33.1\%$. After fitting, the peaks corresponding to $Ti^{4+}$ and $Ti^{3+}$ were obtained, the content of $Ti^{3+}$ ($Ti^{3+}/Ti_{total}$) was 20.7%, the content of $Ti^{4+}$ ($Ti^{4+}/Ti_{total}$) was 79.3%, and the ratio of the surface content of $Ti^{3+}$ to the surface content of $Ti^{4+}$ was 0.261. The mass loss percentage measured by thermogravimetric analysis at 300 °C was 0.92%, the surface content of hydroxyl measured by infrared spectroscopy was 0.23 mmol/g, the particle size distribution range and the average particle size measured by the SEM method were 20-70 nm and 40.3 nm respectively, and the loss rate of the surface content of $Ti^{3+}$ after 10 times of cyclic washing with deionized water at 100 °C was 0.53%.

The TEM-EELS test results showed that germanium and $Ti^{3+}$ were mainly distributed within about 3 nm from the surface of the titanium dioxide particles, and the presence of germanium and $Ti^{3+}$ was not found inside the particles.

The formaldehyde concentration test showed that the removal rate was 79.6% after 90 min.

**Example 39**

The same conditions were used, except that the ammonium fluoride in Example 5 was replaced with sodium phosphate. The methods for sample analysis and formaldehyde degradation test were also the same as in Example 1.

The test results of the ultraviolet-visible diffuse reflection absorption spectroscopy showed that the absorbance at the wavelength of 760 nm was 0.67, the absorbance at the wavelength of 800 nm was 0.68 and the absorbance at the wavelength of 850 nm was 0.70.

XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 26.4%. After fitting, the peaks corresponding to $Ti^{4+}$ and $Ti^{3+}$ were obtained, wherein the content of $Ti^{3+}$ ($Ti^{3+}/Ti_{total}$) was 40.2%, the content of $Ti^{4+}$ ($Ti^{4+}/Ti_{total}$) was 59.8%, and the ratio of the surface content of $Ti^{3+}$ to the surface content of $Ti^{4+}$ was 0.672; phosphorus element was 0.88%, and fluorine was doped by lattice doping. The mass loss percentage measured by thermogravimetric analysis at 300 °C was 1.66%, the surface content of hydroxyl measured by infrared spectroscopy was 0.41 mmol/g, the particle size distribution range and the average particle size measured by the SEM method were 20-70 nm and 38.5 nm respectively, and the loss rate of the surface content of $Ti^{3+}$ after 10 times of cyclic washing with deionized water at 100 °C was 0.99%.

The TEM-EELS test results showed that phosphorus and $Ti^{3+}$ were mainly distributed within about 3 nm from the surface of the titanium dioxide particles, and the presence of phosphorus and $Ti^{3+}$ was not found inside the particles.

The formaldehyde concentration test showed that the removal rate was 88.5% after 90 min.

**Example 40**

The same conditions were used, except that the ammonium fluoride in Example 29 was replaced with sodium phosphate. The methods for sample analysis and formaldehyde degradation test were also the same as in Example 1.

The test results of the ultraviolet-visible diffuse reflection absorption spectroscopy showed that the absorbance at the wavelength of 760 nm was 0.81, the absorbance at the wavelength of 800 nm was 0.83, and the absorbance at the wavelength of 850 nm was 0.86.

The content of Mn element as measured by ICP test was 0.97%, and the doping elements were existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies ($O_V$), and adsorbed oxygen ($O_a$), respectively, were obtained, a calculation showed $O_V/O_{total}$ = 46.3%. After fitting, the peaks corresponding to $Ti^{4+}$ and $Ti^{3+}$ were obtained, wherein the content of $Ti^{3+}$ ($Ti^{3+}/Ti_{total}$) was 46.7%, the content of $Ti^{4+}$ ($Ti^{4+}/Ti_{total}$) was 53.3%, and the ratio of the surface content of $Ti^{3+}$ to the surface content of $Ti^{4+}$ was 0.876; phosphorus element was 0.92%. The mass loss percentage measured by thermogravimetric analysis at 300 °C was 1.72%, the surface content of hydroxyl measured by infrared spectroscopy was 0.49 mmol/g, the particle size distribution range and the average particle size measured by the SEM method were 20-70 nm and 38.7 nm respectively, and the loss rate of the surface content of $Ti^{3+}$ after 10 times of cyclic washing with deionized water at 100 °C was 0.92%.

The TEM-EELS test results showed that phosphorus, manganese and $Ti^{3+}$ were mainly distributed within about 3 nm from the surface of the titanium dioxide particles, and the presence of phosphorus, manganese and $Ti^{3+}$ was not found inside the particles.

The formaldehyde concentration test showed that the removal rate was 91.3% after 90 min

**Example 41**

The same conditions were used, except that the ammonium fluoride in Example 5 was replaced with sodium thiosulfate. The methods for sample analysis and formaldehyde degradation test were also the same as in Example 1.

The test results of the ultraviolet-visible diffuse reflection absorption spectroscopy showed that the absorbance at the wavelength of 760 nm was 0.68, the absorbance at the wavelength of 800 nm was 0.69 and the absorbance at the wavelength of 850 nm was 0.71.

XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 32.5%. After fitting, the peaks corresponding to $Ti^{4+}$ and $Ti^{3+}$ were obtained, wherein the content of $Ti^{3+}$ ($Ti^{3+}/Ti_{total}$) was 43.1%, the content of $Ti^{4+}$ ($Ti^{4+}/Ti_{total}$) was 56.9%, and the ratio of the surface content of $Ti^{3+}$ to the surface content of $Ti^{4+}$ was 0.757; S element was 1.4%. The mass loss percentage measured by thermogravimetric analysis at 300 °C was 1.35%, the surface content of hydroxyl measured by infrared spectroscopy was 0.35 mmol/g, the particle size distribution range and the average particle size measured by the SEM method were 20-70 nm and 38.9 nm respectively, and the loss rate of the surface content of $Ti^{3+}$ after 10 times of cyclic washing with deionized water at 100 °C was 0.88%.

The TEM-EELS test results showed that sulfur and $Ti^{3+}$ were mainly distributed within about 3 nm from the surface of the titanium dioxide particles, and the presence of sulfur and $Ti^{3+}$ was not found inside the particles.

The formaldehyde concentration test showed that the removal rate was 86.4% after 90 min

**Example 42**

The same conditions were used, except that the ammonium fluoride in Example 29 was replaced with sodium thiosulfate. The methods for sample analysis and formaldehyde degradation test were also the same as in Example 1.

The content of Mn element as measured by ICP test was 1.09%, and the doping elements were existing in monoatomic distribution, as observed by the spherical aberration corrected electron microscope method. The test results of the ultraviolet-visible diffuse reflection absorption spectroscopy showed that the absorbance at the wavelength of 760 nm was 0.82, the absorbance at the wavelength of 800 nm was 0.85, and the absorbance at the wavelength of 850 nm was 0.88.

XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 47.1%. After fitting, the peaks corresponding to $Ti^{4+}$ and $Ti^{3+}$ were obtained, wherein the content of $Ti^{3+}$ ($Ti^{3+}/Ti_{total}$) was 47.4%, the content of $Ti^{4+}$ ($Ti^{4+}/Ti_{total}$) was 52.6%, and the ratio of the surface content of $Ti^{3+}$ to the surface content of $Ti^{4+}$ was 0.901; the content of sulfur element was 1.32%. The mass loss percentage measured by thermogravimetric analysis at 300 °C was 1.24%, the surface content of hydroxyl measured by infrared spectroscopy was 0.50 mmol/g, the particle size distribution range and the average particle size measured by the SEM method were 20-70 nm and 39.5 nm respectively, and the loss rate of the surface content of $Ti^{3+}$ after 10 times of cyclic washing with deionized water at 100 °C was 1.4%.

The TEM-EELS test results showed that manganese, sulfur and $Ti^{3+}$ were mainly distributed within about 3 nm from the surface of the titanium dioxide particles, and the presence of manganese, sulfur and $Ti^{3+}$ was not found inside the particles.

The formaldehyde concentration test showed that the removal rate was 90.7% after 90 min

**Example 43**

The same conditions were used, except that the potassium permanganate in Example 29 was replaced with $Na_2SeO_3$. The methods for sample analysis and formaldehyde degradation test were also the same as in Example 1.

The test results of the ultraviolet-visible diffuse reflection absorption spectroscopy showed that the absorbance at the wavelength of 760 nm was 0.80, the absorbance at the wavelength of 800 nm was 0.81, and the absorbance at the wavelength of 850 nm was 0.83.

The content of Se element as measured by ICP test was 1.34%, and the Se element was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 36.3%. After fitting, the peaks corresponding to $Ti^{4+}$ and $Ti^{3+}$ were obtained, wherein the content of $Ti^{3+}$ ($Ti^{3+}/Ti_{total}$) was 39.6%, the content of $Ti^{4+}$ ($Ti^{4+}/Ti_{total}$) was 60.4%, and the ratio of the surface content of $Ti^{3+}$ to the surface content of $Ti^{4+}$ was 0.656; fluorine element was 0.79%, and fluorine was doped by lattice doping. The content of nitrogen element was 0.53%, the N-doping included lattice doping and interstitial doping, and the proportion of the lattice doping and the interstitial doping in the total doping was 55.6% and 44.4% respectively. The mass loss percentage measured by thermogravimetric analysis at 300 °C was 1.33%, the surface content of hydroxyl measured by infrared spectroscopy was 0.49 mmol/g, the particle size distribution range and the average particle size measured by the SEM method were 20-70 nm and 39.2 nm respectively, and the loss rate of the surface content of $Ti^{3+}$ after 10 times of cyclic washing with deionized water at 100 °C was 1.45%.

The TEM-EELS test results showed that F, N, Se and $Ti^{3+}$ were mainly distributed within about 3 nm from the surface of the titanium dioxide particles, and the presence of F, N, Se and $Ti^{3+}$ was not found inside the particles.

The formaldehyde concentration test showed that the removal rate after 90 min was 91.9%.

**Example 44**

The same conditions were used, except that the addition of ammonium fluoride and the step of irradiation for 24 hours in Example 43 were eliminated. The methods for sample analysis and formaldehyde degradation test were also the same as in Example 1.

The test results of the ultraviolet-visible diffuse reflection absorption spectroscopy showed that the absorbance at the wavelength of 760 nm was 0.42, the absorbance at the wavelength of 800 nm was 0.45, and the absorbance at the wavelength of 850 nm was 0.47.

The content of Se element as measured by ICP test was 1.45%, and the doping element Se was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies ($O_V$), and adsorbed oxygen ($O_a$), respectively, were obtained, a calculation showed $O_V/O_{total}$ = 33.4%. After fitting, the peaks corresponding to $Ti^{4+}$ and $Ti^{3+}$ were obtained, the content of $Ti^{3+}$ ($Ti^{3+}/Ti_{total}$) was 21.6%, the content of $Ti^{4+}$ ($Ti^{4+}/Ti_{total}$) was 78.4%, and the ratio of the surface content of $Ti^{3+}$ to the surface content of $Ti^{4+}$ was 0.276. The mass loss percentage measured by thermogravimetric analysis at 300 °C was 1.11 %, the surface content of hydroxyl measured by infrared spectroscopy was 0.18 mmol/g, the particle size distribution range and the average particle size measured by the SEM method were 20-70 nm and 40.5 nm respectively, and the loss rate of the surface content of $Ti^{3+}$ after 10 times of cyclic washing with deionized water at 100 °C was 1.55%.

The TEM-EELS test results showed that Se and $Ti^{3+}$ were mainly distributed within about 3 nm from the surface of the titanium dioxide particles, and the presence of Se and $Ti^{3+}$ was not found inside the particles.

The formaldehyde concentration test showed that the removal rate was 78.9% after 90 min.

## Example 45

The same conditions were used, except that the potassium permanganate in Example 29 was replaced with $Fe(NO_3)_3 \cdot 9H_2O$. The methods for sample analysis and formaldehyde degradation test were also the same as in Example 1.

The test results of the ultraviolet-visible diffuse reflection absorption spectroscopy showed that the absorbance at the wavelength of 760 nm was 0.84, the absorbance at the wavelength of 800 nm was 0.86 and the absorbance at the wavelength of 850 nm was 0.88.

The content of Fe element as measured by ICP test was 0.43%, and the doping element Fe was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 44.1%. After fitting, the peaks corresponding to $Ti^{4+}$ and $Ti^{3+}$ were obtained, wherein the content of $Ti^{3+}$ ($Ti^{3+}/Ti_{total}$) was 40.2%, the content of $Ti^{4+}$ ($Ti^{4+}/Ti_{total}$) was 59.8%, and the ratio of the surface content of $Ti^{3+}$ to the surface content of $Ti^{4+}$ was 0.672; fluorine element was 0.63%, and fluorine was doped by lattice doping. The content of nitrogen element was 0.65%, the N-doping included lattice doping and interstitial doping, and the proportion of the lattice doping and the interstitial doping in the total doping was 62.1% and 37.9% respectively. The mass loss percentage measured by thermogravimetric analysis at 300 °C was 1.05%, the surface content of hydroxyl measured by infrared spectroscopy was 0.44 mmol/g, the particle size distribution range and the average particle size measured by the SEM method were 20-70 nm and 38.1 nm respectively, and the loss rate of the surface content of $Ti^{3+}$ after 10 times of cyclic washing with deionized water at 100 °C was 1.32%.

The TEM-EELS test results showed that F, N, Fe and $Ti^{3+}$ were mainly distributed within about 3 nm from the surface of the titanium dioxide particles, and the presence of F, N, Fe and $Ti^{3+}$ was not found inside the particles.

The formaldehyde concentration test showed that the removal rate was 98.5% after 90 min.

## Example 46

The same conditions were used, except that the addition of ammonium fluoride and the step of irradiation for 24 hours in Example 45 were eliminated. The methods for sample analysis and formaldehyde degradation test were also the same as in Example 1.

The test results of the ultraviolet-visible diffuse reflection absorption spectroscopy showed that the absorbance at the wavelength of 760 nm was 0.50, the absorbance at the wavelength of 800 nm was 0.51, and the absorbance at the wavelength of 850 nm was 0.52.

The content of Fe element as measured by ICP test was 0.45%, and the doping element Fe was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 25.6%. After fitting, the peaks corresponding to $Ti^{4+}$ and $Ti^{3+}$ were obtained, the content of $Ti^{3+}$ ($Ti^{3+}/Ti_{total}$) was 27.9%, the content of $Ti^{4+}$ ($Ti^{4+}/Ti_{total}$) was 72.1%, and the ratio of the surface content of $Ti^{3+}$ to the surface content of $Ti^{4+}$ was 0.387. The mass loss percentage measured by thermogravimetric analysis at 300 °C was 0.86%, the surface content of hydroxyl measured by infrared spectroscopy was 0.23 mmol/g, the particle size distribution range and the average particle size measured by the SEM method were respectively 20-70 nm and 40.6nm, and the loss rate of the surface content of $Ti^{3+}$ after 10 times of cyclic washing with deionized water at 100 °C was 0.96%.

The TEM-EELS test results showed that Fe and $Ti^{3+}$ were mainly distributed within about 3 nm from the surface of the titanium dioxide particles, and the presence of Fe and $Ti^{3+}$ was not found inside the particles.

The formaldehyde concentration test showed that the removal rate was 82.9% after 90 min

## Example 47

The same conditions were used, except that the potassium permanganate in Example 29 was replaced with cobalt nitrate hexahydrate. The methods for sample analysis and formaldehyde degradation test were also the same as in Example 1.

The test results of the ultraviolet-visible diffuse reflection absorption spectroscopy showed that the absorbance at the wavelength of 760 nm was 0.86, the absorbance at the wavelength of 800 nm was 0.87, and the absorbance at the wavelength of 850 nm was 0.88.

The content of Co element as measured by ICP test was 0.52%, and Co was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 44.9\%$. After fitting, the peaks corresponding to $Ti^{4+}$ and $Ti^{3+}$ were obtained, wherein the content of $Ti^{3+}$ ($Ti^{3+}/Ti_{total}$) was 41.2%, the content of $Ti^{4+}$ ($Ti^{4+}/Ti_{total}$) was 58.8%, and the ratio of the surface content of $Ti^{3+}$ to the surface content of $Ti^{4+}$ was 0.701; fluorine element was 0.58% and fluorine was doped by lattice doping. The content of nitrogen element was 0.66%, the N-doping included lattice doping and interstitial doping, and the proportion of the lattice doping and the interstitial doping in the total doping was 58.4% and 41.6% respectively. The mass loss percentage measured by thermogravimetric analysis at 300 °C was 1.22%, the surface content of hydroxyl measured by infrared spectroscopy was 0.42 mmol/g, the particle size distribution range and the average particle size measured by the SEM method were 20-70 nm and 39.1 nm respectively, and the loss rate of the surface content of $Ti^{3+}$ after 10 times of cyclic washing with deionized water at 100 °C was 0.82%.

The TEM-EELS test results showed that fluorine, nitrogen, cobalt and $Ti^{3+}$ were mainly distributed within about 3 nm from the surface of the titanium dioxide particles, and the presence of fluorine, nitrogen, cobalt and $Ti^{3+}$ was not found inside the particles.

The formaldehyde concentration test showed that the removal rate was 98.5% after 90 min.

## Example 48

The same conditions were used, except that the addition of ammonium fluoride and the step of irradiation for 24 hours in Example 47 were eliminated. The methods for sample analysis and formaldehyde degradation test were also the same as in Example 1.

The test results of the ultraviolet-visible diffuse reflection absorption spectroscopy showed that the absorbance at the wavelength of 760 nm was 0.51, the absorbance at the wavelength of 800 nm was 0.53 and the absorbance at the wavelength of 850 nm was 0.55.

The content of Co element as measured by ICP test was 0.49%, and Co was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 27.3\%$. After fitting, the peaks corresponding to $Ti^{4+}$ and $Ti^{3+}$ were obtained, the content of $Ti^{3+}$ ($Ti^{3+}/Ti_{total}$) was 26.9%, the content of $Ti^{4+}$ ($Ti^{4+}/Ti_{total}$) was 73.1%, and the ratio of the surface content of $Ti^{3+}$ to the surface content of $Ti^{4+}$ was 0.382. The mass loss percentage measured by thermogravimetric analysis at 300 °C was 0.76%, the surface content of hydroxyl measured by infrared spectroscopy was 0.17 mmol/g, the particle size distribution range and the average particle size measured by the SEM method were respectively 20-70 nm and 40.4nm, and the loss rate of the surface content of $Ti^{3+}$ after 10 times of cyclic washing with deionized water at 100 °C was 0.79%.

The TEM-EELS test results showed that Co and $Ti^{3+}$ were mainly distributed within about 3 nm from the surface of the titanium dioxide particles, and the presence of Co and $Ti^{3+}$ was not found inside the particles.

The formaldehyde concentration test showed that the removal rate was 83.5% after 90 min.

## Example 49

The same conditions were used, except that the potassium permanganate in Example 29 was replaced with nickel sulfate hexahydrate. The methods for sample analysis and formaldehyde degradation test were also the same as in Example 1.

The test results of the ultraviolet-visible diffuse reflection absorption spectroscopy showed that the absorbance at the wavelength of 760 nm was 0.85, the absorbance at the wavelength of 800 nm was 0.86 and the absorbance at the wavelength of 850 nm was 0.89.

The content of Ni element as measured by ICP test was 0.61%, and the doping elements were existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies ($O_V$), and adsorbed oxygen ($O_a$), respectively, were obtained, a calculation showed $O_V/O_{total} = 43.2\%$. After fitting, the peaks corresponding to $Ti^{4+}$ and $Ti^{3+}$ were obtained, wherein the content of $Ti^{3+}$ ($Ti^{3+}/Ti_{total}$) was 43.4%, the content of $Ti^{4+}$ ($Ti^{4+}/Ti_{total}$) was 56.6%, and the ratio of the surface content of $Ti^{3+}$ to the surface content of $Ti^{4+}$ was 0.767; fluorine element was 0.49%, and fluorine was doped by lattice doping. The content of nitrogen element was 0.72%, the N-doping included lattice doping and interstitial doping, and the proportion of the lattice doping and the interstitial doping in the total doping was 57.3% and 42.7% respectively. The mass loss percentage measured by thermogravimetric analysis at 300 °C was 1.17%, the surface content of hydroxyl measured by infrared spectroscopy was 0.39 mmol/g, the particle size distribution range and the average particle size measured by the SEM method were 20-70 nm and 39.5 nm respectively, and the loss rate of the surface content of $Ti^{3+}$ after 10 times of cyclic washing with deionized water at 100 °C was 0.86%.

The TEM-EELS test results showed that Ni, F, N and $Ti^{3+}$ were mainly distributed within about 3 nm from the surface of the titanium dioxide particles, and the presence of Ni, F, N and $Ti^{3+}$ was not found inside the particles.

The formaldehyde concentration test showed that the removal rate was 98.7% after 90 min.

## Example 50

The same conditions were used, except that the addition of ammonium fluoride and the step of irradiation for 24 hours in Example 49 were eliminated. The methods for sample analysis and formaldehyde degradation test were also the same as in Example 1.

The test results of the ultraviolet-visible diffuse reflection absorption spectroscopy showed that the absorbance at the wavelength of 760 nm was 0.55, the absorbance at the wavelength of 800 nm was 0.56 and the absorbance at the wavelength of 850 nm was 0.58.

The content of the Ni element as measured by ICP test was 0.64%, and the Ni element was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 31.2\%$. After fitting, the peaks corresponding to $Ti^{4+}$ and $Ti^{3+}$ were obtained, the content of $Ti^{3+}$ ($Ti^{3+}/Ti_{total}$) was 29.3%, the content of $Ti^{4+}$ ($Ti^{4+}/Ti_{total}$) was 70.7%, and the ratio of the surface content of $Ti^{3+}$ to the surface content of $Ti^{4+}$ was 0.414. The mass loss percentage measured by thermogravimetric analysis at 300 °C was 0.92%, the surface content of hydroxyl measured by infrared spectroscopy was 0.25 mmol/g, the particle size distribution range and the average particle size measured by the SEM method were 20-70 nm and 40.6 nm respectively, and the loss rate of the surface content of $Ti^{3+}$ after 10 times of cyclic washing with deionized water at 100 °C was 0.96%.

The TEM-EELS test results showed that Ni and $Ti^{3+}$ were mainly distributed within about 3 nm from the surface of the titanium dioxide particles, and the presence of Ni and $Ti^{3+}$ was not found inside the particles.

The formaldehyde concentration test showed that the removal rate was 83.1% after 90 min.

## Example 51

The same conditions were used, except that the potassium permanganate in Example 29 was replaced with $Cu(NO_3)_2$. The methods for sample analysis and formaldehyde degradation test were also the same as in Example 1.

The test results of the ultraviolet-visible diffuse reflection absorption spectroscopy showed that the absorbance at the wavelength of 760 nm was 0.85, the absorbance at the wavelength of 800 nm was 0.87, and the absorbance at the wavelength of 850 nm was 0.88.

The content of Mn element as measured by ICP test was 0.98%, and the doping elements were existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 42.1\%$. After fitting, the peaks corresponding to $Ti^{4+}$ and $Ti^{3+}$ were obtained, wherein the content of $Ti^{3+}$ ($Ti^{3+}/Ti_{total}$) was 44.6%, the content of $Ti^{4+}$ ($Ti^{4+}/Ti_{total}$) was 55.4%, and the ratio of the surface content of $Ti^{3+}$ to the surface content of $Ti^{4+}$ was 0.805; fluorine element was 0.71%, and fluorine was doped by lattice doping. The content of nitrogen element was 0.55%, the N-doping included lattice doping and interstitial doping, and the proportion of the lattice doping and the interstitial doping in the total doping was 56.9% and 43.1% respectively. The mass loss percentage measured by thermogravimetric analysis at 300 °C was 0.73%, the surface content of hydroxyl measured by infrared spectroscopy was 0.42 mmol/g, the particle size distribution range and the average particle size measured by the SEM method were 20-70 nm and 39.8 nm respectively, and the loss rate of the surface content of $Ti^{3+}$ after 10 times of cyclic washing with deionized water at 100 °C was 0.73%.

The TEM-EELS test results showed that F, N, Cu and $Ti^{3+}$ were mainly distributed within about 3 nm from the surface of the titanium dioxide particles, and the presence of F, N, Cu and $Ti^{3+}$ was not found inside the particles.

The formaldehyde concentration test showed that the removal rate was 98.8% after 90 min.

## Example 52

The same conditions were used, except that the addition of ammonium fluoride and the step of irradiation for 24 hours in Example 51 were eliminated. The methods for sample analysis and formaldehyde degradation test were also the same as in Example 1.

The test results of the ultraviolet-visible diffuse reflection absorption spectroscopy showed that the absorbance at the wavelength of 760 nm was 0.54, the absorbance at the wavelength of 800 nm was 0.55 and the absorbance at the wavelength of 850 nm was 0.57.

The content of the Cu element as measured by ICP test was 0.96%, and the Cu element was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 33.6\%$. After fitting, the peaks corresponding to $Ti^{4+}$ and $Ti^{3+}$ were obtained, the content of $Ti^{3+}$ ($Ti^{3+}/Ti_{total}$) was 28.1%, the content of $Ti^{4+}$ ($Ti^{4+}/Ti_{total}$) was 71.9%, and the ratio of the surface content of $Ti^{3+}$ to the surface content of $Ti^{4+}$ was 0.391. The mass loss percentage measured by thermo gravimetric analysis at 300 °C was 0.84%, the surface content of hydroxyl measured by infrared spectroscopy was 0.23 mmol/g, the particle size distribution range and the average particle size measured by the SEM method were 20-70 nm and 40.2 nm respectively, and the loss rate of the surface content of $Ti^{3+}$ after 10 times of cyclic washing with deionized water at 100 °C was 0.84%.

The TEM-EELS test results showed that Cu and $Ti^{3+}$ were mainly distributed within about 3 nm from the surface of the titanium dioxide particles, and the presence of Cu and $Ti^{3+}$ was not found inside the particles.

The formaldehyde concentration test showed that the removal rate was 82.6% after 90 min.

### Example 53

The same conditions were used, except that the potassium permanganate in Example 29 was replaced with $ZnCl_2$. The methods for sample analysis and formaldehyde degradation test were also the same as in Example 1.

The test results of the ultraviolet-visible diffuse reflection absorption spectroscopy showed that the absorbance at the wavelength of 760 nm was 0.84, the absorbance at the wavelength of 800 nm was 0.85 and the absorbance at the wavelength of 850 nm was 0.86.

The content of Zn element as measured by ICP test was 1.32%, and the doping element Zn was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 40.2\%$. After fitting, the peaks corresponding to $Ti^{4+}$ and $Ti^{3+}$ were obtained, wherein the content of $Ti^{3+}$ ($Ti^{3+}/Ti_{total}$) was 42.9%, the content of $Ti^{4+}$ ($Ti^{4+}/Ti_{total}$) was 57.1%, and the ratio of the surface content of $Ti^{3+}$ to the surface content of $Ti^{4+}$ was 0.751; fluorine element was 0.64%, and fluorine was doped by lattice doping. The content of nitrogen element was 0.61%, the N-doping included lattice doping and interstitial doping, and the proportion of the lattice doping and the interstitial doping in the total doping was 48.7% and 51.3% respectively. The mass loss percentage measured by thermogravimetric analysis at 300 °C was 1.24%, the surface content of hydroxyl measured by infrared spectroscopy was 0.47 mmol/g, the particle size distribution range and the average particle size measured by the SEM method were 20-70 nm and 39.4 nm respectively, and the loss rate of the surface content of $Ti^{3+}$ after 10 times of cyclic washing with deionized water at 100 °C was 1.45%.

The TEM-EELS test results showed that fluorine, nitrogen, zinc and $Ti^{3+}$ were mainly distributed within about 3 nm from the surface of the titanium dioxide particles, and the presence of fluorine, nitrogen, zinc and $Ti^{3+}$ was not found inside the particles.

The formaldehyde concentration test showed that the removal rate was 98.6% after 90 min

### Example 54

The same conditions were used, except that the addition of ammonium fluoride and the step of irradiation for 24 hours in Example 53 were eliminated. The methods for sample analysis and formaldehyde degradation test were also the same as in Example 1.

The test results of the ultraviolet-visible diffuse reflection absorption spectroscopy showed that the absorbance at the wavelength of 760 nm was 0.56, the absorbance at the wavelength of 800 nm was 0.57 and the absorbance at the wavelength of 850 nm was 0.59.

The content of Zn element as measured by ICP test was 1.36%, and the doping element Zn was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 24.3\%$. After fitting, the peaks corresponding to $Ti^{4+}$ and $Ti^{3+}$ were obtained, the content of $Ti^{3+}$ ($Ti^{3+}/Ti_{total}$) was 27.3%, the content of $Ti^{4+}$ ($Ti^{4+}/Ti_{total}$) was 72.7%, and the ratio of the surface content of $Ti^{3+}$ to the surface content of $Ti^{4+}$ was 0.376. The mass loss percentage measured by thermogravimetric analysis at 300 °C was 0.75%, the surface content of hydroxyl measured by infrared spectroscopy was 0.22 mmol/g, the particle size distribution range and the average particle size measured by the SEM method were respectively 20-70 nm and 40.1nm, and the loss rate of the surface content of $Ti^{3+}$ after 10 times of cyclic washing with deionized water at 100 °C was 1.33%.

The TEM-EELS test results showed that Zn and $Ti^{3+}$ were mainly distributed within about 3 nm from the surface of the titanium dioxide particles, and the pre-

sence of Zn and $Ti^{3+}$ was not found inside the particles.

The formaldehyde concentration test showed that the removal rate was 82.1% after 90 min.

**Example 55**

The same conditions were used, except that the potassium permanganate in Example 29 was replaced with $AgNO_3$. The methods for sample analysis and formaldehyde degradation test were also the same as in Example 1.

The test results of the ultraviolet-visible diffuse reflection absorption spectroscopy showed that the absorbance at the wavelength of 760 nm was 0.92, the absorbance at the wavelength of 800 nm was 0.94 and the absorbance at the wavelength of 850 nm was 0.95.

The content of Ag element as measured by ICP test was 1.47%, and the Ag element was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 47.9\%$. After fitting, the peaks corresponding to $Ti^{4+}$ and $Ti^{3+}$ were obtained, wherein the content of $Ti^{3+}$ ($Ti^{3+}/Ti_{total}$) was 49.1%, the content of $Ti^{4+}$ ($Ti^{4+}/Ti_{total}$) was 50.9%, and the ratio of the surface content of $Ti^{3+}$ to the surface content of $Ti^{4+}$ was 0.965; fluorine element was 0.67%, and fluorine was doped by lattice doping. The content of nitrogen element was 0.53%, the N-doping included lattice doping and interstitial doping, and the proportion of the lattice doping and the interstitial doping in the total doping was 47.9% and 52.1% respectively. The mass loss percentage measured by thermogravimetric analysis at 300 °C was 1.33%, the surface content of hydroxyl measured by infrared spectroscopy was 0.52 mmol/g, the particle size distribution range and the average particle size measured by the SEM method were 20-70 nm and 39.6 nm respectively, and the loss rate of the surface content of $Ti^{3+}$ after 10 times of cyclic washing with deionized water at 100 °C was 1.27%.

The TEM-EELS test results showed that F, N, Ag and $Ti^{3+}$ were mainly distributed within about 3 nm from the surface of the titanium dioxide particles, and the presence of F, N, Ag and $Ti^{3+}$ was not found inside the particles.

The formaldehyde concentration test showed that the removal rate was 99.4% after 90 min.

**Example 56**

The same conditions were used, except that the addition of ammonium fluoride and the step of irradiation for 24 hours in Example 55 were eliminated. The methods for sample analysis and formaldehyde degradation test were also the same as in Example 1.

The test results of the ultraviolet-visible diffuse reflection absorption spectroscopy showed that the absorbance at the wavelength of 760 nm was 0.65, the absorbance at the wavelength of 800 nm was 0.68 and the absorbance at the wavelength of 850 nm was 0.69.

The content of Ag element as measured by ICP test was 1.58%, and the Ag element was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 35.8\%$. After fitting, the peaks corresponding to $Ti^{4+}$ and $Ti^{3+}$ were obtained, the content of $Ti^{3+}$ ($Ti^{3+}/Ti_{total}$) was 34.2%, the content of $Ti^{4+}$ ($Ti^{4+}/Ti_{total}$) was 65.8%, and the ratio of the surface content of $Ti^{3+}$ to the surface content of $Ti^{4+}$ was 0.52. The mass loss percentage measured by thermogravimetric analysis at 300 °C was 1.52%, the surface content of hydroxyl measured by infrared spectroscopy was 0.24 mmol/g, the particle size distribution range and the average particle size measured by the SEM method were respectively 20-70 nm and 40.0nm, and the loss rate of the surface content of $Ti^{3+}$ after 10 times of cyclic washing with deionized water at 100 °C was 1.34%.

The TEM-EELS test results showed that Ag and $Ti^{3+}$ were mainly distributed within about 3 nm from the surface of the titanium dioxide particles, and the presence of Ag and $Ti^{3+}$ was not found inside the particles.

The formaldehyde concentration test showed that the removal rate was 87.3% after 90 min.

**Example 57**

The same conditions were used, except that the potassium permanganate in Example 29 was replaced with $HAuCl_4 \cdot 4H_2O$. The methods for sample analysis and formaldehyde degradation test were also the same as in Example 1.

The test results of the ultraviolet-visible diffuse reflection absorption spectroscopy showed that the absorbance at the wavelength of 760 nm was 0.91, the absorbance at the wavelength of 800 nm was 0.92 and the absorbance at the wavelength of 850 nm was 0.93.

The content of Au element as measured by ICP test was 1.41%, and the doping element Au was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies ($O_V$), and adsorbed oxygen ($O_a$), respectively, were obtained, a calculation showed $O_V/O_{total} = 47.5\%$. After fitting, the peaks corresponding to $Ti^{4+}$ and $Ti^{3+}$ were obtained, wherein

the content of $Ti^{3+}$ ($Ti^{3+}/Ti_{total}$) was 48.5%, the content of $Ti^{4+}$ ($Ti^{4+}/Ti_{total}$) was 51.5%, and the ratio of the surface content of $Ti^{3+}$ to the surface content of $Ti^{4+}$ was 0.942; fluorine element was 0.58% and fluorine was doped by lattice doping. The content of nitrogen element was 0.63%, the N-doping included lattice doping and interstitial doping, and the proportion of the lattice doping and the interstitial doping in the total doping was 54.4% and 45.6% respectively. The mass loss percentage measured by thermogravimetric analysis at 300 °C was 1.26%, the surface content of hydroxyl measured by infrared spectroscopy was 0.37 mmol/g, the particle size distribution range and the average particle size measured by the SEM method were 20-70 nm and 38.7 nm respectively, and the loss rate of the surface content of $Ti^{3+}$ after 10 times of cyclic washing with deionized water at 100 °C was 0.69%.

The TEM-EELS test results showed that F, N, Au and $Ti^{3+}$ were mainly distributed within about 3 nm from the surface of the titanium dioxide particles, and the presence of F, N, Au and $Ti^{3+}$ was not found inside the particles.

The formaldehyde concentration test showed that the removal rate was 99.3% after 90 min.

**Example 58**

The same conditions were used, except that the addition of ammonium fluoride and the step of irradiation for 24 hours in Example 57 were eliminated. The methods for sample analysis and formaldehyde degradation test were also the same as in Example 1.

The test results of the ultraviolet-visible diffuse reflection absorption spectroscopy showed that the absorbance at the wavelength of 760 nm was 0.66, the absorbance at the wavelength of 800 nm was 0.68, and the absorbance at the wavelength of 850 nm was 0.70.

The content of Au element as measured by ICP test was 1.38%, and the doping element Au was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies ($O_V$), and adsorbed oxygen ($O_a$), respectively, were obtained, a calculation showed $O_V/O_{total} = 37.6\%$. After fitting, the peaks corresponding to $Ti^{4+}$ and $Ti^{3+}$ were obtained, the content of $Ti^{3+}$ ($Ti^{3+}/Ti_{total}$) was 33.7%, the content of $Ti^{4+}$ ($Ti^{4+}/Ti_{total}$) was 66.3%, and the ratio of the surface content of $Ti^{3+}$ to the surface content of $Ti^{4+}$ was 0.508. The mass loss percentage measured by thermogravimetric analysis at 300 °C was 0.62%, the surface content of hydroxyl measured by infrared spectroscopy was 0.24 mmol/g, the particle size distribution range and the average particle size measured by the SEM method were respectively 20-70 nm and 40.3nm, and the loss rate of the surface content of $Ti^{3+}$ after 10 times of cyclic washing with deionized water at 100 °C was 0.84%.

The TEM-EELS test results showed that Au and $Ti^{3+}$ were mainly distributed within about 3 nm from the surface of the titanium dioxide particles, and the presence of Au and $Ti^{3+}$ was not found inside the particles.

The formaldehyde concentration test showed that the removal rate was 89.6% after 90 min.

**Example 59**

The same conditions were used, except that the potassium permanganate in Example 29 was replaced with $PdCl_2(H_2O)_2$. The methods for sample analysis and formaldehyde degradation test were also the same as in Example 1.

The test results of the ultraviolet-visible diffuse reflection absorption spectroscopy showed that the absorbance at the wavelength of 760 nm was 0.90, the absorbance at the wavelength of 800 nm was 0.92 and the absorbance at the wavelength of 850 nm was 0.95.

The content of Pd element as measured by ICP test was 1.51%, and the doping element Pd was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 46.3\%$. After fitting, the peaks corresponding to $Ti^{4+}$ and $Ti^{3+}$ were obtained, wherein the content of $Ti^{3+}$ ($Ti^{3+}/Ti_{total}$) was 49.6%, the content of $Ti^{4+}$ ($Ti^{4+}/Ti_{total}$) was 50.4%, and the ratio of the surface content of $Ti^{3+}$ to the surface content of $Ti^{4+}$ was 0.984; fluorine element was 0.55% and fluorine was doped by lattice doping. The content of nitrogen element was 0.66%, the N-doping included lattice doping and interstitial doping, and the proportion of the lattice doping and the interstitial doping in the total doping was 51.3% and 48.7% respectively. The mass loss percentage measured by thermogravimetric analysis at 300 °C was 1.42%, the surface content of hydroxyl measured by infrared spectroscopy was 0.56 mmol/g, the particle size distribution range and the average particle size measured by the SEM method were 20-70 nm and 39.7 nm respectively, and the loss rate of the surface content of $Ti^{3+}$ after 10 times of cyclic washing with deionized water at 100 °C was 0.91%.

The TEM-EELS test results showed that F, N, Pd and $Ti^{3+}$ were mainly distributed within about 3 nm from the surface of the titanium dioxide particles, and the presence of F, N, Pd and $Ti^{3+}$ was not found inside the particles.

The formaldehyde concentration test showed that the removal rate was 99.2% after 90 min.

## Example 60

The same conditions were used, except that the addition of ammonium fluoride and the step of irradiation for 24 hours in Example 59 were eliminated. The methods for sample analysis and formaldehyde degradation test were also the same as in Example 1.

The test results of the ultraviolet-visible diffuse reflection absorption spectroscopy showed that the absorbance at the wavelength of 760 nm was 0.66, the absorbance at the wavelength of 800 nm was 0.67 and the absorbance at the wavelength of 850 nm was 0.69.

The content of Pd element as measured by ICP test was 1.49%, and the doping element Pd was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 38.2\%$. After fitting, the peaks corresponding to $Ti^{4+}$ and $Ti^{3+}$ were obtained, the content of $Ti^{3+}$ ($Ti^{3+}/Ti_{total}$) was 34.6%, the content of $Ti^{4+}$ ($Ti^{4+}/Ti_{total}$) was 65.4%, and the ratio of the surface content of $Ti^{3+}$ to the surface content of $Ti^{4+}$ was 0.529. The mass loss percentage measured by thermogravimetric analysis at 300 °C was 0.83%, the surface content of hydroxyl measured by infrared spectroscopy was 0.17 mmol/g, the particle size distribution range and the average particle size measured by the SEM method were respectively 20-70 nm and 40.4nm, and the loss rate of the surface content of $Ti^{3+}$ after 10 times of cyclic washing with deionized water at 100 °C was 1.24%.

The TEM-EELS test results showed that Pd and $Ti^{3+}$ were mainly distributed within about 3 nm from the surface of the titanium dioxide particles, and the presence of Pd and $Ti^{3+}$ was not found inside the particles.

The formaldehyde concentration test showed that the removal rate was 88.4% after 90 min.

## Example 61

The same conditions were used, except that the potassium permanganate in Example 29 was replaced with potassium hexachloroplatinate. The methods for sample analysis and formaldehyde degradation test were also the same as in Example 1.

The test results of the ultraviolet-visible diffuse reflection absorption spectroscopy showed that the absorbance at the wavelength of 760 nm was 0.89, the absorbance at the wavelength of 800 nm was 0.91 and the absorbance at the wavelength of 850 nm was 0.92.

The content of Pt element as measured by ICP test was 1.25%, and the doping element Pt was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 46.7\%$. After fitting, the peaks corresponding to $Ti^{4+}$ and $Ti^{3+}$ were obtained, wherein the content of $Ti^{3+}$ ($Ti^{3+}/Ti_{total}$) was 46.8%, the content of $Ti^{4+}$ ($Ti^{4+}/Ti_{total}$) was 53.2%, and the ratio of the surface content of $Ti^{3+}$ to the surface content of $Ti^{4+}$ was 0.880; fluorine element was 0.61%, and fluorine was doped by lattice doping. The content of nitrogen element was 0.58%, the N-doping included lattice doping and interstitial doping, and the proportion of the lattice doping and the interstitial doping in the total doping was 52.6% and 47.4% respectively. The mass loss percentage measured by thermogravimetric analysis at 300 °C was 1.32%, the surface content of hydroxyl measured by infrared spectroscopy was 0.59 mmol/g, the particle size distribution range and the average particle size measured by the SEM method were 20-70 nm and 39.3 nm respectively, and the loss rate of the surface content of $Ti^{3+}$ after 10 times of cyclic washing with deionized water at 100 °C was 1.02%.

The TEM-EELS test results showed that F, N, Pt and $Ti^{3+}$ were mainly distributed within about 3 nm from the surface of the titanium dioxide particles, and the presence of F, N, Pt and $Ti^{3+}$ was not found inside the particles.

The formaldehyde concentration test showed that the removal rate after 90 min was 99.1%.

## Example 62

The same conditions were used, except that the addition of ammonium fluoride and the step of irradiation for 24 hours in Example 61 were eliminated. The methods for sample analysis and formaldehyde degradation test were also the same as in Example 1.

The test results of the ultraviolet-visible diffuse reflection absorption spectroscopy showed that the absorbance at the wavelength of 760 nm was 0.64, the absorbance at the wavelength of 800 nm was 0.66 and the absorbance at the wavelength of 850 nm was 0.67.

The content of the Pt element as measured by ICP test was 1.33%, and the doping element Pt was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 39.3\%$. After fitting, the peaks corresponding to $Ti^{4+}$ and $Ti^{3+}$ were obtained, the content of $Ti^{3+}$ ($Ti^{3+}/Ti_{total}$) was 32.3%, the content of $Ti^{4+}$ ($Ti^{4+}/Ti_{total}$) was 67.7%, and the ratio of the surface content of $Ti^{3+}$ to the surface content of $Ti^{4+}$ was 0.477. The mass loss percentage measured by thermogravimetric analysis at 300 °C was 1.39%, the surface content of hydroxyl measured by infrared spectroscopy was 0.26 mmol/g, the particle size distribution range and the average particle size measured by the SEM method were 20-70 nm and 40.6 nm respectively, and the loss rate of the surface content of $Ti^{3+}$ after 10 times of cyclic washing with deionized water at 100 °C was 1.09%.

The TEM-EELS test results showed that Pt and $Ti^{3+}$ were mainly distributed within about 3 nm from the surface of the titanium dioxide particles, and the presence of Pt and $Ti^{3+}$ was not found inside the particles.

The formaldehyde concentration test showed that the removal rate was 86.5% after 90 min.

## Example 63

The same conditions were used, except that the potassium permanganate in Example 29 was replaced with cerium nitrate hexahydrate. The methods for sample analysis and formaldehyde degradation test were also the same as in Example 1.

The test results of the ultraviolet-visible diffuse reflection absorption spectroscopy showed that the absorbance at the wavelength of 760 nm was 0.88, the absorbance at the wavelength of 800 nm was 0.89 and the absorbance at the wavelength of 850 nm was 0.90.

The content of Ce element as measured by ICP test was 0.99%, and the doping element Ce was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 45.2\%$. After fitting, the peaks corresponding to $Ti^{4+}$ and $Ti^{3+}$ were obtained, wherein the content of $Ti^{3+}$ ($Ti^{3+}/Ti_{total}$) was 45.4%, the content of $Ti^{4+}$ ($Ti^{4+}/Ti_{total}$) was 54.6%, and the ratio of the surface content of $Ti^{3+}$ to the surface content of $Ti^{4+}$ was 0.832; fluorine element was 0.63%, and fluorine was doped by lattice doping. The content of nitrogen element was 0.61%, the N-doping included lattice doping and interstitial doping, and the proportion of the lattice doping and the interstitial doping in the total doping was 57.4% and 42.6% respectively. The mass loss percentage measured by thermogravimetric analysis at 300 °C was 1.42%, the surface content of hydroxyl measured by infrared spectroscopy was 0.52 mmol/g, the particle size distribution range and the average particle size measured by the SEM method were 20-70 nm and 39.6 nm respectively, and the loss rate of the surface content of $Ti^{3+}$ after 10 times of cyclic washing with deionized water at 100 °C was 0.96%.

The TEM-EELS test results showed that F, N, Ce and $Ti^{3+}$ were mainly distributed within about 3 nm from the surface of the titanium dioxide particles, and the presence of F, N, Ce and $Ti^{3+}$ was not found inside the particles.

The formaldehyde concentration test showed that the removal rate was 99.0% after 90 min.

## Example 64

The same conditions were used, except that the addition of ammonium fluoride and the step of irradiation for 24 hours in Example 63 were eliminated. The methods for sample analysis and formaldehyde degradation test were also the same as in Example 1.

The test results of the ultraviolet-visible diffuse reflection absorption spectroscopy showed that the absorbance at the wavelength of 760 nm was 0.61, the absorbance at the wavelength of 800 nm was 0.62 and the absorbance at the wavelength of 850 nm was 0.64.

The content of Ce element as measured by ICP test was 0.98%, and the doping element Ce was existing in monoatomic distribution, as observed by the spherical aberration corrected electron microscope method. XPS peaks of oxygen element, titanium element and the like in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 32.5\%$. After fitting, the peaks corresponding to $Ti^{4+}$ and $Ti^{3+}$ were obtained, the content of $Ti^{3+}$ ($Ti^{3+}/Ti_{total}$) was 31.4%, the content of $Ti^{4+}$ ($Ti^{4+}/Ti_{total}$) was 68.6%, and the ratio of the surface content of $Ti^{3+}$ to the surface content of $Ti^{4+}$ was 0.458. The mass loss percentage measured by thermogravimetric analysis at 300 °C was 1.54%, the surface content of hydroxyl measured by infrared spectroscopy was 0.19 mmol/g, the particle size distribution range and the average particle size measured by the SEM method were 20-70 nm and 40.2 nm respectively, and the loss rate of the surface content of $Ti^{3+}$ after 10 times of cyclic washing with deionized water at 100 °C was 0.91%.

The TEM-EELS test results showed that Ce and $Ti^{3+}$ were mainly distributed within about 3 nm from the surface of the titanium dioxide particles, and the Ce and $Ti^{3+}$ was not found inside the particles.

The formaldehyde concentration test showed that the removal rate was 85.6% after 90 min.

## Example 65

The same conditions were used, except that the nano titanium dioxide in Example 5 was replaced with tetragonal $ZrO_2$ having a particle size of 20 to 45 nm and an average particle size of 34.6 nm. The methods for sample analysis and formaldehyde degradation test were also the same as in Example 1.

The test results of the ultraviolet-visible diffuse reflection absorption spectroscopy showed that the absorbance at the wavelength of 760 nm was 0.45, the absorbance at the wavelength of 800 nm was 0.46 and the absorbance at the wavelength of 850 nm was 0.48.

Based on literature information, XPS analysis was employed to determine the elemental composition and valence states of the product, which consisted of Zr, O, F and N elements. Analysis of the position and line-shape symmetry of the Zr 3d peak indicated that zirconium was existing in two valence states: $Zr^{3+}$ and $Zr^{4+}$. After fitting, peaks corresponding to $Zr^{3+}$ and $Zr^{4+}$ were obtained, the $Zr^{3+}/Zr_{total}$ was 51.3%, and, before the reaction, the $Zr^{3+}/Zr_{total}$ was 6.8%. The XPS spectrum of the O 1s electron energy level exhibited an asymmetric Gaussian line shape, indicating a superposition of multiple oxygen bonding states. After fitting, peaks corresponding to the adsorbed oxygen ($O_a$), oxygen vacancies (Ov), and lattice oxygen ($O_L$) were obtained, the $O_V/O_{total}$ value was 41.4% and, before the reaction of $ZrO_2$, the $O_V/O_{total}$ value was 8.2%. The content of fluorine element was 0.41%, and the content of nitrogen element was 0.36%. The mass loss percentage measured by thermogravimetric analysis at 300 °C was 0.62%, and the particle size distribution range and the average particle size measured by the SEM method were 20-45 nm and 34.2 nm respectively.

The TEM-EELS test results showed that $Zr^{3+}$, fluorine and nitrogen were mainly distributed within about 3 nm from the surface of $ZrO_2$ particles, and the presence of $Zr^{3+}$, fluorine and nitrogen was not found inside the particles.

The formaldehyde concentration test showed that the removal rate was 85.7% after 90 min.

## Example 66

The same conditions were used, except that the nano titanium dioxide in Example 5 was replaced with hexagonal wurtzite-type ZnO having a particle size of 25 to 65 nm and an average particle size of 32.5 nm. The methods for sample analysis and formaldehyde degradation test were also the same as in Example 1.

The test results of the ultraviolet-visible diffuse reflection absorption spectroscopy showed that the absorbance at the wavelength of 760 nm was 0.55, the absorbance at the wavelength of 800 nm was 0.56 and the absorbance at the wavelength of 850 nm was 0.58.

Based on literature information, XPS analysis was employed to determine the elemental composition and valence states of the product, which consisted of Zn, O, F and N elements. Analysis of the position and line-shape symmetry of the Zn 2p peak indicated that the zinc element was existing simply as $Zn^{2+}$. The XPS spectrum of the O 1s electron energy level exhibited an asymmetric Gaussian line shape, indicating a superposition of multiple oxygen bonding states. After fitting the O 1s peak, the peaks corresponding to the adsorbed oxygen ($O_a$), oxygen vacancies (Ov), and lattice oxygen ($O_L$) were obtained, the $O_V/O_{total}$ value was 16.9%, and, before the reaction of ZnO, the $O_V/O_{total}$ value was 4.2%. The content of fluorine element was 0.32%, and the content of nitrogen element was 0.29%. The mass loss percentage measured by thermogravimetric analysis at 300 °C was 0.64%, and the particle size distribution range and the average particle size measured by the SEM method were 25-65 nm and 32.5 nm respectively.

The TEM-EELS test results showed that fluorine and nitrogen were mainly distributed within about 3 nm from the surface of ZnO particles, and the presence of fluorine and nitrogen was not found inside the particles.

The formaldehyde concentration test showed that the removal rate was 83.6% after 90 min.

## Example 67

The same conditions were used, except that the nano titanium dioxide in Example 5 was replaced with monoclinic $BiVO_4$ having a particle size of 20 to 70 nm and an average particle size of 31.2 nm. The methods for sample analysis and formaldehyde degradation test were also the same as in Example 1.

The test results of the ultraviolet-visible diffuse reflection absorption spectroscopy showed that the absorbance at the wavelength of 760 nm was 0.54, the absorbance at the wavelength of 800 nm was 0.56 and the absorbance at the wavelength of 850 nm was 0.58.

Based on literature information, XPS analysis was employed to determine the elemental composition and valence states of the product, which consisted of Bi, V, O, F and N elements. The positions of the two peaks of Bi 4f indicated that bismuth was existing in the chemical state of $Bi^{3+}$. Peak fitting was carried out for O 1s, V 2p, F 1s, etc. based on the peak shapes in conjunction with literatures. After fitting the O 1s peak, the peaks corresponding to the adsorbed oxygen ($O_a$), oxygen vacancies (Ov), and lattice oxygen ($O_L$), respectively, were obtained, $O_{total} = O_a + Ov + O_L$, $O_V/O_{total} = 25.8\%$, and, before the reaction of $BiVO_4$, $O_V/O_{total} = 5.1\%$; after fitting, peaks corresponding to $V^{4+}$ and $V^{5+}$ were obtained, wherein the content of $V^{4+}$ was 24.3%, higher than the value of 2.4% before the reaction of $BiVO_4$. For $BiVO_4$, the presence of oxygen vacancies and $V^{4+}$ can improve the light absorption capability to some extent. The fluorine element was 0.44% and the content of nitrogen element was 0.31%. The mass loss percentage measured by thermogravimetric analysis at 300 °C was 0.68%, and the particle size distribution range and the average particle size measured by the SEM method were 20-70 nm and 31.2 nm, respectively.

The TEM-EELS results showed that fluorine, nitrogen and $V^{4+}$ were mainly distributed within about 3 nm from the surface of $BiVO_4$ particles, and the presence of fluorine, nitrogen and $V^{4+}$ was not found inside the particles.

The formaldehyde concentration test showed that the removal rate was 88.7% after 90 min.

## Example 68

The same conditions were used, except that the nano titanium dioxide in Example 5 was replaced with monoclinic $WO_3$ having a particle size of 20-80 nm and an average particle size of 51.2 nm. The methods for sample analysis and formaldehyde degradation test were also the same as in Example 1.

The test results of the ultraviolet-visible diffuse reflection absorption spectroscopy showed that the absorbance at the wavelength of 760 nm was 0.44, the absorbance at the wavelength of 800 nm was 0.46 and the absorbance at the wavelength of 850 nm was 0.49.

The XPS peaks of W, O, F and N elements in the product were analyzed. After fitting based on the peak shape of the O 1s peak, peaks corresponding to the adsorbed oxygen ($O_a$), oxygen vacancies (Ov), and lattice oxygen ($O_L$), respectively, were obtained, $O_{total} = O_a + Ov + O_L$, $O_V/O_{total} = 23.4\%$, and, before the reaction of $WO_3$, $O_V/O_{total} = 5.6\%$; after fitting, peaks corresponding to $W^{5+}$ and $W^{6+}$ were obtained, and the content of $W^{5+}$ before and after reaction was respectively 4.1% and 41.4%; the fluorine element was 0.69% and the content of the nitrogen element was 0.27%. The mass loss percentage measured by thermogravimetric analysis at 300 °C was 0.59%. The particle size distribution range and the average particle size measured by the SEM method were respectively 20-80 nm and 50.8 nm.

The TEM-EELS test results showed that $W^{5+}$, fluorine and nitrogen were mainly distributed within about 3 nm from the surface of tungsten oxide particles, and the presence of nitrogen, fluorine and $W^{5+}$ was not found inside the particles.

The formaldehyde concentration test showed that the removal rate was 81.3% after 90 min.

### Example 69

The same conditions were used, except that the nano titanium dioxide in Example 5 was replaced with $SnO_2$ having a rutile structure with a particle size of 20 to 50 nm and an average particle size of 31.2 nm. The methods for sample analysis and formaldehyde degradation test were also the same as in Example 1.

The test results of the ultraviolet-visible diffuse reflection absorption spectroscopy showed that the absorbance at the wavelength of 760 nm was 0.49, the absorbance at the wavelength of 800 nm was 0.52 and the absorbance at the wavelength of 850 nm was 0.53.

Based on literature information, XPS analysis was employed to determine the elemental composition and valence states of the product, which consisted of Sn, O, F and N elements. The positions of the two peaks of Sn 3d (487.5, 495.6 eV) indicated that tin was existing in the chemical state of $Sn^{4+}$. Peak fitting was carried out for O 1s, F 1s and N 1s based on the peak shapes in conjunction with literatures. After fitting the O 1s peak, the peaks corresponding to the adsorbed oxygen ($O_a$), oxygen vacancies (Ov), and lattice oxygen ($O_L$), respectively, were obtained, $O_{total} = O_a + Ov + O_L$, $O_V/O_{total} = 20.3\%$, and, before the reaction of $SnO_2$, $O_V/O_{total} =$

3.1%; the fluorine element was 0.58% and was doped in place of oxygen, and the content of nitrogen element was 0.44%. The mass loss percentage measured by thermogravimetric analysis at 300 °C was 0.58%, and the particle size distribution range and the average particle size measured by the SEM method were 20-50 nm and 31.1 nm, respectively.

The TEM-EELS test results showed that fluorine and nitrogen were mainly distributed within about 3 nm from the surface of $SnO_2$ particles, and the presence of fluorine and nitrogen was not found inside the particles.

The formaldehyde concentration test showed that the removal rate was 88.2% after 90 min.

### Example 70

The same conditions were used, except that the nano titanium dioxide in Example 29 was replaced with tetragonal $ZrO_2$ having a particle size of 20 to 45 nm and an average particle size of 34.6 nm. The methods for sample analysis and formaldehyde degradation test were also the same as in Example 1.

The test results of the ultraviolet-visible diffuse reflection absorption spectroscopy showed that the absorbance at the wavelength of 760 nm was 0.63, the absorbance at the wavelength of 800 nm was 0.64 and the absorbance at the wavelength of 850 nm was 0.66.

Based on literature information, XPS analysis was employed to determine the elemental composition and valence states of the product, which consisted of Zr, O, F, and N elements. Analysis of the position and line-shape symmetry of the Zr 3d peak indicated that zirconium was existing in two valence states: $Zr^{3+}$ and $Zr^{4+}$. After fitting, peaks corresponding to $Zr^{3+}$ and $Zr^{4+}$ were obtained, the $Zr^{3+}/Zr_{total}$ was 53.4%, and, before the reaction, the $Zr^{3+}/Zr_{total}$ was 6.8%. The XPS spectrum of the O 1s electron energy level exhibited an asymmetric Gaussian line shape, indicating a superposition of multiple oxygen bonding states. After fitting, peaks corresponding to the adsorbed oxygen ($O_a$), oxygen vacancies (Ov), and lattice oxygen ($O_L$) were obtained, the $O_V/O_{total}$ value was 46.3%, and, before the reaction of $ZrO_2$, the $O_V/O_{total}$ value was 8.2%. The content of fluorine element was 0.47%, and the content of nitrogen element was 0.39%. The mass loss percentage measured by thermogravimetric analysis at 300 °C was 0.71%, and the particle size distribution range and the average particle size measured by the SEM method were 20-45 nm and 34.9 nm, respectively.

The TEM-EELS test results showed that $Zr^{3+}$, fluorine, nitrogen and manganese were mainly distributed within about 3 nm from the surface of $ZrO_2$ particles, and the presence of $Zr^{3+}$, fluorine, nitrogen and manganese was not found inside the particles.

The formaldehyde concentration test showed that the removal rate after 90 min was 89.2%.

**Example 71**

The same conditions were used, except that the nano titanium dioxide in Example 29 was replaced with hexagonal wurtzite-type ZnO having a particle size of 25 to 65 nm and an average particle size of 32.5 nm. The methods for sample analysis and formaldehyde degradation test were also the same as in Example 1.

The test results of the ultraviolet-visible diffuse reflection absorption spectroscopy showed that the absorbance at the wavelength of 760 nm was 0.75, the absorbance at the wavelength of 800 nm was 0.77, and the absorbance at the wavelength of 850 nm was 0.79.

The content of manganese element as measured by ICP test was 0.89%; Mn was existing in monoatomic distribution, as observed by the spherical aberration corrected electron microscope method. Based on literature information, XPS analysis was employed to determine the elemental composition and valence states of the product, which consisted of Zn, O, F and N elements. Analysis of the position and line-shape symmetry of the Zn 2p peak indicated that the zinc element was existing simply as $Zn^{2+}$. The XPS spectrum of the O 1s electron energy level exhibited an asymmetric Gaussian line shape, indicating a superposition of multiple oxygen bonding states. After fitting the O 1s peak, peaks corresponding to the adsorbed oxygen ($O_a$), oxygen vacancies (Ov), and lattice oxygen ($O_L$) were obtained, the $O_V/O_{total}$ value was 12.4%, and, before the reaction of ZnO, the $O_V/O_{total}$ value was 4.2%. The content of fluorine element was 0.39%, and the content of nitrogen element was 0.33%. The mass loss percentage measured by thermogravimetric analysis at 300 °C was 0.69%, and the particle size distribution range and the average particle size measured by the SEM method were 25-65 nm and 32.5 nm, respectively.

The TEM-EELS test results showed that fluorine, nitrogen and manganese were mainly distributed within about 3 nm from the surface of ZnO particles, and the presence of fluorine, nitrogen and manganese was not found inside the particles.

The formaldehyde concentration test showed that the removal rate was 88.2% after 90 min.

**Example 72**

The same conditions were used, except that the nano titanium dioxide in Example 29 was replaced with monoclinic $BiVO_4$ having a particle size of 20 to 70 nm and an average particle size of 31.2 nm. The methods for sample analysis and formaldehyde degradation test were also the same as in Example 1.

The test results of the ultraviolet-visible diffuse reflection absorption spectroscopy showed that the absorbance at the wavelength of 760 nm was 0.72, the absorbance at the wavelength of 800 nm was 0.75, and the absorbance at the wavelength of 850 nm was 0.78.

The content of manganese element as measured by ICP test was 0.92%; Mn was existing in monoatomic distribution, as observed by the spherical aberration corrected electron microscope method. XPS analysis was employed to determine the elemental composition and valence states of the product, which consisted of Bi, V, O, F and N elements. The positions of the two peaks of Bi 4f indicated that bismuth was existing in the chemical state of $Bi^{3+}$. After fitting the O 1s peak, the peaks corresponding to the adsorbed oxygen ($O_a$), oxygen vacancies (Ov), and lattice oxygen ($O_L$), respectively, were obtained, $O_{total} = O_a + Ov + O_L$, $O_V/O_{total} = 29.7\%$, and, before the reaction of $BiVO_4$, $O_V/O_{total} = 5.1\%$; after fitting, peaks corresponding to $V^{4+}$ and $V^{5+}$ were obtained, wherein the content of $V^{4+}$ was 27.6%, higher than the value of 2.4% before the reaction of $BiVO_4$. For $BiVO_4$, the presence of oxygen vacancies and $V^{4+}$ can improve the light absorption capability to some extent. The content of fluorine element was 0.80%, and the content of nitrogen element was 0.36%. The mass loss percentage measured by thermogravimetric analysis at 300 °C was 0.75%, and the particle size distribution range and the average particle size measured by the SEM method were 20-70 nm and 31.7 nm, respectively.

The TEM-EELS results showed that fluorine, nitrogen, manganese, and $V^{4+}$ were mainly distributed within about 3 nm from the surface of $BiVO_4$ particles, and the presence of fluorine, nitrogen, manganese, and $V^{4+}$ was not found inside the particles.

The formaldehyde concentration test showed that the removal rate was 90.5% after 90 min.

**Example 73**

The same conditions were used, except that the nano titanium dioxide in Example 29 was replaced with monoclinic $WO_3$ having a particle size of 20-80 nm and an average particle size of 51.2 nm. The methods for sample analysis and formaldehyde degradation test were also the same as in Example 1.

The test results of the ultraviolet-visible diffuse reflection absorption spectroscopy showed that the absorbance at the wavelength of 760 nm was 0.71, the absorbance at the wavelength of 800 nm was 0.74 and the absorbance at the wavelength of 850 nm was 0.76.

The content of manganese element as measured by ICP test was 1.02%; Mn was existing in monoatomic distribution, as observed by the spherical aberration corrected electron microscope method. XPS peaks of W, O, F and N elements in the product were analyzed. After fitting based on the peak shape of the O 1s peak, peaks corresponding to the adsorbed oxygen ($O_a$), oxygen vacancies (Ov), and lattice oxygen ($O_L$), respectively, were obtained, $O_{total} = O_a + Ov + O_L$, $O_V/O_{total} = 28.3\%$, and, before the reaction of $WO_3$, $O_V/O_{total} = 5.6\%$; after fitting, peaks corresponding to $W^{5+}$ and $W^{6+}$ were obtained, and the content of $W^{5+}$ before and after reaction was respectively 4.1% and 45.7%; the fluorine element was 0.38% and the content of nitrogen element was 0.32%. The mass loss percentage measured by thermogravimetric analysis at 300 °C was 0.65%. The particle size distribution range and the average particle size measured by the SEM method were respectively 20-80 nm and 51.5 nm.

The TEM-EELS test results showed that $W^{5+}$, fluorine, nitrogen and manganese were mainly distributed within about 3 nm from the surface of the tungsten oxide particles, and the presence of $W^{5+}$, fluorine, nitrogen and manganese was not found inside the particles.

The formaldehyde concentration test showed that the removal rate was 84.6% after 90 min.

### Example 74

The same conditions were used, except that the nano titanium dioxide in Example 29 was replaced with $SnO_2$ having a rutile structure with a particle size of 20 to 50 nm and an average particle size of 31.2 nm. The methods for sample analysis and formaldehyde degradation test were also the same as in Example 1.

The test results of the ultraviolet-visible diffuse reflection absorption spectroscopy showed that the absorbance at the wavelength of 760 nm was 0.66, the absorbance at the wavelength of 800 nm was 0.68 and the absorbance at the wavelength of 850 nm was 0.69.

The content of manganese element as measured by ICP test was 1.06%; Mn was existing in monoatomic distribution, as observed by the spherical aberration corrected electron microscope method. XPS analysis was employed to determine the elemental composition and valence states of the product, which consisted of Sn, O, F and N elements. The positions of the two peaks of Sn 3d (487.5, 495.6 eV) indicated that tin was existing in the chemical state of $Sn^{4+}$. Peak fitting was carried out for O 1s, F 1s, N 1s based on the peak shapes in conjunction with literatures. After fitting the O 1s peak, the peaks corresponding to the adsorbed oxygen ($O_a$), oxygen vacancies (Ov), and lattice oxygen ($O_L$), respectively, were obtained, $O_{total} = O_a + Ov + O_L$, $O_V/O_{total} = 26.4\%$, and, before the reaction of $SnO_2$, $O_V/O_{total} = 3.1\%$; fluorine element was 0.56% and was doped in place of oxygen, and the content of nitrogen element was 0.48%. The mass loss percentage measured by thermogravimetric analysis at 300 °C was 0.62%, and the particle size distribution range and the average particle size measured by the SEM method were 20-50 nm and 31.6 nm, respectively.

The TEM-EELS test results showed that fluorine, nitrogen and manganese were mainly distributed within about 3 nm from the surface of $SnO_2$ particles, and the presence of fluorine, nitrogen and manganese was not found inside the particles.

The formaldehyde concentration test showed that the removal rate after 90 min was 91.5%.

### Example 75

The same conditions were used, except that the height of the cylindrical quartz glass vessel in Example 1 was increased to 300 mm, and the volume of the pure water added was changed to 1.54L (with a liquid level height of about 240 mm), and the average thickness of the liquid film was 120 mm at this point.

The test results of the ultraviolet-visible diffuse reflection absorption spectroscopy showed that the absorbance at the wavelength of 760 nm was 0.49, the absorbance at the wavelength of 800 nm was 0.52 and the absorbance at the wavelength of 850 nm was 0.53.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 23.5\%$. After fitting, the peaks corresponding to $Ti^{4+}$ and $Ti^{3+}$ were obtained, wherein the content of ($Ti^{3+}/Ti_{total}$) was 34.1%, the content of $Ti^{4+}$ ($Ti^{4+}/Ti_{total}$) was 73.5%, and the ratio of the surface content of $Ti^{3+}$ to the surface content of $Ti^{4+}$ was 0.517. The mass loss percentage measured by thermogravimetric analysis at 300 °C was 0.63%, the surface content of hydroxyl measured by infrared spectroscopy was 0.35 mmol/g, the particle size distribution range and the average particle size measured by the SEM method were 20-70 nm and 40.7 nm respectively, and the loss rate of the surface content of $Ti^{3+}$ after 10 times of cyclic washing with deionized water at 100 °C was 0.43%.

The TEM-EELS test results showed that $Ti^{3+}$ was mainly distributed within about 3 nm from the surface of the titanium dioxide particles, and the presence of $Ti^{3+}$ was not found inside the particles.

The formaldehyde concentration test showed that the removal rate was 82.3% after 90 min.

### Example 76

The same conditions were used, except that the height of the cylindrical quartz glass vessel in Example 1 was increased to 450 mm, and the volume of the pure water added was changed to 2.56L (with a liquid level height of about 400 mm), and the average thickness of the liquid film was 200 mm at this point.

The test results of the ultraviolet-visible diffuse reflection absorption spectroscopy showed that the absorbance at the wavelength of 760 nm was 0.26, the absorbance at the wavelength of 800 nm was 0.29 and the absorbance at the wavelength of 850 nm was 0.31.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total} = 14.5\%$. After fitting, the peaks corresponding to $Ti^{4+}$ and $Ti^{3+}$ were obtained, wherein

the content of ($Ti^{3+}/Ti_{total}$) was 26.5%, the content of $Ti^{4+}$ ($Ti^{4+}/Ti_{total}$) was 73.5%, and the ratio of the surface content of $Ti^{3+}$ to the surface content of $Ti^{4+}$ was 0.361. The mass loss percentage measured by thermogravimetric analysis at 300 °C was 0.54%, the surface content of hydroxyl measured by infrared spectroscopy was 0.18 mmol/g, the particle size distribution range and the average particle size measured by the SEM method were respectively 20-70 nm and 40.1nm, and the loss rate of the surface content of $Ti^{3+}$ after 10 times of cyclic washing with deionized water at 100 °C was 0.54%.

The TEM-EELS test results showed that $Ti^{3+}$ was mainly distributed within about 3 nm from the surface of the titanium dioxide particles, and the presence of $Ti^{3+}$ was not found inside the particles.

The formaldehyde concentration test showed that the removal rate was 75.3% after 90 min.

**Example 77**

The same conditions were used, except that the height of the cylindrical quartz glass vessel in Example 1 was changed to 30 mm, and the volume of pure water added was changed to 6.4ml, and the average thickness of the liquid film was 0.5 mm at this point.

The test results of the ultraviolet-visible diffuse reflection absorption spectroscopy showed that the absorbance at the wavelength of 760 nm was 0.31, the absorbance at the wavelength of 800 nm was 0.33, and the absorbance at the wavelength of 850 nm was 0.36.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 12.6%. After fitting, the peaks corresponding to $Ti^{4+}$ and $Ti^{3+}$ were obtained, wherein the content of ($Ti^{3+}/Ti_{total}$) was 29.1%, the content of $Ti^{4+}$ ($Ti^{4+}/Ti_{total}$) was 70.9%, and the ratio of the surface content of $Ti^{3+}$ to the surface content of $Ti^{4+}$ was 0.41. The mass loss percentage measured by thermogravimetric analysis at 300 °C was 0.51%, the surface content of hydroxyl measured by infrared spectroscopy was 0.16 mmol/g, the particle size distribution range and the average particle size measured by the SEM method were 20-70 nm and 40.5 nm respectively, and the loss rate of the surface content of $Ti^{3+}$ after 10 times of cyclic washing with deionized water at 100 °C was 0.52%.

The TEM-EELS test results showed that $Ti^{3+}$ was mainly distributed within about 3 nm from the surface of the titanium dioxide particles, and the presence of $Ti^{3+}$ was not found inside the particles.

The formaldehyde concentration test showed that the removal rate was 75.6% after 90 min.

**Example 78**

The same conditions were used, except that the height of the cylindrical quartz glass vessel in Example 1 was changed to 30 mm, the volume of pure water added was changed to 12.8ml, and the average thickness of the liquid film was 1 mm at this point.

The test results of the ultraviolet-visible diffuse reflection absorption spectroscopy showed that the absorbance at the wavelength of 760 nm was 0.51, the absorbance at the wavelength of 800 nm was 0.53 and the absorbance at the wavelength of 850 nm was 0.55.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 22.7%. After fitting, the peaks corresponding to $Ti^{4+}$ and $Ti^{3+}$ were obtained, wherein the content of ($Ti^{3+}/Ti_{total}$) was 32.5%, the content of $Ti^{4+}$ ($Ti^{4+}/Ti_{total}$) was 67.5%, and the ratio of the surface content of $Ti^{3+}$ to the surface content of $Ti^{4+}$ was 0.481. The mass loss percentage measured by thermogravimetric analysis at 300 °C was 0.59%, the surface content of hydroxyl measured by infrared spectroscopy was 0.32 mmol/g, the particle size distribution range and the average particle size measured by the SEM method were 20-70 nm and 40.6 nm respectively, and the loss rate of the surface content of $Ti^{3+}$ after 10 times of cyclic washing with deionized water at 100 °C was 0.41%.

The TEM-EELS test results showed that $Ti^{3+}$ was mainly distributed within about 3 nm from the surface of the titanium dioxide particles, and the presence of $Ti^{3+}$ was not found inside the particles.

The formaldehyde concentration test showed that the removal rate after 90 min was 86.6%.

**Comparative Example 1**

The first feedstock mixture in Example 3 was taken, the stirring and aeration were stopped; the mixture was allowed to settle naturally, the supernatant liquid was removed, the resultant was filtered to obtain wet titanium dioxide, then centrifuged and weighed, wherein the weight gain of the catalyst was 80 mg. The ArF excimer light source system in Example 3 was used, and placed 2 cm above the catalyst, the light spot of the light source was adjusted to ensure an output power of 2 W and the irradiation area was 40 cm², the catalyst was irradiated, the water film thickness was calculated to be 0.01 mm, the irradiation dose was 2 W/g, the duration of irradiation was 24 hours, and the catalyst was continuously turned over during the period to ensure that it was uniformly irradiated. Finally, the sample was washed with distilled water for several times, and dried for 6 hours at 60 °C to obtain the product.

The test results of the ultraviolet-visible diffuse reflection absorption spectroscopy showed that the absorbance at the wavelength of 760 nm was 0.07, the absorbance at the wavelength of 800 nm was 0.08 and the absorbance at the wavelength of 850 nm was 0.09.

XPS peaks of oxygen and titanium elements in the product were analyzed. Fitting was performed based on the peak shapes, the peaks corresponding to the lattice oxygen $(O_L)$, oxygen vacancies (Ov), and adsorbed oxygen $(O_a)$, respectively, were obtained, a calculation showed $O_V/O_{total}$ = 6.1%. After fitting, the peaks corresponding to $Ti^{4+}$ and $Ti^{3+}$ were obtained, $(Ti^{3+}/Ti_{total})$ was 7.8%, the content of $Ti^{4+}$ $(Ti^{4+}/Ti_{total})$ was 92.2%, and the ratio of the surface content of $Ti^{3+}$ to the surface content of $Ti^{4+}$ was 0.085; fluorine element was 0.04%. The mass loss percentage measured by thermogravimetric analysis at 300 °C was 0.07%, the surface content of hydroxyl measured by infrared spectroscopy was 0.07 mmol/g, the particle size distribution range and the average particle size measured by the SEM method were 20-70 nm and 39.3 nm, respectively, and the loss rate of the surface content of $Ti^{3+}$ after 10 times of cyclic washing with deionized water at 100 °C was 0.12%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate was 4.1% after 90 min.

## Comparative Example 2

The wet titanium dioxide of Comparative Example 1 was dried at 60 °C and then irradiated with ultraviolet light under the same conditions as in Comparative Example 1. Finally, the sample was washed with distilled water for several times, and dried to obtain the product.

The test results of the ultraviolet-visible diffuse reflection absorption spectroscopy showed that the absorbance at the wavelength of 760 nm was 0.05, the absorbance at the wavelength of 800 nm was 0.06 and the absorbance at the wavelength of 850 nm was 0.08.

XPS peaks of oxygen and titanium elements in the product were analyzed. Fitting was performed based on the peak shapes, the peaks corresponding to the lattice oxygen $(O_L)$, oxygen vacancies (Ov), and adsorbed oxygen $(O_a)$, respectively, were obtained, a calculation showed $O_V/O_{total}$ = 3.2%. After fitting, the peaks corresponding to $Ti^{4+}$ and $Ti^{3+}$ were obtained, $(Ti^{3+}/Ti_{total})$ was 3.5%, the content of $Ti^{4+}$ $(Ti^{4+}/Ti_{total})$ was 96.5%, and the ratio of the surface content of $Ti^{3+}$ to the surface content of $Ti^{4+}$ was 0.036; fluorine element was 0.02% and was doped in place of oxygen. The mass loss percentage measured by thermogravimetric analysis at 300 °C was 0.05%, the surface content of hydroxyl measured by infrared spectroscopy was 0.05 mmol/g, the particle size distribution range and the average particle size measured by the SEM method were 20-70 nm and 39.8 nm respectively, and the loss rate of the surface content of $Ti^{3+}$ after 10 times of cyclic washing with deionized water at 100 °C was 0.16%.

The TEM-EELS test results showed that fluor-

ine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate was 3.5% after 90 min.

## Comparative Example 3

The titanium dioxide in Comparative Example 1 was irradiated with vacuum ultraviolet light under the same irradiation conditions and the titanium dioxide wet state as in Comparative Example 1. During the period, distilled water was continuously sprayed on the catalyst, and the catalyst was continuously turned over, so that the thickness of the water film was kept to be 0.01 mm all the time and the catalyst was uniformly irradiated. Finally, the sample was washed with distilled water for several times, and dried for 6 hours at 60 °C to obtain the product.

The test results of the ultraviolet-visible diffuse reflection absorption spectroscopy showed that the absorbance at the wavelength of 760 nm was 0.18, the absorbance at the wavelength of 800 nm was 0.17, and the absorbance at the wavelength of 850 nm was 0.15.

XPS peaks of oxygen and titanium elements in the product were analyzed. Fitting was performed based on the peak shapes, the peaks corresponding to the lattice oxygen $(O_L)$, oxygen vacancies (Ov), and adsorbed oxygen $(O_a)$, respectively, were obtained, a calculation showed $O_V/O_{total}$ = 8.7%. After fitting, the peaks corresponding to $Ti^{4+}$ and $Ti^{3+}$ were obtained, $(Ti^{3+}/Ti_{total})$ was 8.9%, the content of $Ti^{4+}$ $(Ti^{4+}/Ti_{total})$ was 91.1%, and the ratio of the surface content of $Ti^{3+}$ to the surface content of $Ti^{4+}$ was 0.098; fluorine element was 0.09% and was doped in place of oxygen. The mass loss percentage measured by thermogravimetric analysis at 300 °C was 0.21%, the surface content of hydroxyl measured by infrared spectroscopy was 0.11 mmol/g, the particle size distribution range and the average particle size measured by the SEM method were 20-70 nm and 39.4 nm respectively, and the loss rate of the surface content of $Ti^{3+}$ after 10 times of cyclic washing with deionized water at 100 °C was 0.19%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate was 4.2% after 90 min.

## Comparative Example 4

The PL-ZW222L light source system from Beijing Princess Technology Co., Ltd. was used, which light source could output an ultraviolet light having a power of about 2W and a wavelength of 222 nm. The light source system was provided with a reaction flask with a capacity of 500 ml, a cylindrical light source was arranged in the center of the reaction flask, and the reaction temperature was controlled using a water bath mode. 0.4L of pure water was poured into the reaction flask, continuously stirred at 200 rpm, and at the same time nitrogen was introduced into the bottom of the container in an amount of 50 ml/min; then, 1.0 g of the titanium dioxide having the particle size of Example 1 was added to the reaction flask, and aeration was continued with stirring until the titanium dioxide was uniformly mixed with water to obtain a first feedstock mixture. Then, the light source was turned on, the irradiation dose was 2 W/g, the particles were randomly dispersed in water, the average thickness of the liquid film was 3.5 mm, and the irradiation reaction was carried out for 24 hours to obtain a first product mixture. The first product mixture was processed in the same manner as in Example 1 to obtain a product, and the methods for product analysis and formaldehyde degradation test were also the same as in Example 1.

The test results of the ultraviolet-visible diffuse reflection absorption spectroscopy showed that the absorbance at the wavelength of 760 nm was 0.12, the absorbance at the wavelength of 800 nm was 0.14 and the absorbance at the wavelength of 850 nm was 0.15.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 2.3%. After fitting, the peaks corresponding to $Ti^{4+}$ and $Ti^{3+}$ were obtained, wherein the ($Ti^{3+}/Ti_{total}$) was 9.8%, the content of $Ti^{4+}$ ($Ti^{4+}/Ti_{total}$) was 90.2%, and the ratio of the surface content of $Ti^{3+}$ to the surface content of $Ti^{4+}$ was 0.109; fluorine element was 0.18% and was doped in place of oxygen. The mass loss percentage measured by thermogravimetric analysis at 300 °C was 0.29%, the surface content of hydroxyl measured by infrared spectroscopy was 0.14 mmol/g, the particle size distribution range and the average particle size measured by the SEM method were 20-70 nm and 40.3 nm respectively, and the loss rate of the surface content of $Ti^{3+}$ after 10 times of cyclic washing with deionized water at 100 °C was 0.21%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate was 4.5% after 90 min.

## Comparative Example 5

The ArF excimer laser light source in Example 3 was replaced with a 4W common light source involving only 254 nm ultraviolet light (with a photoelectric conversion efficiency of 50%), which was cylindrical and waterproof, inserted vertically into the center of the reaction vessel, and immersed totally in water to give an irradiation dose of 2W/g, the particles were randomly dispersed in water, and other conditions were also the same as in Example 3.

The test results of the ultraviolet-visible diffuse reflection absorption spectroscopy showed that the absorbance at the wavelength of 760 nm was 0.1, the absorbance at the wavelength of 800 nm was 0.12 and the absorbance at the wavelength of 850 nm was 0.14.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 2.5%. After fitting, the peaks corresponding to $Ti^{4+}$ and $Ti^{3+}$ were obtained, wherein the ($Ti^{3+}/Ti_{total}$) was 9.2%, the content of $Ti^{4+}$ ($Ti^{4+}/Ti_{total}$) was 90.2%, and the ratio of the surface content of $Ti^{3+}$ to the surface content of $Ti^{4+}$ was 0.102; fluorine element was 0.11% and was doped in place of oxygen. The mass loss percentage measured by thermogravimetric analysis at 300 °C was 0.24%, the surface content of hydroxyl measured by infrared spectroscopy was 0.12 mmol/g, the particle size distribution range and the average particle size measured by the SEM method were 20-70 nm and 40.1 nm respectively, and the loss rate of the surface content of $Ti^{3+}$ after 10 times of cyclic washing with deionized water at 100 °C was 0.23%.

The TEM-EELS test results showed that fluorine and $Ti^{3+}$ were mainly distributed within about 3 nm from the surface of the titanium dioxide particles, and the presence of fluorine and $Ti^{3+}$ was not found inside the particles.

The formaldehyde concentration test showed that the removal rate was 4.2% after 90 min.

## Comparative Example 6

The same conditions were used, except that the height of the cylindrical quartz glass vessel in Example 1 was changed to 30 mm, no water was added, the powdered catalyst was continuously purged with only nitrogen gas having a relative humidity of 70%, and the catalyst was continuously turned over to ensure that it was uniformly irradiated.

The test results of the ultraviolet-visible diffuse reflection absorption spectroscopy showed that the absorbance at the wavelength of 760 nm was 0.09, the absorbance at the wavelength of 800 nm was 0.11 and the absorbance at the wavelength of 850 nm was 0.13.

XPS peaks of oxygen and titanium elements in the product were analyzed. Fitting was performed based on the peak shapes, the peaks corresponding to the lattice oxygen ($O_L$), oxygen vacancies (Ov), and adsorbed oxygen ($O_a$), respectively, were obtained, a calculation showed $O_V/O_{total}$ = 3.4%. After fitting, the peaks corresponding to $Ti^{4+}$ and $Ti^{3+}$ were obtained, wherein

the content of ($Ti^{3+}/Ti_{total}$) was 8.2%, the content of $Ti^{4+}$ ($Ti^{4+}/Ti_{total}$) was 91.8%, and the ratio of the surface content of $Ti^{3+}$ to the surface content of $Ti^{4+}$ was 0.089. The mass loss percentage measured by thermogravimetric analysis at 300 °C was 0.15%, the surface content of hydroxyl measured by infrared spectroscopy was 0.06 mmol/g, the particle size distribution range and the average particle size measured by the SEM method were respectively 20-70 nm and 40.3 nm, and the loss rate of the surface content of $Ti^{3+}$ after 10 times of cyclic washing with deionized water at 100 °C was 0.25%.

The TEM-EELS test results showed that $Ti^{3+}$ was mainly distributed within about 3 nm from the surface of the titanium dioxide particles, and the presence of $Ti^{3+}$ was not found inside the particles.

The formaldehyde concentration test showed that the removal rate was 5.2% after 90 min.

**Claims**

1. A method for preparing a photocatalytic material, comprising the steps of:

    1) providing a photocatalytic material precursor covered by a liquid film,
    2) irradiating the photocatalytic material precursor with a ray (preferably vacuum ultraviolet light) having a wavelength of 200 nm or below (preferably 100-200 nm or 120-200 nm) to obtain the photocatalytic material.

2. The method according to claim 1, wherein the operating conditions of the irradiation include: an operating temperature of from -50 °C to 95 °C (preferably from 10 °C to 70 °C), an operating pressure of from 0 MPaG to 1 MPaG (preferably from 0 MPaG to 0.1 MPaG), a lower limit of the duration of 0.1 h (preferably 1h, 2h or 3 h) and an upper limit of the duration of 120 h (preferably 60 h, 36 h, 20 h, 15 h or 10 h).

3. The method according to claim 1, wherein the photocatalytic material precursor is at least one selected from the group consisting of sulfide-type photocatalytic materials and precursors thereof, metal oxide-type photocatalytic materials and precursors thereof, carbon nitride-based photocatalytic materials and precursors thereof, oxometallates and precursors thereof, and composite materials of these photocatalytic materials and precursors thereof, particularly preferably at least one selected from the group consisting of $TiO_2$, $ZrO_2$, ZnO, $BiVO_4$, $WO_3$, $SnO_2$, and composites of these photocatalytic materials and precursors thereof, more preferably at least one selected from the group consisting of titanium dioxide and precursors thereof, and/or, the photocatalytic material precursor comprises 80 wt% or more (preferably 80 wt% to 99.9 wt% or 85 wt% to 99.5 wt%) of titanium dioxide, based on the total weight of the photocatalytic material precursor.

4. The method according to claim 1, wherein the photocatalytic material precursor is in the form of solid particles, and the solid particles have a size distribution as measured by the SEM method in a range of 5 nm to 150 nm (preferably 10 nm to 110 nm) or an average particle size of 20 nm to 85 nm (preferably 30 nm to 70 nm).

5. The method according to claim 1, wherein the average thickness of the liquid film is 0.5 mm to 200 mm (preferably 1 mm to 120 mm or 5 mm to 80 mm).

6. The method according to claim 1, wherein the irradiation is carried out under an inert gas atmosphere, preferably under aeration with an inert gas flow or a nitrogen gas flow.

7. The method according to claim 1, wherein the irradiation dose of the irradiation is 0.01 W/g to 50 W/g (preferably 0.1 W/g to 20 W/g), and the irradiation power of the ray is 0.1 W to 200 W (preferably 1 W to 50 W).

8. The method according to claim 1, wherein the mass ratio of the liquid to the photocatalytic material precursor is 0.1 : 1 to 10000 : 1 (preferably 2 : 1 to 5000 : 1, further preferably 5 : 1 to 1000 : 1).

9. The method according to claim 1, wherein the liquid further comprises at least one doping element selected from the group consisting of elements of Group IIIA of the periodic table of elements (preferably at least one of B and Ga), elements of Group IVA of the periodic table of elements (preferably at least one of C and Ge), elements of Group VA of the periodic table of elements (preferably at least one of N and P), non-oxygen elements of Group VIA of the periodic table of elements (preferably at least one of S and Se), elements of Group VIIA of the periodic table of elements (preferably F), non-noble transition metal elements other than Ti of the periodic table of elements (preferably at least one selected from the group consisting of Mn, Fe, Co, Ni, Cu, and Zn), noble metal elements of the periodic table of elements (preferably at least one selected from the group consisting of Ag, Au, Pd and Pt), and rare earth metal elements of the periodic table of elements (preferably at least one selected from the group consisting of Ce, La, Nd, and Gd), preferably at least one doping element selected from the group consisting of N, Mn and F, particularly preferably comprising N, Mn and F as doping elements, and the doping element(s), each or in total, is used in an amount (calculated on an elemental basis) of 0.01 wt% to 1000 wt% (preferably 0.1 wt% to 200 wt%), based on the total weight of the photocatalytic material precursor.

10. The method according to claim 1, wherein the photocatalytic material is not subjected to a heat treatment at 300 °C or higher (preferably 200 °C or higher).

11. A photocatalytic material comprising titanium dioxide, wherein the photocatalytic material has a ratio of the surface content of $Ti^{3+}$ to the surface content of $Ti^{4+}$ measured by the XPS method of 1 : 19 to 19 : 1 (preferably 1 : 4 to 4 : 1) and has an absorbance of 0.20 to 2.0 (preferably 0.30 to 1.8) for light having a wavelength of 760 nm, an absorbance of 0.25 to 1.8 (preferably 0.35 to 1.6) for light having a wavelength of 800 nm and an absorbance of 0.25 to 1.7 (preferably 0.35 to 1.5) for light having a wavelength of 850 nm, in the ultraviolet-visible diffuse reflection spectrum.

12. The photocatalytic material according to claim 11, having a particle size distribution in a range of 5-150 nm (preferably 10-110 nm) or an average particle size of 20-85 nm (preferably 30-70 nm), as measured by the SEM method.

13. The photocatalytic material according to claim 11, having a surface content of $Ti^{3+}$ measured by the XPS method of 5% to 95% (preferably 20% to 80%), a surface content of $Ti^{4+}$ measured by the XPS method of 5% to 95% (preferably 20% to 80%), and/or having a content of oxygen vacancies $O_V$ peak of 10% to 80% (preferably 15% to 60%) after fitting the O 1s peak as measured by the XPS method, and/or having a mass loss percentage measured by thermogravimetric analysis at 300 °C of 0.2 wt% to 7 wt% (preferably 0.5 wt% to 5 wt%), and/or having a surface content of hydroxyl measured by infrared spectroscopy of 0.03 mmol/g to 3 mmol/g (preferably 0.05 mmol/g to 1.5 mmol/g), and/or, having a loss rate of the surface content of $Ti^{3+}$ of lower than 2% (preferably lower than 1%) after 10 times of cyclic washing with deionized water at 100 °C.

14. The photocatalytic material according to claim 11, further comprising at least one doping element selected from the group consisting of elements of Group IIIA of the periodic table of elements (preferably at least one of B and Ga), elements of Group IVA of the periodic table of elements (preferably at least one of C and Ge), elements of Group VA of the periodic table of elements (preferably at least one of N and P), non-oxygen elements of Group VIA of the periodic table of elements (preferably at least one of S and Se), elements of Group VIIA of the periodic table of elements (preferably F), non-noble transition metal elements other than Ti of the periodic table of elements (preferably at least one selected from the group consisting of Mn, Fe, Co, Ni, Cu, and Zn), noble metal elements of the periodic table of elements (preferably at least one selected from the group consisting of Ag, Au, Pd and Pt), and rare earth metal elements of the periodic table of elements (preferably at least one selected from the group consisting of Ce, La, Nd, and Gd), preferably at least one doping element selected from the group consisting of N, Mn and F, particularly preferably comprising N, Mn and F as doping elements, and/or the doping element(s), each or in total, is used in an amount (calculated on an elemental basis) of 0.01 wt% to 15 wt% (preferably 0.01 wt% to 10 wt% or 0.1 wt% to 5 wt%), based on the total weight of the photocatalytic material.

15. The photocatalytic material according to claim 14, wherein the doping is surface doping, and/or the F-doping is oxygen-substitutional doping or a mixture of interstitial doping and oxygen-substitutional doping (preferably oxygen-substitutional doping), and/or the N-doping includes lattice doping and interstitial doping, wherein the lattice doping accounts for 80-20% (preferably 70-30%) of the total doping, and the interstitial doping accounts for 20-80% (preferably 30-70%) of the total doping, and the sum of the lattice doping and the interstitial doping is 100%.

16. A photocatalytic article (such as photocatalytic particles, photocatalytic sheet, or photocatalytic film) comprising the photocatalytic material according to claim 11 or a photocatalytic material obtained by the method according to claim 1.

17. A photocatalytic conversion method, comprising a step of irradiating a feedstock to be converted (such as a VOCs containing gas or hydrocarbons) with light in the presence of the photocatalytic material according to claim 11, a photocatalytic material obtained by the method according to claim 1, or the photocatalytic article according to claim 16.

**FIG.1**

## INTERNATIONAL SEARCH REPORT

| International application No. |
|---|
| **PCT/CN2024/144119** |

**A. CLASSIFICATION OF SUBJECT MATTER**

B01J 21/06(2006.01)i; B01J 27/24(2006.01)i; B01J 23/60(2006.01)i

According to International Patent Classification (IPC) or to both national classification and IPC

**B. FIELDS SEARCHED**

Minimum documentation searched (classification system followed by classification symbols)

IPC: B01J21/-; B01J23/-; B01J27/-

Documentation searched other than minimum documentation to the extent that such documents are included in the fields searched

Electronic data base consulted during the international search (name of data base and, where practicable, search terms used)

DWPI, WPABS, ENTXT, USTXT, CNTXT, ISI Web of Science, 中国期刊网全文数据库, CJFD: 中国石油化工股份有限公司, 中石化(大连)石油化工研究院有限公司, 李建涛, 李宝忠, 张颖光, 梁耀璋, 梁国熙, 二氧化钛, 氧化钛, 光催化, 氧化锆, 氧化锌, 钒酸铋, 三氧化钨, 二氧化锡, 掺杂, 硼, 镓, 碳, 锗, 氮, 磷, 硫, 硒, 氟, 锰, 铁, 钴, 镍, 铜, 锌, 金, 银, 钯, 铂, 铈, 镧, 铌, 钆, Ti3+, Ti4+, 吸光度, 氧空位, 氧缺位, 氧缺陷, Ov, 真空紫外光, VUV, TiO2, Titanium dioxide, titanium oxide, dop*, dop+, photo*, photo+, Zirconium dioxide, ZrO2, zinc oxide, ZnO, bismuth vanadate, BiVO4, tungsten oxide, WO3, tin dioxide, SnO2, boron, B, gallium, Ga, carbon, C, germanium, Ge, nitrogen, N, phosphorus, P, sulfur, S, selenium, Se, fluorine, F, manganese, Mn, iron, Fe, cobalt, Co, nickel, Ni, copper, Cu, zinc, Zn, gold, Au, silver, Ag, palladium, Pd, platinum, Pt, cerium, Ce, lanthanum, La, niobium, Nd, gadolinium, Gd, Absorbance, Oxygen vacanc+, oxygen defect+, Vacuum ultraviolet light

**C. DOCUMENTS CONSIDERED TO BE RELEVANT**

| Category* | Citation of document, with indication, where appropriate, of the relevant passages | Relevant to claim No. |
|---|---|---|
| X | ZHAO, Caifeng et al. "γ-ray Induced Formation of Oxygen Vacancies and Ti3+ Defects in Anatase TiO2 for Efficient Photocatalytic Organic Pollutant Degradation" *Science of the Total Environment*, Vol. 747, 05 August 2020 (2020-08-05), pages 1-14 abstract, sections 2.1, 2.2, and 2.5, and table 2 | 1, 3-4, 10, 16-17 |
| X | CN 103801292 A (INDUSTRIAL TECHNOLOGY RESEARCH INSTITUTE) 21 May 2014 (2014-05-21) description, paragraphs 16-20 and 58-59, and figure 6 | 1, 3, 16-17 |
| Y | ZHAO, Caifeng et al. "γ-ray Induced Formation of Oxygen Vacancies and Ti3+ Defects in Anatase TiO2 for Efficient Photocatalytic Organic Pollutant Degradation" *Science of the Total Environment*, Vol. 747, 05 August 2020 (2020-08-05), pages 1-14 abstract, sections 2.1, 2.2, and 2.5, and table 2 | 1-17 |

☑ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **01 April 2025** | **17 April 2025** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 772 273 A1**

## INTERNATIONAL SEARCH REPORT

| | International application No. |
|---|---|
| | **PCT/CN2024/144119** |

**C. DOCUMENTS CONSIDERED TO BE RELEVANT**

| Category* | Citation of document, with indication, where appropriate, of the relevant passages | Relevant to claim No. |
|---|---|---|
| Y | JP 2013154282 A (KONICA MINOLTA INC.) 15 August 2013 (2013-08-15) description, paragraphs 21, 25, and 42-43 | 1-17 |
| Y | CN 108906112 A (SHANGHAI UNIVERSITY OF ENGINEERING SCIENCE) 30 November 2018 (2018-11-30) description, paragraphs 9-23 | 9, 14-15 |
| A | CN 107096519 A (ZHEJIANG INDUSTRY POLYTECHNIC COLLEGE) 29 August 2017 (2017-08-29) description, paragraphs 6-24 | 1-17 |
| A | CN 107126944 A (DALIAN UNIVERSITY OF TECHNOLOGY) 05 September 2017 (2017-09-05) description, paragraphs 5-21 | 1-17 |
| A | CN 107138161 A (SHANGHAI YOULAN TECHNOLOGY CO., LTD.) 08 September 2017 (2017-09-08) description, paragraphs 8-28 | 1-17 |

Form PCT/ISA/210 (second sheet) (July 2022)

## INTERNATIONAL SEARCH REPORT
### Information on patent family members

International application No.

**PCT/CN2024/144119**

| Patent document cited in search report | | | Publication date (day/month/year) | Patent family member(s) | | | Publication date (day/month/year) |
|---|---|---|---|---|---|---|---|
| CN | 103801292 | A | 21 May 2014 | US | 2014141968 | A1 | 22 May 2014 |
|    |           |   |             | US | 9724675    | B2 | 08 August 2017 |
| JP | 2013154282 | A | 15 August 2013 | None | | | |
| CN | 108906112 | A | 30 November 2018 | None | | | |
| CN | 107096519 | A | 29 August 2017 | None | | | |
| CN | 107126944 | A | 05 September 2017 | None | | | |
| CN | 107138161 | A | 08 September 2017 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1259129 C